# EUROPEAN PATENT APPLICATION

(11) **EP 4 011 542 A1**
(43) Date of publication of application: **15.06.2022**
(21) Application number: 20850290.6
(22) Date of filing: 06.08.2020
(51) Int. Cl.: B23K 26/00, B23K 26/08

(54) **PROCESSING DEVICE**

(30) Priority: 08.08.2019 WO PCT/JP2019/031480
(71) Applicant: NIKON CORPORATION, Minato-ku Tokyo 108-6290 (JP)
(72) Inventor: SATO, Shinji, Tokyo 108-6290 (JP)
(74) Representative: Hoffmann Eitle
(86) International application number: PCT/JP2020/030204
(87) International publication number: WO 2021/025119

(57) **Abstract**

A processing apparatus is a processing apparatus that processes an object by irradiating the object with a processing light from a processing light source, the processing apparatus includes: a combining optical system that combines an optical path of the processing light from the processing light source and an optical path of a first measurement light from a measurement light source; an irradiation optical system that irradiates the object with the processing light and the first measurement light through the combining optical system; a position change apparatus that changes a position of the irradiation optical system relative to the object; an imaging apparatus a position of which is changed together with the irradiation optical system and which captures an image of the object; and a detection apparatus that detects, through the irradiation optical system and the combining optical system, a second measurement light generated from the object due to the first measurement light with which the object is irradiated through the irradiation optical system.

## Description

### Technical Field

The present invention relates to a technical field of a processing apparatus that is configured to process an object with processing light.

### Background Art

A Patent Literature 1 discloses, as a processing apparatus that is configured to process an object, a processing apparatus that forms a structure by irradiating a surface of the object with processing light. This type of processing system is required to properly process the obj ect.

### Citation List

### Patent Literature

Patent Literature 1: US4,994,639B

### Summary of Invention

A first aspect provide a processing apparatus that processes an object by irradiating the object with a processing light from a processing light source, the processing apparatus including: a combining optical system that combines an optical path of the processing light from the processing light source and an optical path of a measurement light including a pulsed light; an irradiation optical system that irradiates the object with the processing light and the first measurement light that are through the combining optical system; and an irradiation position change optical system that is disposed between the combining optical system and the irradiation optical system and that changes an irradiation position of the processing light on the object and an irradiation position of the measurement light on the object.

A second aspect provides a processing apparatus that processes an object by irradiating the object with a processing light from a processing light source, the processing apparatus including: a combining optical system that combines an optical path of the processing light from the processing light source and an optical path of a first measurement light from a measurement light source; an irradiation optical system that irradiates the object with the processing light and the first measurement light that are through the combining optical system; a position change apparatus that changes a position of the irradiation optical system relative to the object; an imaging apparatus a position of which is changed together with the irradiation optical system and which captures an image of the object; and a detection apparatus that detects, through the irradiation optical system and the combining optical system, a second measurement light that is generated from the object due to the first measurement light with which the object is irradiated through the irradiation optical system.

A third aspect provides a processing apparatus that processes an object by irradiating the object with a processing light from a processing light source, the processing apparatus including: an irradiation optical system that irradiates the object with the processing light; a position change apparatus that changes a relative position between the object and a processing head including at least a part of the irradiation optical system; and a position measurement apparatus that irradiates the processing head with a first measurement light including a pulsed light, that optically receives a second measurement light generated from the processing head due to the first measurement light, and that measures a position of the processing head on the basis of an optical received result of the second measurement light.

A fourth aspect provides a processing apparatus that processes an object by irradiating the object with a processing light from a processing light source, the processing apparatus including: a combining optical system that combines an optical path of the processing light from the processing light source and an optical path of a measurement light from a measurement light source; an irradiation optical system that irradiates the object with the processing light and the measurement light that are through the combining optical system; and an irradiation position change optical system that is disposed at an incident side of the irradiation optical system and that changes an irradiation position of the processing light on the object and an irradiation position of the measurement light on the object, the irradiation position change optical system changing a positional relationship between the irradiation position of the processing light and the irradiation position of the measurement light.

A fifth aspect provides a processing apparatus that processes an object by irradiating the object with a processing light from a processing light source, the processing apparatus including: a combining optical system that combines an optical path of the processing light from the processing light source and an optical path of a measurement light from a measurement light source; an irradiation optical system that irradiates the object with the processing light and the measurement light that are through the combining optical system; an irradiation position change optical system to which the processing light and the measurement light enter and that changes an irradiation position of the processing light on the object and an irradiation position of the measurement light on the object; and a control apparatus that controls the irradiation position change optical system so as to change a positional relationship between the irradiation position of the processing light and the irradiation position of the measurement light or that controls the irradiation position change optical system so as to change the irradiation position of the processing light and the irradiation position of the measurement light without changing the positional relationship between the irradiation position of the processing light and the irradiation position of the measurement light.

A sixth aspect provides a system that measures an object by a measurement light, the system including: a measurement apparatus that irradiates the object with a first measurement light, that optically receives a second measurement light generated from the object due to the first measurement light, and that measures a position of the object on the basis of an optical received result of the second measurement light; a position change apparatus that is connected to the measurement apparatus and that changes the position of the measurement apparatus relative to the object; and an end effector that is attached to the measurement apparatus.

A seventh aspect provides a processing apparatus that processes an object by irradiating the object with a processing light from a processing light source, the processing apparatus including: a combining optical system that combines an optical path of the processing light from the processing light source and an optical path of a measurement light including a pulsed light; an irradiation optical system that irradiates the object with the processing light and the measurement light that are through the combining optical system; a first irradiation position change optical system that changes an irradiation position of the processing light on the object; and a second irradiation position change optical system that changes an irradiation position of the measurement light on the object, the processing light through the first irradiation position change optical system and the measurement light through the second irradiation position change optical system entering the irradiation optical system.

An eighth aspect provides a processing apparatus that processes an object by irradiating the object with a processing light from a processing light source, the processing apparatus comprising: a combining optical system that combines an optical path of the processing light from the processing light source and an optical path of a first measurement light from a measurement light source; an irradiation optical system that irradiates the object with the processing light and the first measurement light that are through the combining optical system; and a detection apparatus that detects, through the irradiation optical system and the combining optical system, a second measurement light that is generated from the object due to the first measurement light with which the object is irradiated through the irradiation optical system, the object that is processed by the processing light is irradiated with the first measurement light.

A ninth aspect provides a processing apparatus that processes an object by irradiating the object with a processing light from a processing light source, the processing apparatus including: a combining optical system that combines an optical path of the processing light from the processing light source and an optical path of a first measurement light from a measurement light source; an irradiation optical system that irradiates the object with the processing light and the first measurement light that are through the combining optical system; and a detection apparatus that detects, through the irradiation optical system and the combining optical system, a second measurement light that is generated from the object due to the first measurement light with which the object is irradiated through the irradiation optical system, the object that is already irradiated with the first measurement light is irradiated with the processing light.

A tenth aspect provides a system that measures an object by a measurement light, the system including: a movable member a relative positional relationship of which is changeable relative to a part of the object; and a measurement apparatus that irradiates the object with a first measurement light, that optically receives a second measurement light generated from the object due to the first measurement light, and that measures a position of the object on the basis of an optical received result of the second measurement light; a connection apparatus that connects the movable member and the measurement apparatus so that a relative positional relationship between the movable member and the measurement apparatus is changeable, the connection apparatus including: a driving member that moves at least one of the movable member and the measurement apparatus; and a buffer member that connects the movable member and the measurement apparatus.

An eleventh aspect provides a processing apparatus that processes an object by irradiating the object with a processing light from a processing light source, the processing apparatus including: a combining optical system that combines an optical path of the processing light from the processing light source and an optical path of a first measurement light from a measurement light source; an irradiation optical system that irradiates the object with the processing light and the first measurement light that are through the combining optical system; a position change apparatus that changes a relative position between the irradiation optical system and the object; and a detection apparatus that detects, through the irradiation optical system and the combining optical system, a scattering light that is generated from the object due to the first measurement light with which the object is irradiated through the irradiation optical system.

### Brief Description of Drawings

[FIG. 1] FIG. 1 is a cross-sectional view that schematically illustrates an entire structure of a processing system in a first embodiment.
[FIG. 2] FIG. 2 is a system configuration diagram that illustrates a system configuration of the processing system in the first embodiment.
[FIG. 3] FIG. 3 is a cross-sectional view that illustrates a structure of a processing head in the first embodiment.
[FIG. 4] FIG. 4 is a cross-sectional view that partially illustrates an optical path of a processing light and an optical path of a measurement light between a combining optical system and a workpiece.
[FIG. 5] FIG. 5 is a planar view that illustrates an irradiation area that is irradiated with the processing light and an irradiation area that is irradiated with the measurement light.
[FIG. 6] FIG. 6 is a timing chart that illustrates an irradiation timing of the processing light and an irradiation timing of the measurement light.
[FIG. 7] FIG. 7 is a cross-sectional view that partially illustrates the optical path of the processing light and the optical path of the measurement light between the combining optical system and the workpiece.
[FIG. 8] FIG. 8 is a planar view that illustrates the irradiation area that is irradiated with the processing light and the irradiation area that is irradiated with the measurement light.
[FIG. 9] FIG. 9 is a cross-sectional view that partially illustrates the optical path of the processing light and the optical path of the measurement light between the combining optical system and the workpiece.
[FIG. 10] FIG. 10 is a timing chart that illustrates the measurement light entering a detector and an interfering light detected by the detector.
[FIG. 11] FIG. 11 is a cross-sectional view that illustrates a structure of a head driving system.
[FIG. 12] FIG. 12 is a cross-sectional view that illustrates a structure of a second driving system of the head driving system.
[FIG. 13] FIG. 13 is a cross-sectional view that illustrates a structure of a processing head in a second embodiment.
[FIG. 14] FIG. 14 is a cross-sectional view that illustrates a structure of a processing head in a third embodiment.
[FIG. 15] FIG. 15 is a cross-sectional view that illustrates another example of the structure of the processing head in the third embodiment.
[FIG. 16] FIG. 16 is a cross-sectional view that illustrates another example of the structure of the processing head in the third embodiment.
[FIG. 17] FIG. 17 is a cross-sectional view that illustrates another example of the structure of the processing head in the third embodiment.
[FIG. 18] FIG. 18 is a cross-sectional view that illustrates another example of the structure of the processing head in the third embodiment.
[FIG. 19] FIG. 19 is a cross-sectional view that illustrates a structure of a processing head in a fourth embodiment.
[FIG. 20] FIG. 20 is a cross-sectional view that illustrates a structure of a processing head in a fifth embodiment.
[FIG. 21] FIG. 21 is a cross-sectional view that illustrates the processing head to which a first optical system candidate is attached as a common optical system.
[FIG. 22] FIG. 22 is a cross-sectional view that illustrates the processing head to which a second optical system candidate is attached as the common optical system.
[FIG. 23] FIG. 23 is a cross-sectional view that illustrates the processing head to which a third optical system candidate is attached as the common optical system.
[FIG. 24] FIG. 24 is a cross-sectional view that schematically illustrates an entire structure of a processing system in a seventh embodiment.
[FIG. 25] FIG. 25 is a cross-sectional view that illustrates a structure of a processing head in an eighth embodiment.
[FIG. 26] FIG. 26 is a cross-sectional view that schematically illustrates an entire structure of a processing system in a ninth embodiment.
[FIG. 27] FIG. 27 is a system configuration diagram that illustrates a system configuration of the processing system in the ninth embodiment.
[FIG. 28] FIG. 28 is a cross-sectional view that illustrates a structure of a processing head in the ninth embodiment.
[FIG. 29] FIG. 29 is a cross-sectional view that illustrates a structure of a measurement head in the ninth embodiment.
[FIG. 30] FIG. 30 is a system configuration diagram that illustrates a system configuration of a processing system in the tenth embodiment.
[FIG. 31] FIG. 31 is a system configuration diagram that illustrates a system configuration of a processing system in the eleventh embodiment.
[FIG. 32] FIG. 32 is a system configuration diagram that illustrates a system configuration of a processing system in the twelfth embodiment.
[FIG. 33] FIG. 33 is a cross-sectional view that illustrates one example of a structure of a processing apparatus including an end effector.

### Description of Embodiments

Next, with reference to drawings, embodiments of a processing apparatus, a processing member, a robot system and a measuring apparatus will be described. In the below described description, the embodiments of the processing apparatus, the processing member, the robot system and the measuring apparatus will be described by using a processing system SYS that processes a workpiece W by using a processing light EL. However, the present invention is not limited to the below described embodiments.

Moreover, in the below described description, a positional relationship of various components included in the processing system SYS will be described by using an XYZ rectangular coordinate system that is defined by a X axis, a Y axis and a Z axis that are perpendicular to one another. Note that each of an X axis direction and a Y axis direction is assumed to be a horizontal direction (namely, a predetermined direction in a horizontal plane) and a Z axis direction is assumed to be a vertical direction (namely, a direction that is perpendicular to the horizontal plane, and substantially a vertical direction) in the below described description, for convenience of the description. Moreover, rotational directions (in other words, inclination directions) around the X axis, the Y axis and the Z axis are referred to as a θX direction, a θY direction and a θZ direction, respectively. Here, the Z axis direction may be a gravity direction. Moreover, an XY plane may be a horizontal direction.

### (1) Processing System SYSa in First Embodiment

Firstly, a processing system SYS in a first embodiment (in the below described description, the processing system SYS in the first embodiment is referred to as a "processing system SYSa") will be described.

### (1-1) Structure of Processing System SYSa

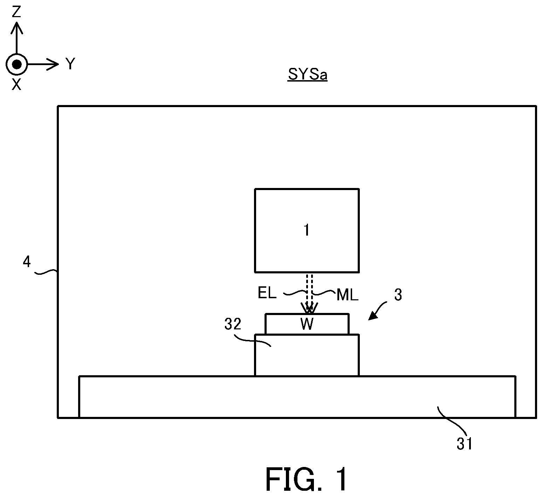

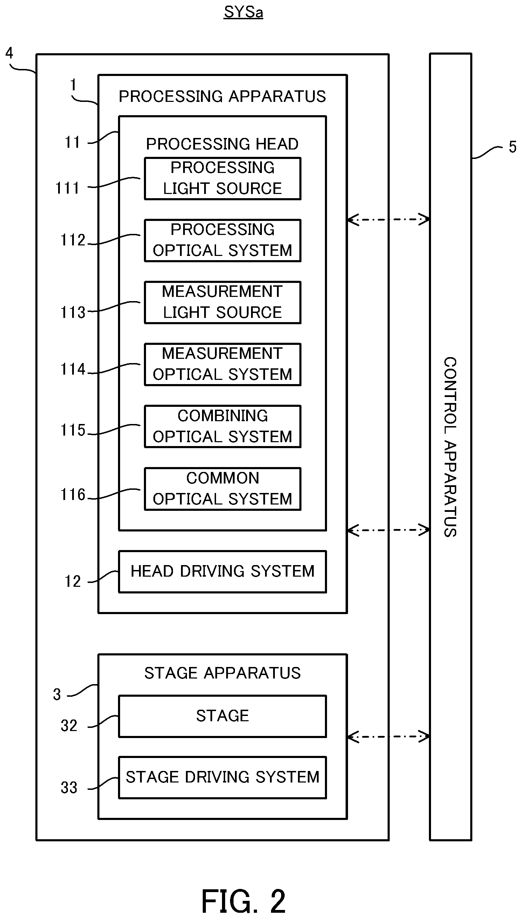

Firstly, with reference to FIG. 1 and FIG. 2, a structure of the processing system SYSa in the first embodiment will be described. FIG. 1 is a cross-sectional view that schematically illustrates the structure of the processing system SYSa in the first embodiment. FIG. 2 is a system configuration diagram that illustrates a system configuration of the processing system SYSa in the first embodiment.

As illustrated in FIG. 1 and FIG. 2, the processing system SYSa includes a processing apparatus 1, a stage apparatus 2 and a control apparatus 5. The processing apparatus 1 and the stage apparatus 2 are housed in a housing 4. However, thee processing apparatus 1 and the stage apparatus 2 may not be housed in the housing 4. Namely, the processing system SYSa may not include the housing for containing the processing apparatus 1 and the stage apparatus 2.

The processing apparatus 1 is configured to process the workpiece W under the control of the control apparatus 5. The workpiece W may be a metal, may be an alloy (for example, a duralumin and the like), may be a semiconductor, may be a resin (for example, CFRP (Carbon Fiber Reinforced Plastic), a painting material (as one example a film of painting material that is coated on a base member) and the like), may be a glass or may be an object that is made from any other material, for example.

The processing apparatus 1 irradiates the workpiece W with the processing light EL in order to process the workpiece W. The processing light EL may be any type of light, as long as the workpiece W is processed by irradiating the workpiece W with it. In the first embodiment, an example in which the processing light EL is a laser light will be described, however, the processing light EL may be a light that is different from the laser light. Furthermore, a wavelength of the processing light EL may be any wavelength, as long as the workpiece W is processed by irradiating the workpiece W with it. For example, the processing light EL may be a visible light, or may be an invisible light (for example, at least one of infrared light, ultraviolet light and the like). The processing light EL includes a pulsed light, however, may not include the pulsed light. In other words, the processing light EL may be a continuous light.

The processing apparatus 1 may perform a removal processing (typically, a cutting processing or a grinding processing) for removing a part of the workpiece W by irradiating the workpiece W with the processing light EL. When the removal processing is performed, the processing apparatus 1 may form a riblet structure on the workpiece W. The riblet structure is a structure by which a resistance (especially, a frictional resistance, a turbulent frictional resistance) of the surface of the workpiece W to a fluid is reducible. The riblet structure may include a structure in which a plurality of grooves each of which extends along a first direction (for example, the Y axis direction) that is along a surface of the workpiece W are arranged along a second direction (for example, the X axis direction) that is along the surface of the workpiece W and that intersects with the first direction, for example.

The processing apparatus 1 may perform an additive processing for adding new structural object to the workpiece W by irradiating the workpiece W with the processing light EL, in addition to or instead of the removal processing. In this case, the processing apparatus 1 may form the above described riblet structure on the surface of the workpiece W by performing the additive processing. The processing apparatus 1 may perform a marking processing for forming a desired mark on the surface of the workpiece W by irradiating the workpiece W with the processing light EL, in addition to or instead of at least one of the removal processing and the additive processing.

Furthermore, the processing apparatus 1 is configured to measure the workpiece W under the control of the control apparatus 5. The processing apparatus 1 irradiates the workpiece W with a measurement light ML in order to measure the workpiece W. The measurement light ML may be any type of light, as long as the workpiece W is measurable by irradiating the workpiece W with it. In the first embodiment, an example in which the measurement light ML is a laser light will be described, however, the measurement light ML may be a light that is different from the laser light. Furthermore, a wavelength of the measurement light ML may be any wavelength, as long as the workpiece W is measurable by irradiating the workpiece W with it. For example, the measurement light ML may be a visible light, or may be an invisible light (for example, at least one of infrared light, ultraviolet light and the like). The measurement light ML includes a pulsed light.

The wavelength of the measurement light ML may be different from the wavelength of the processing light EL. For example, the wavelength of the measurement light ML may be shorter than the wavelength of the processing light EL. As one example, a light having a wavelength of 266 nm or 355 nm may be used as the measurement light ML and a light having a wavelength of 532 nm, 1 µm or 10 µm may be used as the processing light EL. In this case, a diameter of a spot of the measurement light ML on the workpiece W is smaller than a diameter of a spot of the processing light EL on the workpiece W. As a result, a measurement resolution by the measurement light ML is higher than a processing resolution by the processing light EL. However, the wavelength of the measurement light ML may not be shorter than the wavelength of the processing light EL. The wavelength of the measurement light ML may be same as the wavelength of the processing light EL.

The processing apparatus 1 may be configured to measure a state of the workpiece W. The state of the workpiece W may include a position of the workpiece W. The position of the workpiece W may include a position of the surface of the workpiece W. The position of the surface of the workpiece W may include a position of each surface part, which is obtained by segmentalizing the surface of the workpiece W, in at least one of the X axis direction, the Y axis direction and the Z axis direction. The state of the workpiece W may include the shape (for example, a three-dimensional shape) of the workpiece W. The shape of the workpiece W may include the shape of the surface of the workpiece W. The shape of the surface of the workpiece W may include a direction of each surface part, which is obtained by segmentalizing the surface of the workpiece W (for example, a direction of a normal line of each surface part, and it is substantially equivalent to an inclined amount of each surface part with respect to at least one of the X axis, the Y axis and the Z axis), in addition to or instead of the above described position of the surface of the workpiece W. The state of the workpiece W may include a size (for example, a size in at least one of the X axis direction, the Y axis direction and the Z axis direction) of the workpiece W.

In order to process and measure the workpiece W, the processing apparatus 1 includes a processing head 11 that emits each of the processing light EL and the measurement light ML to the workpiece W and a head driving system 12 that moves the processing head 11. The processing head 11 means any member that is configured to emit each of the processing light EL and the measurement light ML to the workpiece W. Thus, the processing head 11 may not mean a member that is attached to a front edge of a certain member, although it is expressed by a wording of head. Thus, the processing head 11 may be referred to as a processing member. Furthermore, the processing head 11 includes a processing light source 111, a processing optical system 112, a measurement light source 113, a measurement optical system 114, a combining optical system 115 and a common optical system 116. Note that the structures of the processing head 11 and the head driving system 12 will be described later in detail.

The head driving system 12 moves the processing head 11 along at least one of the X axis, the Y axis, the Z axis, the θX direction, the θY direction and the θZ direction. When the processing head 11 moves, a positional relationship between a stage 32 (furthermore, the workpiece W placed on the stage 32) and the processing head 11 changes. Namely, when the stage 32 moves, a relative position between the processing head 11 and each of the stage 32 and the workpiece W changes. Therefore, moving the stage 32 is equivalent to changing the positional relationship between the processing head 11 and each of the stage 32 and the workpiece W. Furthermore, when the positional relationship between the processing head 11 and each of the stage 32 and the workpiece W changes, a positional relationship between each optical system (namely, at least one of the processing optical system 112, the measurement optical system 114, the combining optical system 115 and the common optical system 116) of the processing head 11 and each of the stage 32 and the workpiece W changes. Therefore, moving the processing mead 11 is equivalent to changing the positional relationship between each optical system of the processing head 11 and each of the stage 32 and the workpiece W. Furthermore, when the positional relationship between the processing head 11 and each of the stage 32 and the workpiece W changes, a positional relationship between a housing 117 of the processing head 11 and each of the stage 32 and the workpiece W changes. Therefore, moving the processing mead 11 is equivalent to changing the positional relationship between the housing 117 of the processing head 11 and each of the stage 32 and the workpiece W. Furthermore, when the positional relationship between the processing head 11 and each of the stage 32 and the workpiece W changes, an irradiation position of each of the processing light EL and the measurement light ML on the workpiece W changes. Therefore, moving the processing mead 11 is equivalent to changing the irradiation position of each of the processing light EL and the measurement light ML on the workpiece W.

The stage apparatus 3 includes a surface plate 31 and a stage 32. The surface plate 31 is placed on a bottom surface of the housing 4 (or on a support surface such as a floor surface on which the housing 4 is placed). The stage 32 is placed on the surface plate 31. A non-illustrated vibration isolator that reduces a transmission of vibration from the surface plate 31 to the stage 32 may be disposed between the surface plate 31 and the bottom surface of the housing 4 or the support surface such as the floor surface on which the housing 4 is placed. Furthermore, a non-illustrated support frame that supports the processing apparatus 1 may be placed on the plate surface 31.

The workpiece W is placed on the stage 32. The stage 32 may hold the placed workpiece W. For example, the stage 32 may hold the workpiece W by vacuum-sucking and / or electrostatically sucking the workpiece W. Alternatively, the stage 32 may not hold the placed workpiece W.

The stage 32 is movable on the surface plate 31 while the workpiece W being placed thereon under the control of the control apparatus 5. The stage 32 is movable relative to at least one of the surface plate 31 and the processing apparatus 1. The stage 32 is movable along each of the X axis direction and the Y axis direction. In this case, the stage 32 is movable along a stage driving plane (a movement plane) that is parallel to the XY plane. The stage 32 may be further movable along at least one of the Z axis direction, θX direction, the θY direction and the θZ direction. In order to move the stage 32, the stage apparatus 3 includes a stage driving system 33. The stage driving system 33 moves the stage 32 by using any motor (for example, a linear motor and the like). Furthermore, the stage apparatus 3 may include a position measurement device for measuring a position of the stage 32. The position measurement device 34 may include at least one of an encoder and a laser interferometer, for example.

When the stage 32 moves, the positional relationship between the stage 32 (furthermore, the workpiece W placed on the stage 32) and the processing head 11 changes. Namely, when the stage 32 moves, the relative position between the processing head 11 and each of the stage 32 and the workpiece W changes. Therefore, moving the stage 32 is equivalent to changing the positional relationship between the processing head 11 and each of the stage 32 and the workpiece W. Furthermore, when the positional relationship between the processing head 11 and each of the stage 32 and the workpiece W changes, the positional relationship between the housing 117 of the processing head 11 and each of the stage 32 and the workpiece W changes. Therefore, moving the stage 32 is equivalent to changing the positional relationship between the housing 117 of the processing head 11 and each of the stage 32 and the workpiece W. Furthermore, when the positional relationship between the processing head 11 and each of the stage 32 and the workpiece W changes, the positional relationship between each optical system of the processing head 11 and each of the stage 32 and the workpiece W changes. Therefore, moving the stage 32 is equivalent to changing the positional relationship between each optical system of the processing head 11 and each of the stage 32 and the workpiece W. Furthermore, when the positional relationship between the processing head 11 and each of the stage 32 and the workpiece W changes, the irradiation position of each of the processing light EL and the measurement light ML on the workpiece W changes. Therefore, moving the stage 32 is equivalent to changing the irradiation position of each of the processing light EL and the measurement light ML on the workpiece W.

The control apparatus 5 controls the operation of the processing system SYSa. For example, the control apparatus 5 sets a processing condition of the workpiece W and controls the processing apparatus 1 and the stage apparatus 3 so that the workpiece W is processed on the basis of the set processing condition. For example, the control apparatus 5 sets a measurement condition of the workpiece W and controls the processing apparatus 1 and the stage apparatus 3 so that the workpiece W is measured on the basis of the set measurement condition.

The control apparatus 5 may include a CPU (Central Processing Unit) (alternatively, a GPU (Graphical Processing Unit) in addition to or instead of the CPU) and a memory, for example. The control apparatus 5 serves as an apparatus for controlling the operation of the processing system SYSa by means of the CPU executing a computer program. The computer program is a computer program that allows the control apparatus 5 (for example, the CPU) to execute (namely, to perform) a below described operation that should be executed by the control apparatus 5. Namely, the computer program is a computer program that allows the control apparatus 5 to function so as to make the processing system SYSa execute the below described operation. The computer program executed by the CPU may be recorded in the memory (namely, a recording medium) of the control apparatus 5, or may be recorded in any recording medium (for example, a hard disk or a semiconductor memory) that is built in the control apparatus 5 or that is attachable to the control apparatus 5. Alternatively, the CPU may download the computer program that should be executed from an apparatus disposed at the outside of the control apparatus 5 through a network interface.

The control apparatus 5 may not be disposed in the processing system SYSa, and may be disposed at the outside of the processing system SYSa as a server or the like. In this case, the control apparatus 5 may be connected to the processing system SYSa through a wired and / or wireless network (alternatively, a data bus and / or a communication line). A network using a serial-bus-type interface such as at least one of IEEE1394, RS-232x, RS-422, RS-423, RS-485 and USB may be used as the wired network. A network using a parallel-bus-type interface may be used as the wired network. A network using an interface that is compatible to Ethernet (a registered trademark) such as at least one of 10-BASE-T, 100BASE-TX or 1000BASE-T may be used as the wired network. A network using an electrical wave may be used as the wireless network. A network that is compatible to IEEE802.1x (for example, at least one of a wireless LAN and Bluetooth (registered trademark)) is one example of the network using the electrical wave. A network using an infrared ray may be used as the wireless network. A network using an optical communication may be used as the wireless network. In this case, the control apparatus 5 and the processing system SYSa may be configured to transmit and receive various information through the network. Moreover, the control apparatus 5 may be configured to transmit information such as a command and a control parameter to the processing system SYSa through the network. The processing system SYSa may include a receiving apparatus that receives the information such as the command and the control parameter from the control apparatus 5 through the network. Alternatively, a first control apparatus that performs a part of the processing performed by the control apparatus 5 may be disposed in the processing system SYSa and a second control apparatus that performs another part of the processing performed by the control apparatus 5 may be disposed at the outside of the processing system SYSa.

Note that the recording medium recording therein the computer program that should be executed by the CPU may include an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program. The recording medium may include a device that is configured to record the computer program (for example, a device for a universal use or a device for an exclusive use in which the computer program is embedded to be executable in a form of at least one of a software, a firmware and the like). Moreover, each process or function included in the computer program may be realized by a logical process block that is realized in the control apparatus 5 by means of the control apparatus 5 (namely, a computer) executing the computer program, may be realized by a hardware such as a predetermined gate array (a FPGA, an ASIC) of the control apparatus 5, or may be realized in a form in which the logical process block and a partial hardware module that realizes an partial element of the hardware are combined.

### (1-2) Structure of Processing Head 11

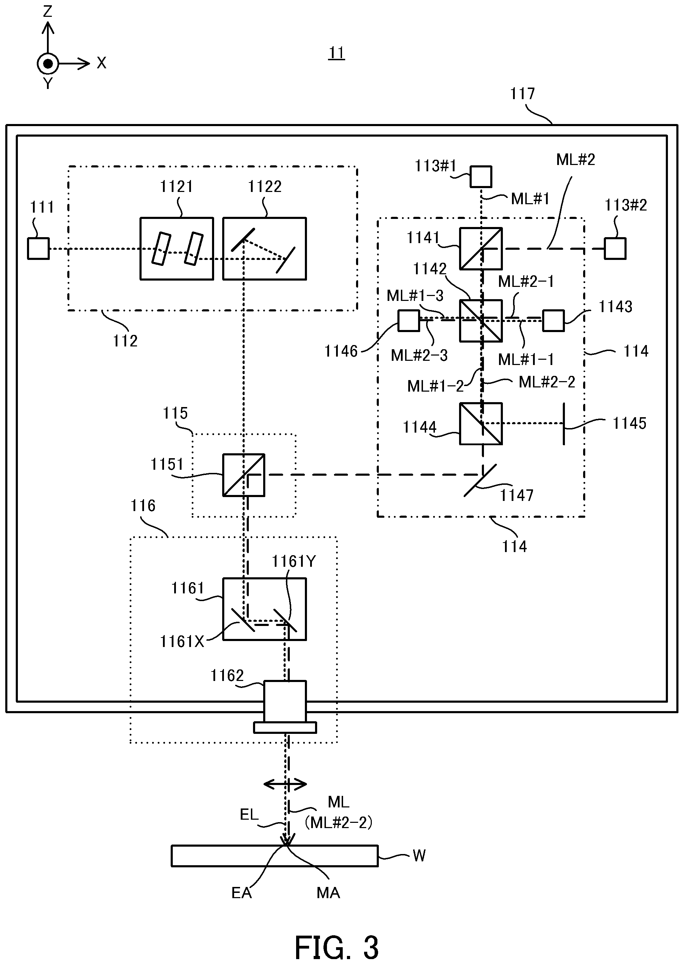

Next, with reference to FIG. 3, one example of the structure of the processing head 11 will be described. FIG. 3 is a cross-sectional view that illustrates one example of the structure of the processing head 11.

As illustrated in FIG. 3, the processing head 11 includes the processing light source 111, the processing optical system 112, the measurement light source 113, the measurement optical system 114, the combining optical system 115 and the common optical system 116. The processing light source 111, the processing optical system 112, the measurement light source 113, the measurement optical system 114, the combining optical system 115 and the common optical system 116 are housed in the housing 117. However, at least one of the processing light source 111, the processing optical system 112, the measurement light source 113, the measurement optical system 114, the combining optical system 115 and the common optical system 116 may not be housed in the housing 117.

The processing light source 111 is configured to generate the processing light EL. When the processing light EL is the laser light, the processing light source 111 may include a laser diode, for example. Furthermore, the processing light source 111 may be a light source that is configured to pulsed-oscillate. In this case, the processing light source 111 is configured to generate the pulsed light (for example, a pulsed light having an ON time shorter than pico-seconds) as the processing light EL. The processing light source 111 emits the generated processing light EL toward the processing optical system 112.

The processing optical system 112 is an optical system to which the processing light EL emitted from the processing light source 111 enters. The processing optical system 112 is an optical system that emits, toward the combining optical system 115, the processing light EL entering the processing optical system 112. Namely, The processing optical system 112 is an optical system that guides the processing light EL emitted from the processing light source 111 to the combining optical system 115. The workpiece W is irradiated with the processing light EL emitted from the processing optical system 112 through the combining optical system 115 and the common optical system 116. Thus, it can be said that the processing optical system 112 is an optical system that emits the processing light EL toward the workpiece W through the combining optical system 115 and the common optical system 116.

The processing optical system 112 includes a position adjustment optical system 1121 and an angle adjustment optical system 1122. The position adjustment optical system 1121 is configured to adjust an emitting position of the processing light from the processing optical system 112. The position adjustment optical system 1121 includes a parallel plate that is configured to incline with respect to a propagating direction of the processing light EL, for example, and changes a position of the processing light EL by changing an inclined angle of the parallel plate. In an example illustrated in FIG. 3, the emitting position of the processing light EL may be set to be any position in a YZ plane by a plurality of parallel plates whose inclined directions are different from each other. When the emitting position of the processing light EL from the processing optical system 112 is changed, an incident angle of the processing light EL (for example, an incident angle relative to the workpiece W) is changed. The angle adjustment optical system 1122 is configured to adjust an emitting angle of the processing light EL from the processing optical system 112. The angle adjustment optical system 1122 includes a mirror that is configured to incline with respect to the propagating direction of the processing light EL, for example, and changes the emitting angle of the processing light by changing an inclined angle of the mirror. In the example illustrated in FIG. 3, the emitting angle of the processing light EL may be set to be any direction around the θX axis and the θY axis by a plurality of mirrors whose inclined angles are different from each other. When the emitting angle of the processing light EL from the processing optical system 112 is changed, the irradiation position of the processing light EL (for example, the irradiation position on the workpiece W) is changed. However, the processing optical system 112 may not include at least one of the position adjustment optical system 1121 and the angle adjustment optical system 1122. The processing optical system 112 may include another optical element or optical member (this may be referred to as an optical system, the same applies to the below described description), in addition to or instead of at least one of the position adjustment optical system 1121 and the angle adjustment optical system 1122.

The processing light EL emitted from the processing optical system 112 enters the combining optical system 115. The combining optical system 115 includes a beam splitter (for example, a polarized beam splitter) 1151. The beam splitter 1151 emits, toward the common optical system 116, the processing light EL entering the beam splitter 1151. In the example illustrated in FIG. 3, the processing light EL entering the beam splitter 1151 passes through a polarization split surface to be emitted toward the common optical system 116. Thus, in the example illustrated in FIG. 3, the processing light EL enters the polarization split surface of the polarized beam splitter 1151 in a state where it has a polarized direction by which it is allowed to pass through the polarization split surface (a polarized direction by which it is a p-polarized light with respect to the polarization split surface).

The processing light EL emitted from the combining optical system 115 enters the common optical system 116. The common optical system 116 emits, toward the workpiece W, the processing light EL entering the common optical system 116. The common optical system 116 includes a Galvano mirror 1161 and a fθ lens 1162.

The processing light EL emitted from the combining optical system 115 enters the Galvano mirror 1161. The Galvano mirror 1161 changes the irradiation position of the processing light EL on the workpiece W by deflecting the processing light EL (namely, by changing the emitting angle of the processing light EL). Namely, the Galvano mirror 1161 changes a position of the irradiation area EA, which is set on the workpiece W or on an optical path of the processing light EL as an area that is irradiated with the processing light EL, by deflecting the processing light EL. Note that the change of the emitting angle of the processing light EL by the Galvano mirror 1161 is converted into the change of the irradiation position of the processing light EL (namely, the position of the irradiation area EA) by the Galvano mirror 1161, because the Galvano mirror 1161 is disposed at or near an incident pupil position of the fθ lens 1162. For example, the Galvano mirror 1161 includes a X scanning mirror 1161X and a Y scanning mirror 1162Y. Each of the X scanning mirror 1161X and the Y scanning mirror 1162Y is an inclined angle variable mirror whose angle relative to the optical path of the processing light EL entering the Galvano mirror 1161 is changed. The X scanning mirror 1161X deflects the processing light EL by swinging or rotating (namely, changing the angle of the X scanning mirror 1161X relative to the optical path of the processing light EL) so as to change the irradiation position along the X axis direction of the processing light EL on the workpiece W. The Y scanning mirror 1161Y deflects the processing light EL by swinging or rotating (namely, changing the angle of the Y scanning mirror 1161Y relative to the optical path of the processing light EL) so as to change the irradiation position along the Y axis direction of the processing light EL on the workpiece W.

The processing light EL emitted from the Galvano mirror 1161 enters the fθ lens 1162. Thus, the Galvano mirror 1161 is disposed on the optical path of the processing light EL between the combining optical system 115 and the fθ lens 1162. The fθ lens 1162 is disposed on the optical path of the processing light EL between the Galvano mirror 1161 and the workpiece W. The fθ lens 1162 is disposed on the optical path of the processing light EL between the Galvano mirror 1161 and the irradiation area EA. The fθ lens 1162 is an optical system for irradiating the workpiece W with the processing light EL from the Galvano mirror 1161. The fθ lens 1162 is an optical system for irradiating the irradiation area EA with the processing light EL from the Galvano mirror 1161. Especially, the fθ lens 1162 is an optical system for condensing the processing light EL from the Galvano mirror 1161 on the workpiece W. Thus, the fθ lens 1162 irradiates the workpiece W with the processing light EL in a converged state. As a result, the workpiece W is processed by the processing light EL. Note that the fθ lens 1162 may be referred to as an irradiation optical system, because it irradiates the workpiece W with the processing light EL. Note that a moving range of the irradiation area EA that moves on the workpiece W by the Galvano mirror 1161 may be referred to as a processing area. In other words, the irradiation area EA may be regarded to move in the processing area.

Here, the Galvano mirror 1161 may be referred to as a first irradiation position change optical system. The angle adjustment optical system 1122 may be referred to as a second irradiation position change optical system that is disposed at an opposite side of the irradiation optical system (the fθ lens 1162) viewed from the combining optical system 115 (between the combining optical system 115 and the processing light source 111).

Next, the measurement light source 113 is configured to generate the measurement light ML When the measurement light ML is the laser light, the measurement light source 113 may include a laser diode, for example. Especially, since the measurement light ML includes the pulsed light, the measurement light source 113 is a light source that is configured to pulsed-oscillate. In this case, the measurement light source 113 is configured to generate the pulsed light (for example, a pulsed light having an ON time shorter than pico-seconds) as the measurement light ML The measurement light source 113 emits the generated measurement light ML toward the processing optical system 114.

Especially in the first embodiment, the measurement light source 113 includes a light comb light source. The light comb light source is a light source that is configured to generate, as the pulsed light, a light including frequency components that are arranged with equal interval on a frequency axis (hereinafter, it is referred to as a "light frequency comb"). In this case, the measurement light source 113 emits, as the measurement light ML, the pulsed light including the frequency components that are arranged with equal interval on the frequency axis.

In an example illustrated in FIG. 1, the processing head 11 includes a plurality of measurement light sources 113. For example, the processing head 11 includes the measurement light source 113#1 and the measurement light source 113#2. The plurality of measurement light sources 113 emit a plurality of measurement lights ML whose phases are synchronized with each other and that are coherent, respectively. For example, oscillation frequencies of the plurality of measurement light sources 113 may be different. Thus, the plurality of measurement lights ML respectively emitted from the plurality of measurement light sources 113 are the plurality of measurement lights ML having different pulse frequencies (for example, the number of the pulsed light per unit time, and an inverse number of an emission cycle of the pulsed light). As one example, the measurement light source 113#1 may emit the measurement light ML#1 whose pulse frequency is 25GHz and the measurement light source 113#2 may emit the measurement light ML#2 whose pulse frequency is 25GHz + α (for example, 100Hz).

The measurement optical system 114 is an optical system to which the measurement light ML emitted from the measurement light source 113 enters. The measurement optical system 114 is an optical system that emits, toward the combining optical system 115, the measurement light ML entering the measurement optical system 114. Namely, The measurement optical system 114 is an optical system that guides the measurement light ML emitted from the measurement light source 113 to the combining optical system 115. The workpiece W is irradiated with the measurement light ML emitted from the measurement optical system 114 through the combining optical system 115 and the common optical system 116. Thus, it can be said that the measurement optical system 114 is an optical system that emits the measurement light ML toward the workpiece W through the combining optical system 115 and the common optical system 116.

The measurement optical system 114 is optically separated from the processing optical system 112. Thus, the optical path of the processing light EL between the processing light source 111 and the combining optical system 115 is optically separated from the optical path of the measurement light ML between the measurement light source 113 and the combining optical system 115. Note that a state where one optical system is optically separated from another optical system may mean a state where an optical path of one optical system does not overlap with an optical path of another optical system.

The measurement optical system 114 includes a beam splitter 1141, a beam splitter 1142, a detector 1143, a beam splitter 1144, a mirror 1145, a detector 1146 and a mirror 1147, for example.

The measurement light ML emitted from the measurement light source 113 enters the beam splitter 1141. Specifically, the measurement light ML emitted from the measurement light source 113#1 (hereinafter, it is referred to as the "measurement light ML#1") and the measurement light ML emitted from the measurement light source 113#2 (hereinafter, it is referred to as the "measurement light ML#2") enter the beam splitter 1141. The beam splitter 1141 emits, toward the beam splitter 1142, the measurement lights ML#1 and ML#2 entering the beam splitter 1141.

The beam splitter 1142 reflects, toward the detector 1143, a measurement light ML#1-1 that is a part of the measurement light ML#1 entering the beam splitter 1142. The beam splitter 1142 emits, toward the beam splitter 1144, a measurement light ML#1-2 that is another part of the measurement light ML#1 entering the beam splitter 1142. The beam splitter 1142 reflects, toward the detector 1143, a measurement light ML#2-1 that is a part of the measurement light ML#2 entering the beam splitter 1142. The beam splitter 1142 emits, toward the beam splitter 1144, a measurement light ML#2-2 that is another part of the measurement light ML#2 entering the beam splitter 1142.

The measurement lights ML#1-1 and ML#2-1 emitted from the beam splitter 1142 enter the detector 1143. The detector 1143 detects an interfering light generated by an interference between the measurement light ML#1-1 and the measurement light ML#2-1. Specifically, the detector 1143 detects the interfering light by optically receiving the interfering light. Thus, the detector 1143 may include a light reception element (a light reception part and typically a photoelectron conversion element) that is configured to optically receive a light. A detected result by the detector 1143 is outputted to the control apparatus 5.

The measurement lights ML#1-2 and ML#2-2 emitted from the beam splitter 1142 enter the beam splitter 1144. The beam splitter 1144 reflects, toward the mirror 1145, at least a part of the measurement light ML#1-2 entering the beam splitter 1144. The beam splitter 1144 reflects, toward the mirror 1147, at least a part of the measurement light ML#2-2 entering the beam splitter 1144. Note that the beam splitter 1144 may be referred to as a division member.

The measurement light ML#1-2 emitted from the beam splitter 1144 enters the mirror 1145. The measurement light ML#1-2 entering the mirror 1145 is reflected by a reflection surface (the reflection surface may be referred to as a reference surface) of the mirror 1145. Specifically, the mirror 1145 reflects, toward the beam splitter 1144, the measurement light ML#1-2 entering the mirror 1145. Namely, the mirror 1145 emits the measurement light ML#1-2, which enters the mirror 1145, toward the beam splitter 1144 as a measurement light ML#1-3 that is a reflection light thereof. Note that the mirror 1145 may be referred to as a reference reflection member. The measurement light ML#1-3 emitted from the mirror 1145 enters the beam splitter 1144. The beam splitter 1144 emits, toward the beam splitter 1142, the measurement light ML#1-3 entering the beam splitter 1144. The measurement light ML#1-3 emitted from the beam splitter 1144 enters the beam splitter 1142. The beam splitter 1142 emits, toward the detector 1146, the measurement light ML#1-3 entering the beam splitter 1142.

On the other hand, the measurement light ML#2-2 emitted from the beam splitter 1144 enters the mirror 1147. The mirror 1147 reflects, toward the combining optical system 115, the measurement light ML#2-2 entering the mirror 1147. Namely, the mirror 1147 emits, toward the combining optical system 115, the measurement light ML#2-2 entering the mirror 1147.

The measurement light ML#2-2 emitted from the mirror 1147 enters the combining optical system 115. The beam splitter 1151 of the combining optical system 115 emits, toward the common optical system 116, the measurement light ML#2-2 entering the beam splitter 1151. In the example illustrated in FIG. 3, the measurement light ML#2-2 entering the beam splitter 1151 is reflected by the polarization split surface to be emitted toward the common optical system 116. Thus, in the example illustrated in FIG. 3, the measurement light ML#2-2 enters the polarization split surface of the polarized beam splitter 1151 in a state where it has a polarized direction by which it is allowed to be reflected by the polarization split surface (a polarized direction by which it is a s-polarized light with respect to the polarization split surface).

Here, not only the measurement light ML#2-2 but also the processing light EL enter the beam splitter 1151 as described above. Namely, both of the measurement light ML#2-2 and the processing light EL pass through the beam splitter 1151. The beam splitter 1151 emits, toward same direction (namely, toward the same common optical system 116), the processing light EL and the measurement light ML#2-2 that respectively enter the beam splitter 1151 from different directions. Therefore, the beam splitter 1151 substantially serves as an optical system that combines the processing light EL and the measurement light ML#2-2. Note that the same direction described above may be a direction of the processing light EL and the measurement light ML#2-2 when the processing light EL and the measurement light ML#2-2 enter the common optical system 116 that is an optical system located at an emitting side of the combining optical system 115, and the directions of the processing light EL and the measurement light ML#2-2 may be slightly different as long as the processing light EL and the measurement light ML#2-2 enter the common optical system 116.

Note that the combining optical system 115 may have any structure as long as it is configured to combine the processing light EL and the measurement light ML#2-2. For example, the combining optical system 115 may combine the processing light EL and the measurement light ML#2-2 by using a dichroic mirror that reflects a light in a certain wavelength band and through which a light in another wavelength band passes, in addition to or instead of the beam splitter 1151.

The measurement light ML#2-2 emitted from the combining optical system 115 enters the common optical system 116. The common optical system 116 emits, toward the workpiece W, the measurement light ML#2-2 entering the common optical system 116.

Specifically, the measurement light ML#2-2 emitted from the combining optical system 115 enters the Galvano mirror 1161. The Galvano mirror 1161 changes the irradiation position of the measurement light ML#2-2 on the workpiece W by deflecting the measurement light ML#2-2. Namely, the Galvano mirror 1161 changes a position of an irradiation area MA, which is set on the workpiece W or on an optical path of the measurement light ML#2-2 as an area that is irradiated with the measurement light ML#2-2, by deflecting the measurement light ML#2-2. Note that a change of an emitting angle of the measurement light ML#2-2 by the Galvano mirror 1161 is converted into the change of the irradiation position of the measurement light ML#2-2 (namely, the position of the irradiation area MA) by the Galvano mirror 1161, because the Galvano mirror 1161 is disposed at or near the incident pupil position of the fθ lens 1162. The X scanning mirror 1161X deflects the measurement light ML#2-2 by swinging or rotating (namely, changing the angle of the X scanning mirror 1161X relative to the optical path of the measurement light ML#2-2) so as to change the irradiation position along the X axis direction of the measurement light ML#2-2 on the workpiece W. The Y scanning mirror 1161Y deflects the measurement light ML#2-2 by swinging or rotating (namely, changing the angle of the Y scanning mirror 1161Y relative to the optical path of the measurement light ML#2-2) so as to change the irradiation position along the Y axis direction of the measurement light ML#2-2 on the workpiece W. Note that the Galvano mirror 1161 may be referred to as an irradiation position change optical system.

The measurement light ML#2-2 emitted from the Galvano mirror 1161 enters the fθ lens 1162. The fθ lens 1162 is an optical system for condensing the measurement light ML#2-2 from the Galvano mirror 1161 on the workpiece W. The fθ lens 1162 is an optical system for irradiating the workpiece W with the measurement light ML#2-2 from the Galvano mirror 1161. The fθ lens 1162 is an optical system for irradiating the irradiation area MA with the measurement light ML#2-2 from the Galvano mirror 1161. Thus, the fθ lens 1162 is disposed on the optical path of the measurement light ML#2-2 between the Galvano mirror 1161 and the irradiation area MA. Especially, the fθ lens 1162 irradiates the workpiece W with the measurement light ML#2-2 in a converged state. As a result, the workpiece W is processed by the measurement light ML (specifically, the measurement light ML#2-2). Note that the fθ lens 1162 may be referred to as an irradiation optical system, because it irradiates the workpiece W with the measurement light ML#2-2.

Note that a moving range of the irradiation area MA that moves on the workpiece W by the Galvano mirror 1161 may be referred to as a s measurement area. In other words, the irradiation area MA may be regarded to move in the measurement area.

Here, not only the measurement light ML#2-2 but also the processing light EL enter the common optical system 116 as described above. Namely, the processing light EL and the measurement light ML#2-2 combined by the combining optical system 115 enters the common optical system 116. Therefore, both of the processing light EL and the measurement light ML#2-2 pass through the same common optical system 116 (specifically, the same Galvano mirror 1161 and the same fθ lens 1162). Thus, the Galvano mirror 1161 may change the irradiation position of the processing light EL on the workpiece W and the irradiation position of the measurement light ML#2-2 on the workpiece W in synchronization with each other. The Galvano mirror 1161 may change the irradiation position of the processing light EL on the workpiece W and the irradiation position of the measurement light ML#2-2 on the workpiece W in conjunction with each other. Namely, the Galvano mirror 1161 may change the relative position of the irradiation area EA relative to the workpiece W and the relative position of the irradiation area MA relative to the workpiece W in synchronization with and / or in conjunction with each other. Here, the propagating direction of the processing light EL that enters a first position on the workpiece W may be same as or parallel with a propagating direction of the measurement light ML#2-2 that enters this first position. The propagating direction of the processing light EL that enters a second position of the workpiece W that is different from the first position may be same as or parallel with a propagating direction of the measurement light ML#2-2 that enters this second position.

An open angle of the measurement light ML#2-2 propagating from the common optical system 116 to the workpiece W may be larger than an open angle of the processing light EL propagating from the common optical system 116 to the workpiece W. In this case, the diameter of the spot of the measurement light ML on the workpiece W is smaller than the diameter of the spot of the processing light EL on the workpiece W. As a result, the measurement resolution by the measurement light ML becomes higher than the processing resolution by the processing light EL.

The open angle of the measurement light ML#2-2 propagating from the common optical system 116 to the workpiece W depends on a size of a light flux of the measurement light ML#2-2 entering the common optical system 116. Specifically, the open angle of the measurement light ML#2-2 propagating from the common optical system 116 to the workpiece W becomes larger as the size of the light flux of the measurement light ML#2-2 entering the common optical system 116 becomes larger. Similarly, the open angle of the processing light EL propagating from the common optical system 116 to the workpiece W depends on a size of a light flux of the processing light EL entering the common optical system 116. Specifically, the open angle of the processing light EL propagating from the common optical system 116 to the workpiece W becomes larger as the size of the light flux of the processing light EL entering the common optical system 116 becomes larger. Thus, the size of the light flux of the measurement light ML#2-2 entering the common optical system 116 may be larger than the size of the light flux of the processing light EL entering the common optical system 116. In this case, the diameter of the spot of the measurement light ML on the workpiece W is smaller than the diameter of the spot of the processing light EL on the workpiece W. As a result, the measurement resolution by the measurement light ML becomes higher than the processing resolution by the processing light EL. Note that "the size of the light flux" here may mean a size of a cross-section of the light flux that intersects with the propagating direction of the light. When the cross-section of the light flux that intersects with the propagating direction of the light is not a circular shape, "the size of the light flux" may mean a maximum size of the cross-section of the light flux that intersects with the propagating direction of the light. For example, when the cross-section of the light flux that intersects with the propagating direction of the light is an oval shape, the maximum size may be a size of a major axis.

The open angle of the measurement light ML#2-2 propagating from the common optical system 116 to the workpiece W depends on a size of the light flux of the measurement light ML#2-2 at a pupil position (typically, an incident pupil position and an emitting pupil position when the light propagating toward the fθ lens 1161 is a basis) of the fθ lens 1162. Specifically, the open angle of the measurement light ML#2-2 propagating from the common optical system 116 to the workpiece W becomes larger as the size of the light flux of the measurement light ML#2-2 at the pupil position of the fθ lens 1162 becomes larger. Similarly, the open angle of the processing light EL propagating from the common optical system 116 to the workpiece W depends on a size of the light flux of the processing light EL at the pupil position of the fθ lens 1162. Specifically, the open angle of the processing light EL propagating from the common optical system 116 to the workpiece W becomes larger as the size of the light flux of the processing light EL at the pupil position of the fθ lens 1162 becomes larger. Thus, the size of the light flux of the measurement light ML#2-2 at the pupil position of the fθ lens 1162 may be larger than the size of the light flux of the processing light EL at the pupil position of the fθ lens 1162 becomes larger. In this case, the diameter of the spot of the measurement light ML on the workpiece W is smaller than the diameter of the spot of the processing light EL on the workpiece W. As a result, the measurement resolution by the measurement light ML becomes higher than the processing resolution by the processing light EL.

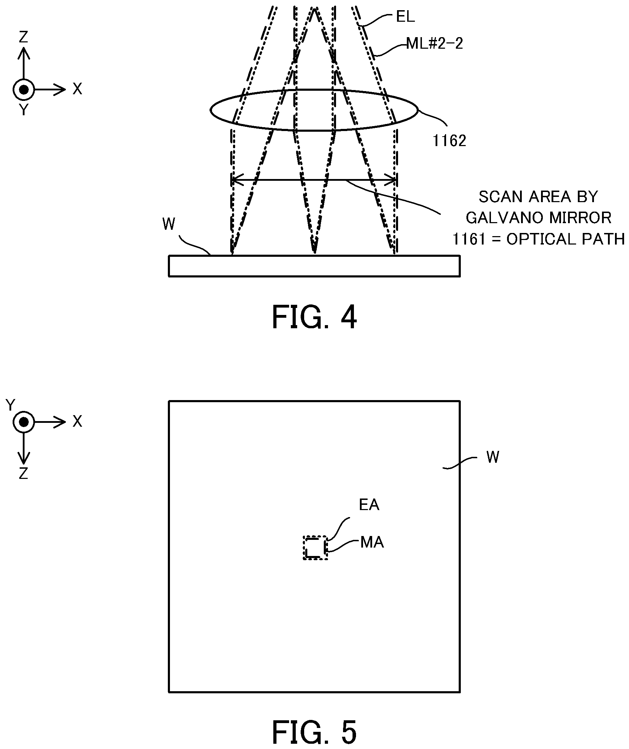

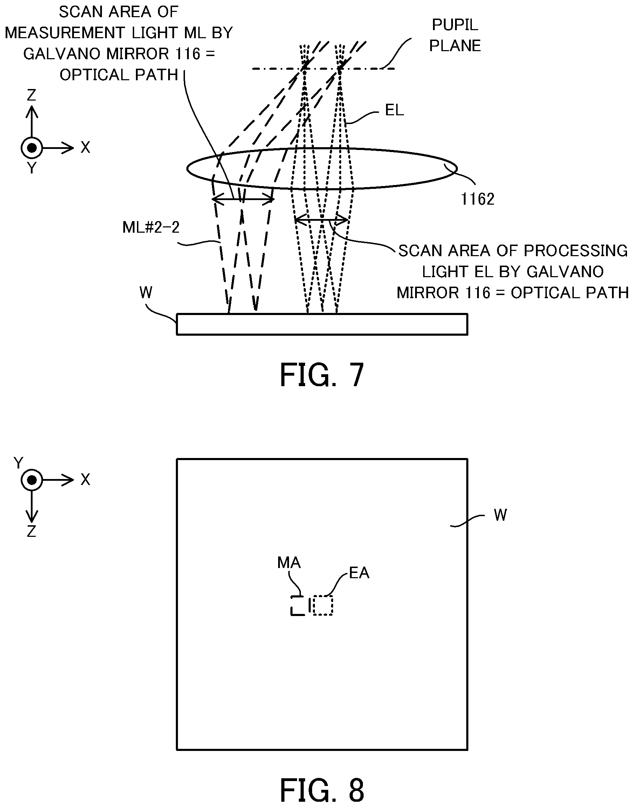

The combining optical system 115 may combine the processing light EL and the measurement light ML#2-2 so that the optical path of the processing light EL overlaps with (in other words, includes) the optical path of the measurement light ML#2-2 at least partially between the combining optical system 115 and the workpiece W. Namely, the combining optical system 115 may combine the processing light EL and the measurement light ML#2-2 so that the optical path of the processing light EL from the combining optical system 115 to the workpiece W overlaps with the optical path of the measurement light ML#2-2 from the combining optical system 115 to the workpiece W at least partially. Note that "the optical path of the light" when the overlapping of the optical paths is described may mean an aggregation of paths along which the light propagates (alternatively, paths of beams). For example, the optical path of the processing light EL between the combining optical system 115 and the workpiece W may include a spatial area which is obtained by combining a first path that is a spatial area occupied by the processing light EL propagating from the combining optical system 115 to a first position of the workpiece W, a second path that is a spatial area occupied by the processing light EL propagating from the combining optical system 115 to a second position of the workpiece W, ..., and a N-th path that is a spatial area occupied by the processing light EL propagating from the combining optical system 115 to a N-th position of the workpiece W. For example, the optical path of the processing light EL between the combining optical system 115 and the workpiece W may include a spatial area through which the processing light EL is allowed to pass by the Galvano mirror 1161 (see FIG. 4 and FIG. 7 described below). For example, the optical path of the measurement light ML between the combining optical system 115 and the workpiece W may include a spatial area through which the measurement light ML is allowed to pass by the Galvano mirror 1161 (see FIG. 4 and FIG. 7 described below).

Since the common optical system 116 exists between the combining optical system 115 and the workpiece W, the combining optical system 115 may combine the processing light EL and the measurement light ML#2-2 so that the optical path of the processing light EL overlaps with the optical path of the measurement light ML#2-2 at least partially in the common optical system 116. The combining optical system 115 may combine the processing light EL and the measurement light ML#2-2 so that the optical path of the processing light EL in the common optical system 116 overlaps with the optical path of the measurement light ML#2-2 in the common optical system 116 at least partially. The combining optical system 115 may combine the processing light EL and the measurement light ML#2-2 so that the optical path of the processing light EL overlaps with the optical path of the measurement light ML#2-2 at least partially between the common optical system 116 and the workpiece W. The combining optical system 115 may combine the processing light EL and the measurement light ML#2-2 so that the optical path of the processing light EL from the common optical system 116 to the workpiece W overlaps with the optical path of the measurement light ML#2-2 from the common optical system 116 to the workpiece W at least partially.

As one example, as illustrated in FIG. 4 that is a cross-sectional view partially illustrating the optical path of the processing light EL and the optical path of the measurement light ML#2-2 between the combining optical system 115 and the workpiece W, the combining optical system 115 may combine the processing light EL and the measurement light ML#2-2 so that the optical path of the processing light EL from the combining optical system 115 to the workpiece W and the optical path of the measurement light ML#2-2 from the combining optical system 115 to the workpiece W are coaxial. In this case, as illustrated in FIG. 5 that is a planar view illustrating the irradiation area EA that is irradiated with the processing light EL and the irradiation area MA that is irradiated with the measurement light ML#2-2, the combining optical system 115 may combine the processing light EL and the measurement light ML#2-2 so that the irradiation area EA overlaps with the irradiation area MA at least partially. The combining optical system 115 may combine the processing light EL and the measurement light ML#2-2 so that the irradiation position of the processing light EL on the workpiece W matches the irradiation position of the measurement light ML#2-2 on the workpiece W at least partially. When the irradiation area EA overlaps with the irradiation area MA at least partially, at least a part of the irradiation area EA, which is irradiated with the processing light EL, is irradiated with the measurement light MA#2-2 and at least a part of the irradiation area MA, which is irradiated with the measurement light MA#2-2, is irradiated with the processing light EL. Namely, the same area is irradiated with the processing light EL and the measurement light ML#2-2. Note that a state where the optical path of the processing light EL from the combining optical system 115 to the workpiece W and the optical path of the measurement light ML#2-2 from the combining optical system 115 to the workpiece W are coaxial may include a state where a principal ray of the processing light EL from the combining optical system 115 to the workpiece W matches a principal ray of the measurement light ML#2-2 from the combining optical system 115 to the workpiece W. Here, the principal rays of the processing light EL and the measurement light ML#2-2 may be rays that pass through positions of barycenter of light amount in the cross-sections (the cross-sections that intersect with the propagating direction of the processing light EL and the measurement light ML#2-2) of the light fluxes of the processing light EL and the measurement light ML#2-2.

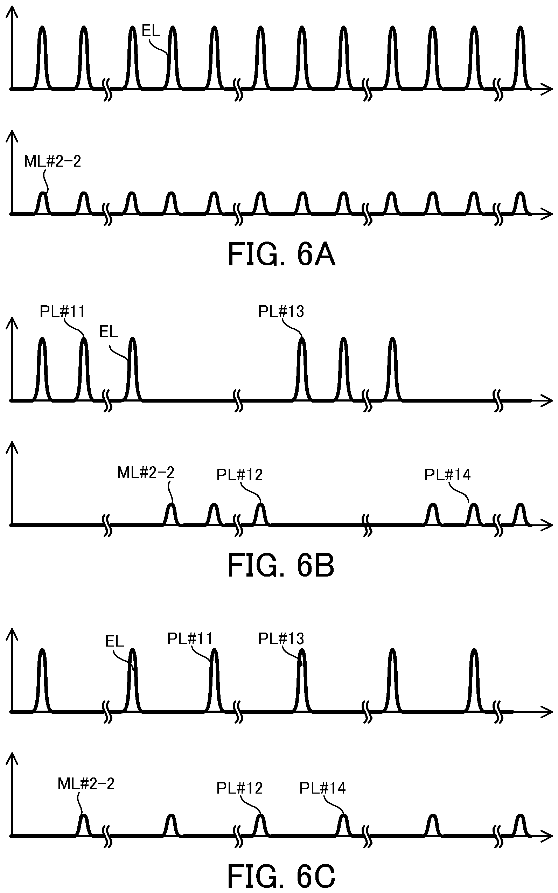

When the irradiation area EA overlaps with the irradiation area MA at least partially, the processing apparatus 1 may perform the irradiation of the processing light EL to the irradiation area EA and the irradiation of the measurement light ML#2-2 to the irradiation area MA at the same time. Specifically, as illustrated in FIG. 6A that is a timing chart illustrating an irradiation timing of the processing light EL and an irradiation timing of the measurement light MS#2-2, when each of the processing light EL and the measurement light ML#2-2 includes the pulsed light as described above, the processing apparatus 1 may emit the processing light EL and the measurement light ML#2-2 so that a timing (in other words, a time or a period) at which the irradiation area EA is irradiated with at least one of the plurality of pulsed lights of the processing light EL matches a timing (in other words, a time or a period) at which the irradiation area MA is irradiated with at least one of the plurality of pulsed lights of the measurement light ML#2-2.

Alternatively, when the irradiation area EA overlaps with the irradiation area MA at least partially, the processing apparatus 1 may perform the irradiation of the processing light EL to the irradiation area EA and the irradiation of the measurement light ML#2-2 to the irradiation area MA at different timings, respectively. Specifically, as illustrated in FIG. 6B and FIG. 6C each of which is a timing chart illustrating the irradiation timing of the processing light EL and the irradiation timing of the measurement light MS#2-2, the processing apparatus 1 may emit the processing light EL and the measurement light ML#2-2 so that the timing (in other words, the time or the period) at which the irradiation area EA is irradiated with at least one of the plurality of pulsed lights of the processing light EL is different from the timing (in other words, the time or the period) at which the irradiation area MA is irradiated with at least one of the plurality of pulsed lights of the measurement light ML#2-2. The processing apparatus 1 may emit the processing light EL and the measurement light ML#2-2 so that the timing (in other words, the time or the period) at which the irradiation area EA is irradiated with at least one of the plurality of pulsed lights of the processing light EL does not overlap with the timing (in other words, the time or the period) at which the irradiation area MA is irradiated with at least one of the plurality of pulsed lights of the measurement light ML#2-2. Typically, the processing apparatus 1 may emit the processing light EL and the measurement light ML#2-2 so that a timing at which the irradiation area EA is irradiated with one pulsed light PL#13 of the processing light EL is set to be between a timing at which the irradiation area MA is irradiated with one pulsed light PL#12 of the measurement light ML#2-2 and a timing at which the irradiation area MA is irradiated with another pulsed light PL#14 of the measurement light ML#2-2. The processing apparatus 1 may emit the processing light EL and the measurement light ML#2-2 so that the timing at which the irradiation area MA is irradiated with one pulsed light PL#12 of the measurement light ML#2-2 is set to be between a timing at which the irradiation area EA is irradiated with one pulsed light PL#11 of the processing light EL and the timing at which the irradiation area EA is irradiated with another pulsed light PL#13 of the processing light EL. In this case, there is a small possibility that the irradiation of the measurement light ML#2-2 to the workpiece W is interfered by a substance (for example, a fume and the like) that is generated due to the irradiation of the processing light EL to the workpiece W. As a result, a proper measurement using the measurement light ML#2-2 is realized.

Alternatively, the combining optical system 115 may combine the processing light EL and the measurement light ML#2-2 so that the optical path of the processing light EL is away from the optical path of the measurement light ML#2-2 at least partially between the combining optical system 115 and the workpiece W. Namely, the combining optical system 115 may combine the processing light EL and the measurement light ML#2-2 so that the optical path of the processing light EL from the combining optical system 115 to the workpiece W is away from the optical path of the measurement light ML#2-2 from the combining optical system 115 to the workpiece W at least partially. Since the common optical system 116 exists between the combining optical system 115 and the workpiece W, the combining optical system 115 may combine the processing light EL and the measurement light ML#2-2 so that the optical path of the processing light EL is away from the optical path of the measurement light ML#2-2 at least partially in the common optical system 116. The combining optical system 115 may combine the processing light EL and the measurement light ML#2-2 so that the optical path of the processing light EL in the common optical system 116 is away from the optical path of the measurement light ML#2-2 in the common optical system 116 at least partially. The combining optical system 115 may combine the processing light EL and the measurement light ML#2-2 so that the optical path of the processing light EL is away from the optical path of the measurement light ML#2-2 at least partially between the common optical system 116 and the workpiece W. The combining optical system 115 may combine the processing light EL and the measurement light ML#2-2 so that the optical path of the processing light EL from the common optical system 116 to the workpiece W is away from the optical path of the measurement light ML#2-2 from the common optical system 116 to the workpiece W at least partially.

As one example, as illustrated in FIG. 7 that is a cross-sectional view partially illustrating the optical path of the processing light EL and the optical path of the measurement light ML#2-2 between the combining optical system 115 and the workpiece W, the combining optical system 115 may combine the processing light EL and the measurement light ML#2-2 so that the optical path of the processing light EL from the combining optical system 115 to the workpiece W is away from the optical path of the measurement light ML#2-2 from the combining optical system 115 to the workpiece W at least partially along a direction that intersects with an optical axis AX of the combining optical system 115 and / or the common optical system 116. Namely, the combining optical system 115 may combine the processing light EL and the measurement light ML#2-2 so that the optical path of the processing light EL from the combining optical system 115 to the workpiece W has an off-axis relation with the optical path of the measurement light ML#2-2 from the combining optical system 115 to the workpiece W. In this case, as illustrated in FIG. 8 that is a planar view illustrating the irradiation area EA that is irradiated with the processing light EL and the irradiation area MA that is irradiated with the measurement light ML#2-2, the combining optical system 115 may combine the processing light EL and the measurement light ML#2-2 so that the irradiation area EA is away from the irradiation area MA at least partially. The combining optical system 115 may combine the processing light EL and the measurement light ML#2-2 so that the irradiation position of the processing light EL on the workpiece W is different from the irradiation position of the measurement light ML#2-2 on the workpiece W at least partially.

FIG. 7 illustrates an example in which the processing light EL from the fθ lens 1162 to the workpiece W is parallel with the measurement light ML#2-2 from the fθ lens 1162 to the workpiece W. Namely, FIG. 7 illustrates an example in which the principal ray of the processing light EL from the fθ lens 1162 to the workpiece W is parallel with the principal ray of the measurement light ML#2-2 from the fθ lens 1162 to the workpiece W. However, the processing light EL from the fθ lens 1162 to the workpiece W may not be parallel with the measurement light ML#2-2 from the fθ lens 1162 to the workpiece W. Namely, the principal ray of the processing light EL from the fθ lens 1162 to the workpiece W may not be parallel with the principal ray of the measurement light ML#2-2 from the fθ lens 1162 to the workpiece W. In other words, the fθ lens 1162 at the workpiece W side with respect to the processing light EL may be non-telecentric and the fθ lens 1162 at the workpiece W side with respect to the measurement light ML#2-2 may be non-telecentric

In order to make the irradiation area EA be away from the irradiation area MA at least partially, the combining optical system 115 may typically combine the processing light EL and the measurement light ML#2-2 so that there is a difference in angle between the processing light EL and the measurement light ML#2-2 at a pupil plane of the fθ lens 1162. Namely, the combining optical system 115 may combine the processing light EL and the measurement light ML#2-2 so that the incident angle of the processing light EL relative to the pupil plane of the fθ lens 1162 is different from an incident angle of the measurement light ML#2-2 relative to the pupil plane of the fθ lens 1162. As a result, the difference in angle between the processing light EL and the measurement light ML#2-2 at the pupil plane is converted into a difference of the irradiation position between the processing light EL and the measurement light ML#2-2 at an image plane (typically, the surface of the workpiece W) by the fθ lens 1162. Namely, the difference in angle between the processing light EL and the measurement light ML#2-2 at the pupil plane is converted into a difference in position between the irradiation area EA and the irradiation area MA on the workpiece W by the fθ lens 1162.

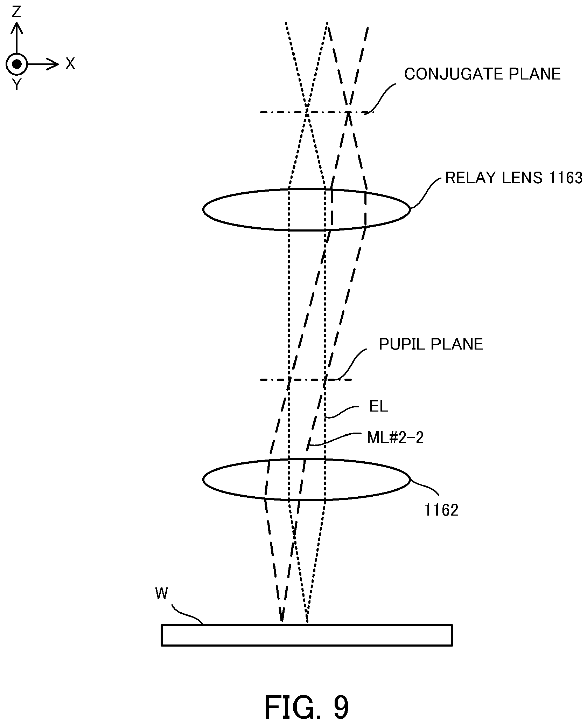

In order to make the irradiation area EA be away from the irradiation area MA at least partially on the workpiece W, as illustrated in FIG. 9, the common optical system 116 may include a relay lens 1163 between the Galvano mirror 1161 and the fθ lens 1162. The relay lens 1163 is an optical member (an optical system) for making the optical path of the processing light EL be away from the optical path of the measurement light ML#2-2 at least partially at a plane that is optically conjugate with the surface of the workpiece W

When the irradiation area EA is away from the irradiation area MA at least partially, the processing apparatus 1 may perform the irradiation of the processing light EL to the irradiation area EA and the irradiation of the measurement light ML#2-2 to the irradiation area MA at the same time (see FIG. 6A). Alternatively, when the irradiation area EA is away from the irradiation area MA at least partially, the processing apparatus 1 may perform the irradiation of the processing light EL to the irradiation area EA and the irradiation of the measurement light ML#2-2 to the irradiation area MA at different timings, respectively (see FIG. 6B and FIG. 6C).

Note that the combining optical system 115 may combine the processing light EL and the measurement light ML#2-2 so that the optical path of the processing light EL is away from (never overlaps with) the optical path of the measurement light ML#2-2 between the combining optical system 115 and the workpiece W.

Alternatively, in each of a case where the irradiation area EA overlaps with the irradiation area MA at least partially, a case where the irradiation area EA is away from the irradiation area MA at least partially or a case where the irradiation area EA is completely away from the irradiation area MA, the processing apparatus 1 may irradiate the workpiece W with the measurement light ML before the processing apparatus 1 starts processing the workpiece W (for example, at a timing at which the workpiece W is placed on the stage 32 or a timing at which the workpiece W is allowed to be irradiated with the measurement light ML). Namely, the processing apparatus 1 may perform the irradiation of the measurement light ML#2-2 to the irradiation area MA before the processing apparatus 1 starts processing the workpiece W (for example, at the timing at which the workpiece W is placed on the stage 32 or the timing at which the workpiece W is allowed to be irradiated with the measurement light ML). The processing apparatus 1 may irradiate the workpiece W with the measurement light ML after the processing apparatus 1 completes processing the workpiece W. The processing apparatus 1 may perform the irradiation of the measurement light ML#2-2 to the irradiation area MA after the processing apparatus 1 completes processing the workpiece W.

Again in FIG. 3, when the workpiece W is irradiated with the measurement light ML#2-2, a light due to the irradiation of the measurement light ML#2-2 is generated from the workpiece W. Namely, when the workpiece W is irradiated with the measurement light ML#2-2, the light due to the irradiation of the measurement light ML#2-2 is emitted from the workpiece W. For example, when the workpiece W is irradiated with the measurement light ML#2-2, a reflection light of the measurement light ML#2-2 is emitted from the workpiece W. For example, when the workpiece W is irradiated with the measurement light ML#2-2, a scattering light of the measurement light ML#2-2 is emitted from the workpiece W. Here, the light due to the irradiation of the measurement light ML#2-2, in other words, the light emitted from the workpiece W due to the irradiation of the measurement light ML#2-2 may include at least one of the measurement light ML#2-2 reflected by the workpiece W (namely, the reflection light), a scattering light generated due to the irradiation of the measurement light ML#2-2 to the workpiece W, the measurement light ML#2-2 diffracted by the workpiece W (namely, a diffraction light) and the measurement light ML#2-2 passing through the workpiece W (namely, a transmitted light).

At least a part of the light emitted from the workpiece W due to the irradiation of the measurement light ML#2-2 (hereinafter, this light is referred to as a "measurement light ML#2-3) enters the common optical system 116. The measurement light ML#2-3 entering the common optical system 116 enters the combining optical system 115 through the fθ lens 1162 and the Galvano mirror 1161. The beam splitter 1151 of the combining optical system 115 emits, toward the measurement optical system 114, the measurement light ML#2-3 entering the beam splitter 1151. In the example illustrated in FIG. 3, the measurement light ML#2-3 entering the beam splitter 1151 is reflected by the polarization split surface to be emitted toward the measurement optical system 114. Thus, in the example illustrated in FIG. 3, the measurement light ML#2-3 enters the polarization split surface of the polarized beam splitter 1151 in a state where it has a polarized direction by which it is allowed to be reflected by the polarization split surface.

The measurement light ML#2-3 emitted from the combining optical system 115 enters the mirror 1147 of the measurement optical system 114. The mirror 1147 reflects, toward the beam splitter 1144, the measurement light ML#2-3 entering the mirror 1147. The beam splitter 1144 emits, toward the beam splitter 1142, at least a part of the measurement light ML#2-3 entering the beam splitter 1144. The beam splitter 1142 emits, toward the detector 1146, the measurement light ML#2-3 entering the beam splitter 1142.

Here, as described above, not only the measurement light ML#2-3 but also the measurement light ML#1-3 enter the detector 1146. Namely, the measurement light ML#2-3 that propagates toward the detector 1146 through the workpiece W and the measurement light ML#1-3 that propagates toward the detector 1146 without going through the workpiece W enter the detector 1146. Note that the measurement light ML#2-3 may be referred to as a reference light. The detector 1146 detects an interfering light generated by an interference between the measurement light ML#1-3 and the measurement light ML#2-3. Specifically, the detector 1146 detects the interfering light by optically receiving the interfering light. Thus, the detector 1146 may include a light reception element (a light reception part) that is configured to optically receive a light. Note that the detector 1146 may be referred to as a light reception member. A detected result by the detector 1146 is outputted to the control apparatus 5.

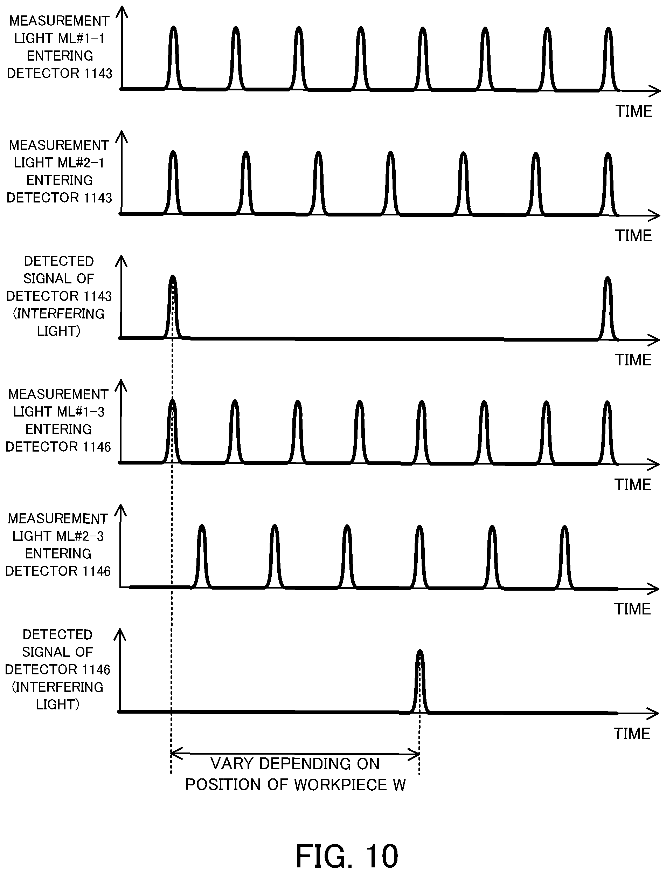

The control apparatus 5 calculates the state of the workpiece W on the basis of the detected result by the detector 1143 and the detected result by the detector 1146. Here, with reference to FIG. 10, a principle for calculating the state of the workpiece W on the basis of the detected result by the detector 1143 and the detected result by the detector 1146 will be described.

FIG. 10 is a timing chart that illustrates the measurement light ML#1-1 entering the detector 1143, the measurement light ML#2-1 entering the detector 1143, the interfering light detected by the detector 1143, the measurement light ML#1-3 entering the detector 1146, the measurement light ML#2-3 entering the detector 1146 and the interfering light detected by the detector 1146. Since the pulse frequency of the measurement light ML#1 is different from the pulse frequency of the measurement light ML#2, a pulse frequency of the measurement light ML#1-1 is different from a pulse frequency of the measurement light ML#2-1. Therefore, the interfering light generated by the interference between the measurement light ML#1-1 and the measurement light ML#2-1 is an interfering light in which a pulsed light appears in synchronization with a timing at which the pulsed light of the measurement light ML#1-1 and the pulsed light of the measurement light ML#2-1 enter the detector 1143 at the same time. Similarly, a pulse frequency of the measurement light ML#1-3 is different from a pulse frequency of the measurement light ML#2-3. Therefore, the interfering light generated by the interference between the measurement light ML#1-3 and the measurement light ML#2-3 is an interfering light in which a pulsed light appears in synchronization with a timing at which the pulsed light of the measurement light ML#1-3 and the pulsed light of the measurement light ML#2-3 enter the detector 1146 at the same time.

Here, a position (a position along a time axis) of the pulsed light of the interfering light detected by the detector 1146 changes depending on the positional relationship between the processing head 11 and the workpiece W. This is because the interfering light detected by the detector 1146 is the interfering light generated by the interference between the measurement light ML#2-3 that propagates toward the detector 1146 through the workpiece W and the measurement light ML#1-3 that propagates toward the detector 1146 without going through the workpiece W. On the other hand, a position (a position along a time axis) of the pulsed light of the interfering light detected by the detector 1143 does not change depending on the positional relationship between the processing head 11 and the workpiece W. Therefore, it can be said that a difference in time between the pulsed light of the interfering light detected by the detector 1143 and the pulsed light of the interfering light detected by the detector 1146 indirectly indicates the positional relationship between the processing head 11 and the workpiece W (typically, a distance between the processing head 11 and the workpiece W). Thus, the control apparatus 5 may calculate the state of the workpiece W on the basis of the difference in time between the pulsed light of the interfering light detected by the detector 1143 and the pulsed light of the interfering light detected by the detector 1146. Specifically, the control apparatus 5 may calculate a position of the workpiece W that is irradiated with the measurement light ML#2-2 on the basis of the difference in time between the pulsed light of the interfering light detected by the detector 1146 and the pulsed light of the interfering light detected by the detector 1143. Namely, the control apparatus 5 may obtain an information relating to the position of the workpiece W that is irradiated with the measurement light ML#2-2. Furthermore, when a plurality of parts of the workpiece W are irradiated with the measurement light ML#2-2 and / or the surface of the workpiece W is swept by the measurement light ML#2-2, the control apparatus 5 may calculate the shape of the workpiece W.

The calculated state of the workpiece W may be used to control the processing system SYSa. Specifically, the calculated state of the workpiece W may be used to control the processing apparatus 1. The calculated state of the workpiece W may be used to control the processing head 11. The calculated state of the workpiece W may be used to control the head driving system 12. The calculated state of the workpiece W may be used to control the stage apparatus 3. The calculated state of the workpiece W may be used to control the stage driving system 33.

For example, the control apparatus 5 may change the relative positional relationship between the workpiece W and the processing head 11 on the basis of the calculated state of the workpiece W so that the relative positional relationship between the workpiece W and the processing head 11 becomes a desired positional relationship. Namely, the control apparatus 5 may control, on the basis of the calculated state of the workpiece W, an apparatus that is configured to change the relative positional relationship between the workpiece W and the processing head 11 so that the relative positional relationship between the workpiece W and the processing head 11 becomes the desired positional relationship. At least one of the head driving system 12 and the stage driving system 33 is one example of the apparatus that is configured to change the relative positional relationship between the workpiece W and the processing head 11. Note that a positional relationship that allows a desired position on the workpiece W to be irradiated with the processing light EL and / or the measurement light ML is one example of the "desired positional relationship".

For example, the control apparatus 5 may change the relative positional relationship between the workpiece W and each optical system of the processing head 11 on the basis of the calculated state of the workpiece W so that the relative positional relationship between the workpiece W and each optical system (namely, at least one of the processing optical system 112, the measurement optical system 114, the combining optical system 115 and the common optical system 116) of the processing head 11 becomes the desired positional relationship. Namely, the control apparatus 5 may control, on the basis of the calculated state of the workpiece W, an apparatus that is configured to change the relative positional relationship between the workpiece W and each optical system of the processing head 11 so that the relative positional relationship between the workpiece W and each optical system of the processing head 11 becomes the desired positional relationship. At least one of the head driving system 12 and the stage driving system 33 is one example of the apparatus that is configured to change the relative positional relationship between the workpiece W and each optical system of the processing head 11.

For example, the control apparatus 5 may change the relative position of the irradiation area EA relative to the workpiece W on the basis of the calculated state of the workpiece W so that the irradiation area EA is set at the desired position on the workpiece W (namely, it is irradiated with the processing light EL). Namely, the control apparatus 5 may control, on the basis of the calculated state of the workpiece W, an apparatus that is configured to change the relative position of the irradiation area EA relative to the workpiece W so that the irradiation area EA is set at the desired position on the workpiece W. The angle adjustment optical element 1122 of the processing optical system 112, the Galvano mirror 1161 of the common optical system 116, the head driving system 12 and the stage driving system 33 are examples of the apparatus that is configured to change the relative position of the irradiation area EA relative to the workpiece W.

For example, the control apparatus 5 may change the relative position of the irradiation area MA relative to the workpiece W on the basis of the calculated state of the workpiece W so that the irradiation area MA is set at the desired position on the workpiece W (namely, it is irradiated with the measurement light ML#2-2). Namely, the control apparatus 5 may control, on the basis of the calculated state of the workpiece W, an apparatus that is configured to change the relative position of the irradiation area MA relative to the workpiece W so that the irradiation area MA is set at the desired position on the workpiece W. The angle adjustment optical element 1122 of the processing optical system 112, the Galvano mirror 1161 of the common optical system 116, the head driving system 12 and the stage driving system 33 are examples of the apparatus that is configured to change the relative position of the irradiation area MA relative to the workpiece W.

However, in the first embodiment, the Galvano mirror 1161 is configured to change the relative position of the irradiation area MA relative to the workpiece W and the irradiation position of the measurement light ML#2-2 on the workpiece W in conjunction with each other as described above. Thus, when the relative position of the irradiation area MA relative to the workpiece W is changed by using the Galvano mirror 1161, the relative position of the irradiation area EA relative to the workpiece W is also changed at the same time. Namely, when the relative position of the irradiation area EA relative to the workpiece W is changed by using the Galvano mirror 1161, the relative position of the irradiation area MA relative to the workpiece W is also changed at the same time.

The head driving system 12 is also configured to change the relative position of the irradiation area EA relative to the workpiece W and the irradiation position of the measurement light ML#2-2 on the workpiece W in conjunction with each other, because it moves the processing head 11. Thus, when the relative position of the irradiation area MA relative to the workpiece W is changed by using the head driving system 12, the relative position of the irradiation area EA relative to the workpiece W is also changed at the same time. Namely, when the relative position of the irradiation area EA relative to the workpiece W is changed by using the head driving system 12, the relative position of the irradiation area MA relative to the workpiece W is also changed at the same time.

The stage driving system 33 is also configured to change the relative position of the irradiation area EA relative to the workpiece W and the irradiation position of the measurement light ML#2-2 on the workpiece W in conjunction with each other, because it moves the stage 32 (namely, moves the workpiece W placed on the stage 32). When the relative position of the irradiation area MA relative to the workpiece W is changed by using the stage driving system 33, the relative position of the irradiation area EA relative to the workpiece W is also changed at the same time. Namely, when the relative position of the irradiation area EA relative to the workpiece W is changed by using the stage driving system 33, the relative position of the irradiation area MA relative to the workpiece W is also changed at the same time.

For example, the control apparatus 5 may determine whether or not the workpiece W is properly processed by the processing light EL on the basis of the calculated state of the workpiece W. Namely, the control apparatus 5 may perform, on the basis of the calculated state of the workpiece W, a posterior inspection of the workpiece W after the workpiece W is processed by the processing light EL. Specifically, the control apparatus 5 may determine whether or not the workpiece W is properly processed by the processing light EL by comparing the o calculated state of the workpiece W and an ideal state of the processed workpiece W. When it is determined that the workpiece W is not properly processed by the processing light EL, the control apparatus 5 may control the processing apparatus 1 so that the workpiece W is properly processed by the processing light EL

Incidentally, when the posterior inspection of the workpiece W is performed, the irradiation area MA that is irradiated with the measurement light ML#2-2 may be set at the rear of the irradiation area EA that is irradiated with the processing light EL on the workpiece W. The "rear" here means a rear along a moving direction of the processing light EL (namely, a moving direction of the irradiation area EA) on the workpiece W. In this case, a certain area on the workpiece W is irradiated with the processing light EL, and then, this area is irradiated with the measurement light ML#2-2. Therefore, an order of the irradiations of the processing light EL and the measurement light ML#2-2 is an order that is suitable for the posterior inspection of the workpiece W.

For example, the control apparatus 5 may perform, on the basis of the calculated state of the workpiece W, a pre-inspection of the workpiece W before the workpiece W is processed by the processing light EL. For example, the control apparatus 5 may perform the pre-inspection for determining whether or not there is a defect, which possibly interferes a proper processing by the processing light EL, on the workpiece W. For example, the control apparatus 5 may perform the pre-inspection for determining the state of the workpiece W in order to determine a processing aspect by the processing light EL.

Incidentally, when the pre-inspection of the workpiece W is performed, the irradiation area MA that is irradiated with the measurement light ML#2-2 may be set at the front of the irradiation area EA that is irradiated with the processing light EL on the workpiece W. The "front" here means a front along the moving direction of the processing light EL on the workpiece W. In this case, a certain area on the workpiece W is irradiated with the measurement light ML#2-2, and then, this area is irradiated with the processing light EL. Therefore, an order of the irradiations of the processing light EL and the measurement light ML#2-2 is an order that is suitable for the pre- inspection of the workpiece W.

### (1-3) Structure of Head Driving System 12

### (1-3-1) Entire Structure of Head Driving System 12

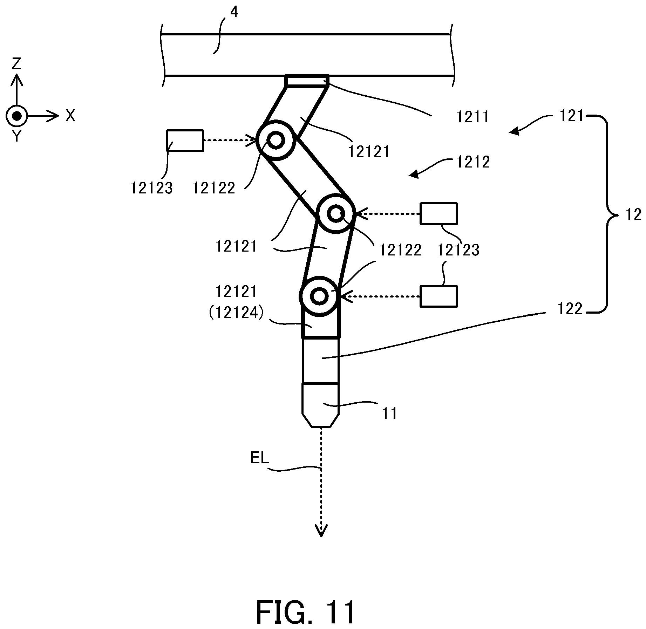

Next, with reference to FIG. 11, one example of the structure of the head driving system 12 will be described. FIG. 11 is a cross-sectional view that illustrates one example of the structure of the head driving system 12.

As illustrated in FIG. 11, the head driving system 12 includes a first driving system 121 and a second driving system 122. The second driving system 121 is attached to the first driving system 121. The first driving system 121 supports the second driving system 122. The processing head 11 is attached to the second driving system 122. The second driving system 122 supports the processing head 11. Thus, the second member 122 may substantially serve as a connecting apparatus that connects the first driving system 121 and the processing head 11.

The first driving system 121 moves the second driving system 122 relative to the workpiece W under the control of the control apparatus 5. Namely, the first driving system 121 serves as a movement apparatus that moves the second driving system 122 relative to the workpiece W. Since the processing head 11 is attached to the second driving system 122, it can be said that the first driving system 121 moves the processing head 11 relative to the workpiece W by moving the second driving system 122. Namely, the first driving system 121 moves the processing head 11 with the second driving system 122. The first driving system 121 moves the processing head 11 through the second driving system 122. The first driving system 121 serves as a driving part that moves (namely, drives) each optical system of the processing head 11 through the second driving system 122.

The second driving system 122 moves the processing head 11 relative to the workpiece W under the control of the control apparatus 5. Namely, the second driving system 122 serves as a movement apparatus that moves the processing head 11 relative to the workpiece W. The second driving system 122 serves as a movement apparatus that moves the processing head 11 relative to the workpiece W. Since the second driving system 122 supports the processing head 11 as described above, it can be said that the second driving system 122 supports the processing head 11 in a state where the processing head 11 is movable relative to the workpiece W. In this case, the second driving system 122 serves as a support part that supports each optical system of the processing head 11 in a state where each optical system of the processing head 11 is movable relative to the workpiece W.

Next, the first driving system 121 and the second driving system 122 described above will be described in sequence. Note that the first driving system 121 may be referred to as a first position change apparatus. The second driving system 122 may be referred to as a second position change apparatus.

### (1-3-1-1) Structure of First Driving System 121

As illustrated in FIG. 11, the first driving system 121 includes a base 1211 and an arm driving system 1212.

The base 1211 is attached to the housing 4 (for example, a ceiling member of the housing 4) or the non-illustrated support frame (a support structural body). The arm driving system 1212 is attached to the base 1211. The base 1211 supports the arm driving system 1211. The base 1211 is used as a base member for supporting the arm driving system 1211.

The arm driving system 121 includes a plurality of arm members 12121. The plurality of arm members 12121 are coupled in a pivotable manner through at least one joint member 12122. Therefore, the arm driving system 1212 is a robot that has what we call vertically articulated structure. However, the arm driving system 1212 is not limited to the robot that has the vertically articulated structure, and may be a robot-polar-coordinate robot that has a horizontally articulated structure, a cylindrical coordinate robot, a Cartesian coordinate robot, or a parallel-link type of robot, for example. The arm driving system 1212 may include single joint (namely, a driving axis defined by the joint member 12122). Alternatively, the arm driving system 1212 may include a plurality of joints. FIG. 11 illustrates an example in which the arm driving system 1212 includes three joints. Two arm member 12121 that are coupled through each joint pivot by an actuator 12123 corresponding to each joint. FIG. 11 illustrates an example in which the arm driving system 1212 includes three actuators 12123 corresponding to the three joints. As a result, at least one arm member 12121 moves. Thus, at least one arm member 12121 is movable relative to the workpiece W. Namely, at least one arm member 12121 is movable so that a relative positional relationship between at least one arm member 12121 and the workpiece W is changed.

The second driving system 122 is attached to the arm driving system 1212. Specifically, the second driving system 122 is attached to one arm member 12121, which is located at a position that is farthest from the base 1211, of the plurality of arm members 12121. In the below described description, one arm member 12121 to which the second driving system 122 is attached is referred to as a tip arm member 12124 for convenience of the description. The second driving system 122 may be directly attached to the tip arm member 12121, or may be indirectly attached to the tip arm member 12121 through another member.

When the tip arm member 12124 moves by the above described actuator 12123, the second driving system 122 attached to the tip arm member 12124 also moves. Thus, the arm driving system 1212 (namely, the first driving system 121) moves the second driving system 122. Specifically, the arm driving system 1212 moves the second driving system 122 relative to the workpiece W. The arm driving system 1212 moves the second driving system 122 so that a relative positional relationship between the second driving system 122 and the workpiece W is changed. Moreover, when the second driving system 122 moves, the processing head 11 attached to the second driving system 122 also moves. Thus, the arm driving system 1212 (namely, the first driving system 121) moves the processing head 11.

Note that the first driving system 121 is not limited to the articulated robot and may have any structure as long as it is allowed to move the second driving system 122 relative to the workpiece W.

### (1-3-3) Structure of Second Driving System 122

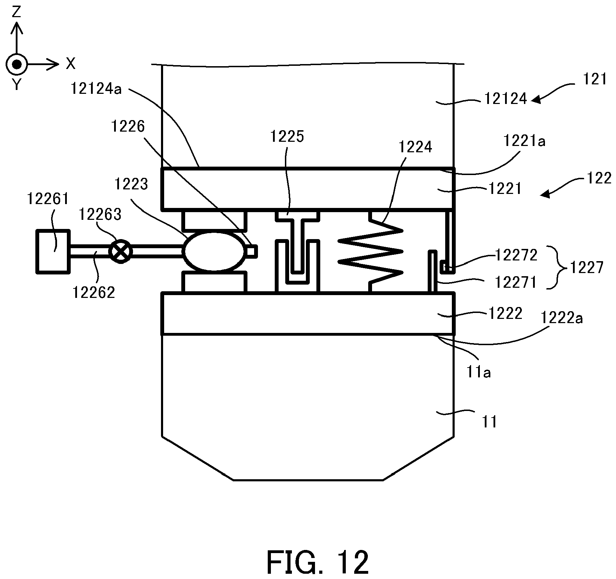

Next, with reference to FIG. 12, the structure of the second driving system 122 will be described. FIG. 12 is a cross-sectional view that illustrates the structure of the second driving system 122.

As illustrated in FIG. 12, the second driving system 122 includes a support member 1221, a support member 1222, an air spring 1223, a damper member 1224 and a driving member 1225.

The support member 1221 is attached to the first driving system 121. Specifically, the support member 1221 is attached to the tip arm member 12124 of the first driving system 121. The support member 1222 is attached to the processing head 11.

The support member 1221 is coupled (in other words, interlocked or connected) to the support member 1222 through the air spring 1223, the damper member 1224 and the driving member 1225. Namely, each of the air spring 1223, the damper member 1224 and the driving member 1225 is attached to the support members 1221 and 1222 to couple the support member 1221 and the support member 1222. Since the first driving system 121 is attached to the support member 1221 and the processing head 11 is attached to the support member 1222, it can be said that each of the air spring 1223, the damper member 1224 and the driving member 1225 is attached to the support members 1221 and 1222 to couple the first driving system 121 and the processing head 11.

The air spring 1223 applies an elastic force caused by a pressure of gas (as one example, air) to at least one of the support members 1221 and 1222 under the control of the control apparatus 5. The air spring 1223 applies the elastic force caused by the pressure of the gas to at least one of the first driving system 121 and the processing head 11 through at least one of the support members 1221 and 1222 under the control of the control apparatus 5. Especially, the air spring 1223 may apply the elastic force caused by the pressure of the gas to at least one of the support members 1221 and 1222 along a direction (the Z axis direction and the gravity direction in the example illustrated in FIG. 12) in which the support member 1221 and the support member 1222 are arranged. Namely, the air spring 1223 may apply the elastic force caused by the pressure of the gas to at least one of the first driving system 121 and the processing head 11 through at least one of the support members 1221 and 1222 along a direction (the Z axis direction and the gravity direction in the example illustrated in FIG. 12) in which the first driving system 121 (especially, the tip arm member 12124) and the processing head 11 are arranged. Note that the air spring 1223 may be referred to as an elastic member or a buffer member.

In order to apply the elastic force caused by the pressure of the gas, the gas is supplied to the air spring 1223 from a gas supply apparatus 12261 through a pipe 12262 and a valve 12263. The control apparatus 5 controls at least one of the gas supply apparatus 12261 and the valve 12263 on the basis of a measured result by a pressure sensor 1226 that measures a pressure of the gas in the air spring 1223. Note that the air supply apparatus 12261, the pipe 12262 and the valve 12263 may not be provided. In this case, the air spring 1223 may apply the elastic force caused by the pressure therein to at least one of the support members 1221 and 1222 regardless of the control of the control apparatus 5.

The air spring 1223 may support a weight of the support member 1222 by using the elastic force under the control of the control apparatus 5. Specifically, the air spring 1223 may support the weight of the support member 1222 along a direction in which the support member 1221 and the support member 1222 are arranged by using the elastic force. Since the processing head 11 is attached to the support member 1222, the air spring 1223 may support a weight of the processing head 11 attached to the support member 1222 by using the elastic force. Specifically, the air spring 1223 may support the weight of the processing head 11 along a direction in which the first driving system 121 (especially, the tip arm member 12124) and the processing head 11 are arranged by using the elastic force. In this case, the air spring 1223 may serve as a weight canceler that cancels the weight of the processing head 11. Note that the air spring 1223 may support the weight of the support member 1222 by using the elastic force regardless of the control of the control apparatus 5.

The air spring 1223 may reduce a vibration, which is transmitted between the first driving system 121 and the processing head 11 through the second driving system 122, by using the elastic force under the control of the control apparatus 5. Namely, the air spring 1223 may damp the vibration, which is transmitted between the first driving system 121 and the processing head 11 through the second driving system 122, by using the elastic force. Specifically, the air spring 1223 may reduce (damp) the vibration, which propagates (is transmitted) from the first driving system 121 to the processing head 11 through the second driving system 122, by using the elastic force. Namely, the air spring 1223 may reduce (damp) the vibration, which propagates (is transmitted) from a part of the first driving system 121 (namely, the tip arm part 12124) to which the second driving system 122 is attached to a part of the processing head 11 to which the second driving system 122 is attached, by using the elastic force. In this case, the control apparatus 5 may control at least one of the gas supply apparatus 12261 and the valve 12263 on the basis of the measured result by the pressure sensor 1226 so that the vibration that is transmitted between the first driving system 121 and the processing head 11 through the second driving system 122 is reduced (namely, is damped). Note that the air spring 1223 (alternatively, the second driving system 122 including the air spring 1223) may be referred to as a vibration reduction apparatus or a vibration damping apparatus. Note that the air spring 1223 may reduce the vibration, which is transmitted between the first driving system 121 and the processing head 11 through the second driving system 122, by using the elastic force regardless of the control of the control apparatus 5.

The damper member 1224 applies an elastic force caused by a factor different from the pressure of the air to at least one of the support members 1221 and 1222. The damper member 1224 applies the elastic force caused by the factor different from the pressure of the air to at least one of the first driving system 121 and the processing head 11 through at least one of the support members 1221 and 1222. Especially, the damper member 1224 may apply the elastic force to at least one of the support members 1221 and 1222 along a direction (the Z axis direction and the gravity direction in the example illustrated in FIG. 12) in which the support member 1221 and the support member 1222 are arranged. Namely, the damper member 1224 may apply the elastic force to at least one of the first driving system 121 and the processing head 11 through at least one of the support members 1221 and 1222 along a direction (the Z axis direction and the gravity direction in the example illustrated in FIG. 12) in which the first driving system 121 (especially, the tip arm member 12124) and the processing head 11 are arranged. Note that the damper member 1224 may be referred to as an elastic member or a buffer member.

The damper member 1224 may be any member as long as it is configured to apply the elastic force. For example, the damper member 1224 may include a compressed spring coil. For example, the damper member 1224 may include a plate spring.

The damper member 1224 may support a weight of the support member 1222 by using the elastic force. Specifically, the damper member 1224 may support the weight of the support member 1222 along a direction in which the support member 1221 and the support member 1222 are arranged by using the elastic force. Since the processing head 11 is attached to the support member 1222, the damper member 1224 may support a weight of the processing head 11 attached to the support member 1222 by using the elastic force. Specifically, the damper member 1224 may support the weight of the processing head 11 along a direction in which the first driving system 121 (especially, the tip arm member 12124) and the processing head 11 are arranged by using the elastic force. In this case, the damper member 1224 may serve as a weight canceler that cancels the weight of the processing head 11.

The damper member 1224 may reduce a vibration, which is transmitted between the first driving system 121 and the processing head 11 through the second driving system 122, by using the elastic force. Namely, the damper member 1224 may damp the vibration, which is transmitted between the first driving system 121 and the processing head 11 through the second driving system 122, by using the elastic force. Specifically, the damper member 1224 may reduce (damp) the vibration, which propagates (is transmitted) from the first driving system 121 to the processing head 11 through the second driving system 122, by using the elastic force. Thus, the damper member 1224 may be referred to as a vibration reduction apparatus or a vibration damping apparatus.

The damper member 1224 may convert the vibration of the air spring 1223 to a damping vibration by using the elastic force. Namely, the damper member 1224 may convert the vibration, which is transmitted between the first driving system 121 and the processing head 11 through the second driving system 122, to the damping vibration by using the elastic force.

The driving member 1225 is configured to generate a driving force under the control of the control apparatus 5. The driving member 1225 is configured to apply the generated driving force to at least one of the support members 1221 and 1222. The driving member 1225 is configured to apply the generated driving force to at least one of the first driving system 121 and the processing head 11 through at least one of the support members 1221 and 1222. The driving member 1225 may have any structure as long as it is configured to generate the driving force. For example, the driving member 1225 may have a structure that is configured to electrically generate the driving force. For example, the driving member 1225 may have a structure that is configured to magnetically generate the driving force. As one example, FIG. 12 illustrates an example in which the driving member 1225 a voice coil motor (VCM: Voice Coil Motor) that is configured to electrically generate the driving force. Note that the driving member 1225 may be a linear motor that is different from the voice coil motor, although the voice coil motor is a type of linear motor. The driving member 1225 may generate the driving force along a linear axis.

Note that the driving member 1225 may have a structure in which a member of the driving member 1225 that is attached to the support member 1221 does not physically contact with a member of the driving member 1225 that is attached to the support member 1222. For example, when the driving member 1225 is the voice coil motor, the member (for example, a member including either one of a coil and a magnetic pole) of the driving member 1225 that is attached to the support member 1221 does not physically contact with a member (for example, a member including the other one of a coil and a magnetic pole) of the driving member 1225 that is attached to the support member 1222

The driving member 1225 may move at least one of the support members 1221 and 1222 by using the driving force under the control of the control apparatus 5. The driving member 1225 may move at least one of the first driving system 121 and the processing head 11 by moving at least one of the support members 1221 and 1222 by using the driving force under the control of the control apparatus 5. In this case, the driving member 1225 may change a relative position between the first driving system 121 and the processing head 11 by moving at least one of the first driving system 121 and the processing head 11 by using the driving force. In this case, it can be said that the second driving system 122 including the driving member 1225 couples the first driving system 121 and the processing head 11 so that the relative position between the first driving system 121 and the processing head 11 is changeable. Namely, it can be said that the air spring 1223 and the damper member 1224 (furthermore, the driving member 1225) couple the first driving system 121 and the processing head 11 so that the relative position between the first driving system 121 and the processing head 11 is changeable by the driving member 1225. Note that the driving member 1225 may be referred to as a position change apparatus or a second position change apparatus.

The driving member 1225 may change the relative position between the first driving system 121 and the processing head 11 on the basis of a measured result by a position measurement apparatus 1227 of the second driving system 122 under the control of the control apparatus 5. The position measurement apparatus 1226 measures the relative position between the first driving system 121 and the processing head 11. For example, the position measurement apparatus 1226 may be an encoder that includes a detection part 12261 that is attached to the support member 1221 and a scale part 12262 that is attached to the support member 1222. The measured result by the position measurement apparatus 1226 includes information relating to the relative position between the support member 1221 and the support member 1222. Since the first driving system 121 is attached to the support member 1221 and the processing head 11 is attached to the support member 1222, the information relating to the relative position between the support member 1221 and the support member 1222 includes information relating to the relative position between the first driving system 121 and the processing head 11. Therefore, the control apparatus 5 properly determines the relative position between the first driving system 121 and the processing head 11. As a result, the control apparatus 5 properly changes the relative position between the first driving system 121 and the processing head 11 on the basis of the measured result by the position measurement apparatus 1227.

The driving member 1225 may move the processing head 11 relative to the workpiece W by changing the relative position between the first driving system 121 and the processing head 11 (typically, moving the processing head 11 relative to the first driving system 121) under the control of the control apparatus 5. The driving member 1225 may move the processing head 11 so that the relative positional relationship between the processing head 11 and the workpiece W is changed.

The driving member 1225 may reduce the vibration, which is transmitted between the first driving system 121 and the processing head 11 through the second driving system 122, by changing the relative position between the first driving system 121 and the processing head 11 by using the driving force under the control of the control apparatus 5. Namely, the driving member 1225 may damp the vibration, which is transmitted between the first driving system 121 and the processing head 11 through the second driving system 122, by using the driving force. Specifically, the driving member 1225 may reduce (damp) the vibration, which propagates (is transmitted) from the first driving system 121 to the processing head 11 through the second driving system 122, by using the driving force. Thus, the driving member 1225 (alternatively, the second driving system 122 including the driving member 1225) may be referred to as a vibration reduction apparatus or a vibration damping apparatus.

The driving member 1225 may convert the vibration of the air spring 1223 to the damping vibration by changing the relative position between the first driving system 121 and the processing head 11 by using the driving force. Namely, the driving member 1225 may convert the vibration, which is transmitted between the first driving system 121 and the processing head 11 through the second driving system 122, to the damping vibration by using the driving force. In this case, it can be said that the driving member 1225 reduces a relative displaced amount between the first driving system 121 and the processing head 11, which is caused by the vibration propagating from the first driving system 121 to the processing head 11, by using the driving force. Specifically, it can be said that the driving member 1225 reduces a relative displaced amount between a part of the first driving system 121 (namely, the tip arm part 12124) to which the second driving system 122 is attached and a part of the processing head 11 to which the second driving system 122 is attached, which is caused by the vibration propagating from the first driving system 121 to the processing head 11, by using the driving force. Incidentally, when the driving member 1225 is configured to convert the vibration of the air spring 1223 to the damping vibration, the second driving system 122 may not include the damper member 1224. However, even when the driving member 1225 is not configured to convert the vibration of the air spring 1223 to the damping vibration, the second driving system 122 may not include the damper member 1224. Moreover, the number of the air spring 1223, the number of the damper member 1224 and the number of the driving member 1225 may not be equal to one another.

The driving member 1225 may apply the driving force that acts along a direction including a component of the direction in which the air spring 1223 and / or the damper member 1224 applies the elastic force. In an example illustrated in FIG. 12, the driving member 1225 may apply the driving force that acts along a direction including a component of the Z axis direction, because the air spring 1223 and / or the damper member 1224 applies the elastic force along the Z axis direction. When the driving member 1225 generates the driving force that acts along the direction including the component of the direction in which the air spring 1223 and / or the damper member 1224 applies the elastic force, the driving member 1225 may be configured to convert the vibration of the air spring 1223 to the damping vibration by using this driving force. When the vibration of the air spring 1223 is converted to the damping vibration, the driving member 1225 may change a resonance frequency of the air spring 1223 by using the driving force. Typically, the driving member 1224 may increase the resonance frequency of the air spring 1223 by using the driving force.

An apparatus that actively reduces the vibration by using the driving member 1225 and the elastic member such as the air spring 1223 may be referred to as an active vibration isolation apparatus. Thus, the second driving system 122 may be referred to as an active vibration isolation apparatus. The active vibration isolation apparatus may be referred to as an AVIS (Active Vibration Isolation System).

### (1-4) Technical Effect of Processing SYSa

The above described processing system SYSa is capable of properly processing the workpiece W by using the processing light EL. Furthermore, the processing system SYSa is capable of properly measuring the workpiece W by using the measurement light ML Especially, in the first embodiment, since the light comb is used as the measurement light ML, a measurement accuracy of the workpiece W improves.

Furthermore, the processing system SYSa is capable of irradiating the workpiece W with the processing light EL and the measurement light ML through the same optical system (specifically, the common optical system 116). Especially, the processing system SYSa is capable of irradiating the workpiece W with the processing light EL and the measurement light ML through the same Galvano mirror 1161. Thus, the processing system SYSa is capable of changing the irradiation position of the processing light EL on the workpiece W and the irradiation position of the measurement light ML#2-2 on the workpiece W in synchronization or conjunction with each other. Namely, the processing system SYSa is capable of changing the irradiation position of the processing light EL on the workpiece W and the irradiation position of the measurement light ML#2-2 on the workpiece W in a state where the relative positional relationship between the irradiation position of the processing light EL on the workpiece W and the irradiation position of the measurement light ML#2-2 on the workpiece W is fixed. Thus, an alignment accuracy of the processing light EL and the measurement light ML by the processing system SYSa improves. For example, there is a small possibility that the irradiation position of the processing light EL on the workpiece W is largely away from the irradiation position of the measurement light ML#2-2 on the workpiece W.

### (2) Processing System SYSb in Second Embodiment

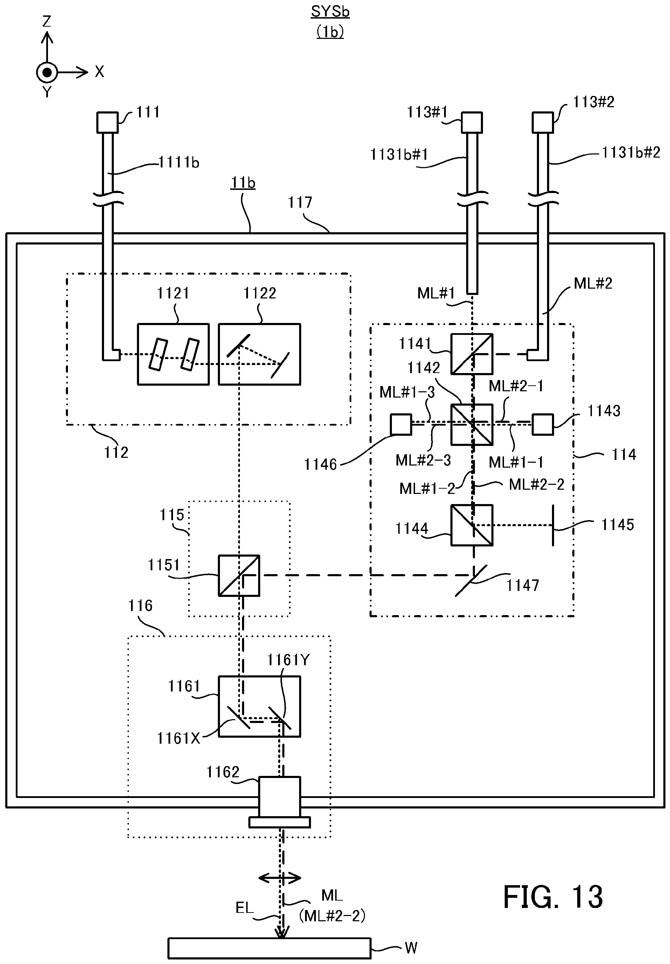

Next, a processing system SYS in a second embodiment (in the below described description, the processing system SYS in the second embodiment is referred to as a "processing system SYSb") will be described. The processing system SYSb in the second embodiment is different from the above described processing system SYSa in the first embodiment in that it includes a processing apparatus 1b instead of the processing apparatus 1. Another feature of the processing system SYSb may be same as another feature of the processing system SYSa. The processing apparatus 1b is different from the processing apparatus 1 in that it includes a processing head 11b instead of the processing head 11. Another feature of the processing apparatus 1b may be same as another feature of the processing apparatus 1. Therefore, in the below described description, with reference to FIG. 13, the processing head 11b in the second embodiment will be described. FIG. 13 is a cross-sectional view that illustrates one example of a structure of the processing head 11b in the second embodiment. Note that a detailed description of a component that is same as the already described component is omitted by assigning the same reference sing to it.

As illustrated in FIG. 13, the processing head 11b is different from the above described processing head 11 in which the processing light source 111 and the measurement light source 113 are disposed in the housing 117 in that at least one of the processing light source 111 and the measurement light source 113 are disposed outside the housing 117. FIG. 13 illustrates an example in which both of the processing light source 111 and the measurement light source 113 are disposed outside the housing 117. Another feature of the processing head 11b may be same as another feature of the processing head 11.

In this case, the processing head 11b emits, toward the workpiece W, the processing light EL that is emitted from the processing light source 111 disposed outside the processing head 11b and / or the measurement light ML that is emitted from the measurement light source 113 disposed outside the processing head 11b. Specifically, the processing light EL emitted from the processing light source 111 enters the processing optical system 112 in the housing 117 from the outside of the housing 117 through a light transmitting member 1111b such as an optical fiber. Similarly, the measurement light ML emitted from the measurement light source 113 enters the measurement optical system 114 in the housing 117 from the outside of the housing 117 through a light transmitting member 1131b such as an optical fiber. In the example illustrated in FIG. 13, the measurement light ML#1 emitted from the measurement light source 113#1 enters the measurement optical system 114 in the housing 117 from the outside of the housing 117 through a light transmitting member 1131b#1 and the measurement light ML#2 emitted from the measurement light source 113#2 enters the measurement optical system 114 in the housing 117 from the outside of the housing 117 through a light transmitting member 1131b#2.

Note that one of the processing light source 111 and the measurement light source 113 may be disposed in the housing 117 and the other one may be disposed outside the housing 117. Moreover, one of the measurement light sources 113#1 and 113#2 may be disposed in the housing 117 and the other one may be disposed outside the housing 117.

The processing system SYSb in the second embodiment described above is capable of achieving an effect that is same as the effect achievable by the processing system SYSa in the first embodiment described above. Furthermore, in the second embodiment, at least one of the processing light source 111 and the measurement light source 113 may not be disposed in the housing 117 of the processing head 11b. Namely, the processing head 11b may not include at least one of the processing light source 111 and the measurement light source 113. Thus, a downsizing and / or weight saving of the processing head 11b is achievable.

### (3) Processing System SYSc in Third Embodiment

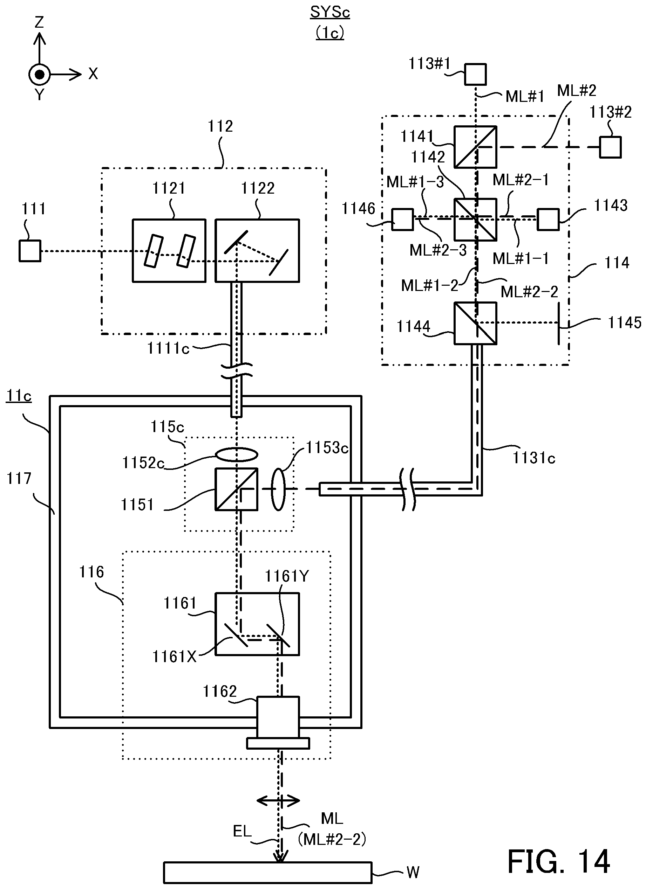

Next, a processing system SYS in a third embodiment (in the below described description, the processing system SYS in the third embodiment is referred to as a "processing system SYSc") will be described. The processing system SYSc in the third embodiment is different from the above described processing system SYSb in the second embodiment in that it includes a processing apparatus 1c instead of the processing apparatus 1b. Another feature of the processing system SYSc may be same as another feature of the processing system SYSb. The processing apparatus 1c is different from the processing apparatus 1b in that it includes a processing head 11c instead of the processing head 11b. Another feature of the processing apparatus 1c may be same as another feature of the processing apparatus 1b. Therefore, in the below described description, with reference to FIG. 14, the processing head 11c in the third embodiment will be described. FIG. 14 is a cross-sectional view that illustrates one example of a structure of the processing head 11c in the third embodiment.

As illustrated in FIG. 14, the processing head 11c is different from the above described processing head 11b in which both of the processing optical system 112 and the measurement optical system 114 are disposed in the housing 117 in that at least a part of the processing optical system 112 and / or the measurement optical system 114 are disposed outside the housing 117. FIG. 14 illustrates an example in which both of the processing optical system 112 and the measurement optical system 114 are disposed outside the housing 117. Furthermore, the processing head 11c is different from the processing head 11b in that it includes a combining optical system 115c instead of the combining optical system 115. Another feature of the processing head 11c may be same as another feature of the processing head 11b.

In this case, the processing head 11c emits, toward the workpiece W, the processing light EL that is emitted from the processing optical system 112 disposed outside the processing head 11c and / or the measurement light ML that is emitted from the measurement optical system 114 disposed outside the processing head 11c. Specifically, the processing light EL emitted from the processing optical system 112 enters the combining optical system 115c in the housing 117 from the outside of the housing 117 through a light transmitting member 1111c such as an optical fiber. Similarly, the measurement light ML (specifically, the measurement light ML#2-2) emitted from the measurement optical system 114 enters the combining optical system 115c in the housing 117 from the outside of the housing 117 through a light transmitting member 1131c such as an optical fiber.

The combining optical system 115c is different from the combining optical system 115 in that it includes a condensing lenses 1152c and 1153c. Another feature of the combining optical system 115c may be same as another feature of the combining optical system 115. The processing light EL entering the combining optical system 115c through the light transmitting member 1111c enters the beam splitter 1151 through the condensing lens 1152c. The condensing lens 1152c is disposed so that a front focal point of the condensing lens 1152c is located at an end surface (specifically, an end surface at the combining optical system 115 side) of the light transmitting member 1111c. As a result, the condensing lens 1152c converts the processing light EL that is a diverged light into a parallel light. Thus, the processing light EL converted into the parallel light enters the beam splitter 1151. The measurement light ML#2-2 entering the combining optical system 115c through the light transmitting member 1131c enters the beam splitter 1151 through the condensing lens 1153c. The condensing lens 1153c is disposed so that a front focal point of the condensing lens 1153c is located at an end surface (specifically, an end surface at the combining optical system 115 side) of the light transmitting member 1131c. As a result, the condensing lens 1153c converts the measurement light ML#2-2 that is a diverged light into a parallel light. Thus, the measurement light ML#2-2 converted into the parallel light enters the beam splitter 1151.

Note that at least a part of the processing optical system 112 may be disposed outside the housing 117 and the measurement optical system 114 may be disposed in the housing 117, and the processing optical system 112 may be disposed in the housing 117 and at least a part of the measurement optical system 114 may be disposed outside the housing 117. Moreover, at least a part of the processing optical system 112 may be disposed outside the housing 117 and at least a part of the measurement optical system 114 may be disposed outside the housing 117.

The processing system SYSc in the third embodiment described above is capable of achieving an effect that is same as the effect achievable by the processing system SYSb in the second embodiment described above. Furthermore, in the third embodiment, at least a part of the processing optical system 112 and / or the measurement optical system 114 may not be disposed in the housing 117 of the processing head 11c. Namely, the processing head 11c may not include at least a part of the processing optical system 112 and / or the measurement optical system 114. Thus, a further downsizing and / or weight saving of the processing head 11c is achievable.

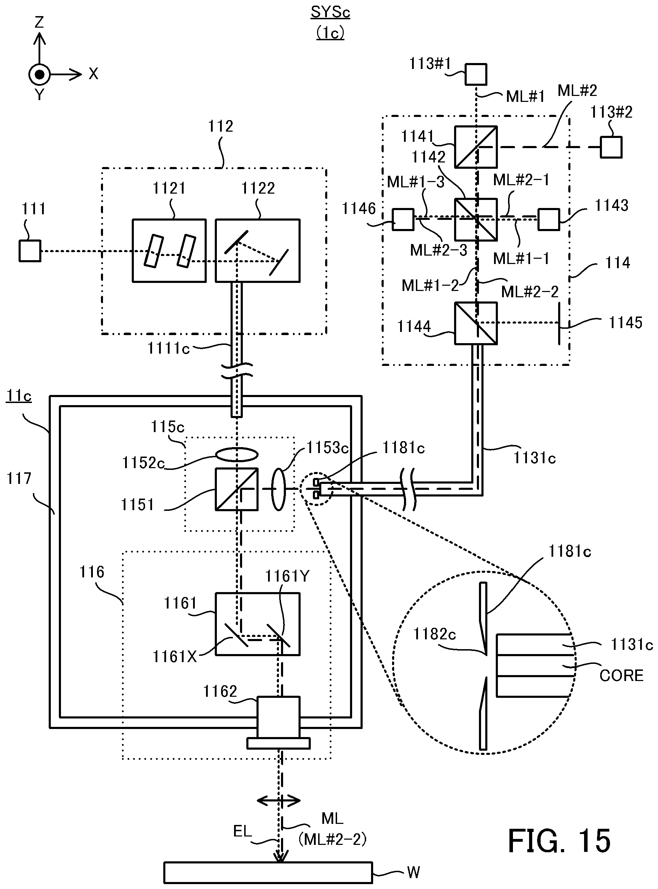

Incidentally, as illustrated in FIG. 15 that is a cross-sectional view illustrating another example of the structure of the processing head 11c in the third embodiment, the processing head 11c may include a spatial filter 1181c. The spatial filter 1181c may be a light shield plate at which an aperture 1182c is formed. The spatial filter 1181c is disposed so that the measurement light ML#2-2 from the light transmitting member 1131c enters the condensing lens 1153c through the aperture 1182c and the measurement light ML#2-2 from the condensing lens 1153c enters the light transmitting member 1131c through the aperture 1182c. A size (for example, a diameter) of the aperture 1182c of the spatial filter 1181c may be smaller than a size (for example, a diameter) of a core of the optical fiber of the light transmitting member 1131c. A surface of the spatial filter 1181c at the combining optical system 115 side may have a knife-edge shape or may have any shape. Note that a surface of the spatial filter 1181c at the light transmitting member 1131c side may have a knife-edge shape. The spatial filter 1181c may be disposed at the end surface (specifically, the end surface at the combining optical system 115 side) of the light transmitting member 1131c. In this case, since the front focal point of the condensing lens 1153 is located at the end surface of the light transmitting member 1131c, the spatial filter 1181c may be disposed at a front focal position of the condensing lens 1153c. In this case, a rear focal position of the condensing lens 1153c may match a front focal position of the fθ lens 1162. The spatial filter 1181c may be disposed at a position that is optically conjugate with the surface of the workpiece W. When the spatial filter 1181c is disposed in this manner, it is possible to reduce a stray light (a noise light) that is generated at an optical surface of at least one of the fθ lens 1162, the beam splitter 1151 and the condensing lens 1153c and then propagates toward the measurement optical system 114. Incidentally, when there is a position that is optically conjugate with the surface of the workpiece W (namely, an intermediate image point) between the end surface of the light transmitting member 1131c and the workpiece W, the spatial filter 1181c may be disposed at the position that is optically conjugate with the surface of the workpiece W between the end surface of the light transmitting member 1131c and the workpiece W. The spatial filter 1181c may be disposed at an optically Fourier transformed position relative to the workpiece W (typically, the incident pupil position and / or the emitting pupil position of the fθ lens 1162). However, the spatial filter 1181c may be disposed at a position that is different from the position optically conjugate with the surface of the workpiece W and the pupil position. Alternatively, the core of the optical fiber of the light transmitting member 1131c may be used as the spatial filter 1181c. Namely, the core of the optical fiber of the light transmitting member 1131c may serve as the spatial filter 1181c.

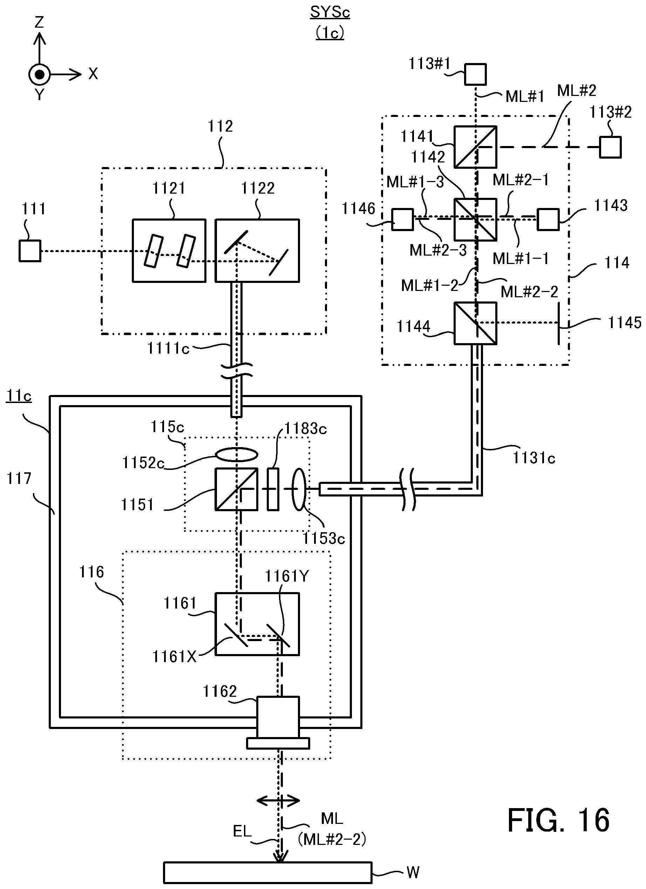

As illustrated in FIG. 16 that is a cross-sectional view illustrating another example of the structure of the processing head 11c in the third embodiment, the processing head 11c may include a dichroic filter 1183c when the wavelength of the processing light EL is different from the wavelength of the measurement light ML. The dichroic filter 1183c is a filter that reflects a light whose wavelength is the wavelength of the processing light EL and that allows a light whose wavelength is the wavelength of the measurement light ML to pass therethrough. The dichroic filter 1183c may be a transmissive filter or may be a reflective filter. The dichroic filter 1183c may be disposed on the optical path of the measurement light ML#2-2 between the end surface (specifically, the end surface at the combining optical system 115 side) of the light transmitting member 1131c and the beam splitter 1151. The dichroic filter 1183c may be disposed at a position at which the measurement light ML#2-2 is the parallel light between the end surface of the light transmitting member 1131c and the beam splitter 1151 (specifically, on the optical path of the measurement light ML#2-2 between the condensing lens 1153c and the polarization split surface of the beam splitter 1151). Even in this case, it is possible to reduce the stray light (the noise light) that is generated at the optical surface of at least one of the fθ lens 1162 and the beam splitter 1151 and then propagates toward the measurement optical system 114.

Alternatively, as described above, the combining optical system 115 may include the dichroic mirror instead of the beam splitter 1151. When the polarized direction of the processing light EL is the p polarized light with respect to a dichroic surface of the dichroic mirror and the polarized direction of the measurement light ML#2-2 is the s polarized light with respect to the dichroic surface of the dichroic mirror in a situation where the combining optical system 115 includes the dichroic mirror, the processing head 11c may include a polarized filter instead of the dichroic filter 1183c. The polarized filter is a filter that shields or reflects a light whose polarized direction is the polarized direction of the processing light EL and that allows a light whose polarized direction is the polarized direction of the measurement light ML#2-2 to pass therethrough. The polarized filter may be a transmissive filter or may be a reflective filter. The polarized filter may be disposed at a position at which the dichroic filter 1183c is disposed. Even in this case, it is possible to reduce the stray light (the noise light) that is generated at the optical surface of at least one of the fθ lens 1162 and the beam splitter 1151 and then propagates toward the measurement optical system 114.

Alternatively, the processing head 11c may include a light isolator instead of the dichroic filter 1183c and the polarized filter. The light isolator may be a light isolator that is dependent on the polarization or may be a light isolator that is independent from the polarization. The light isolator may be disposed at a position that is same as or near the position at which the dichroic filter 1183c is disposed. Even in this case, it is possible to reduce the stray light (the noise light) that is generated at the optical surface of at least one of the fθ lens 1162 and the beam splitter 1151 and then propagates toward the measurement optical system 114.

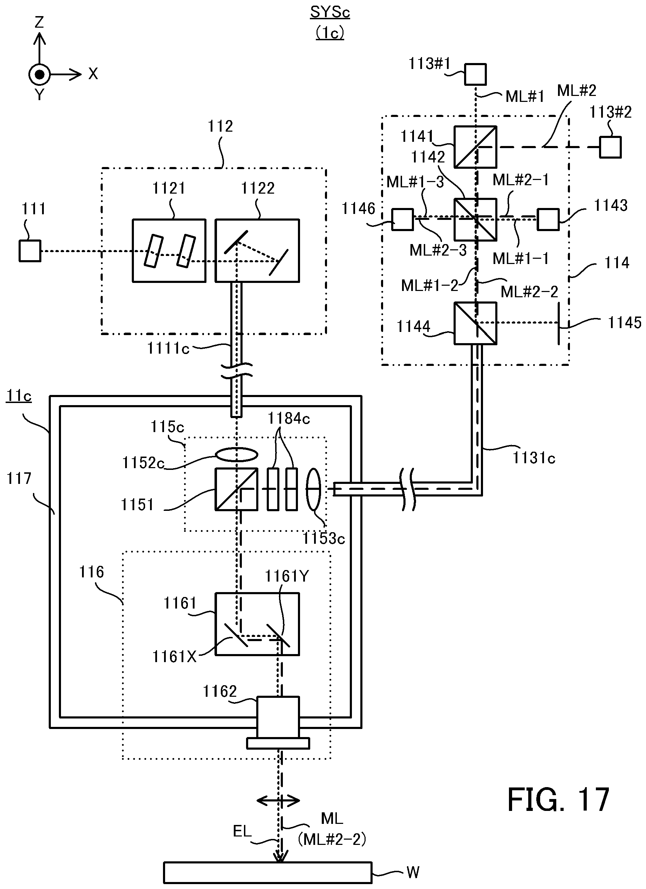

As illustrated in FIG. 17 that is a cross-sectional view illustrating another example of the structure of the processing head 11c in the third embodiment, the processing head 11c may include a wavelength plate 1184c. The wavelength plate 1184 is rotatable around an optical axis thereof or around an axis parallel to the optical axis thereof. The wavelength plate 1184 may be disposed on the optical path of the measurement light ML#2-2 between the condensing lens 1153c and polarization split surface of the beam splitter 1151. The processing head 11c may include a single wavelength plate 1184c or may include a plurality of wavelength plates 1184c. When the processing head 11c includes the plurality of wavelength plates 1184c, the plurality of wavelength plates 1184c may include at least one 1/2 wavelength plate 1184c and at least one 1/4 wavelength plate 1184c. In this case, an ellipticity that is one of a polarized state of the measurement light ML#2-2 may be adjusted by a rotation of the 1/4 wavelength plate 1184c around the axis. The polarized direction that is one of the polarized state of the measurement light ML#2-2 may be adjusted by a rotation of the 1/2 wavelength plate 1184c around the axis.

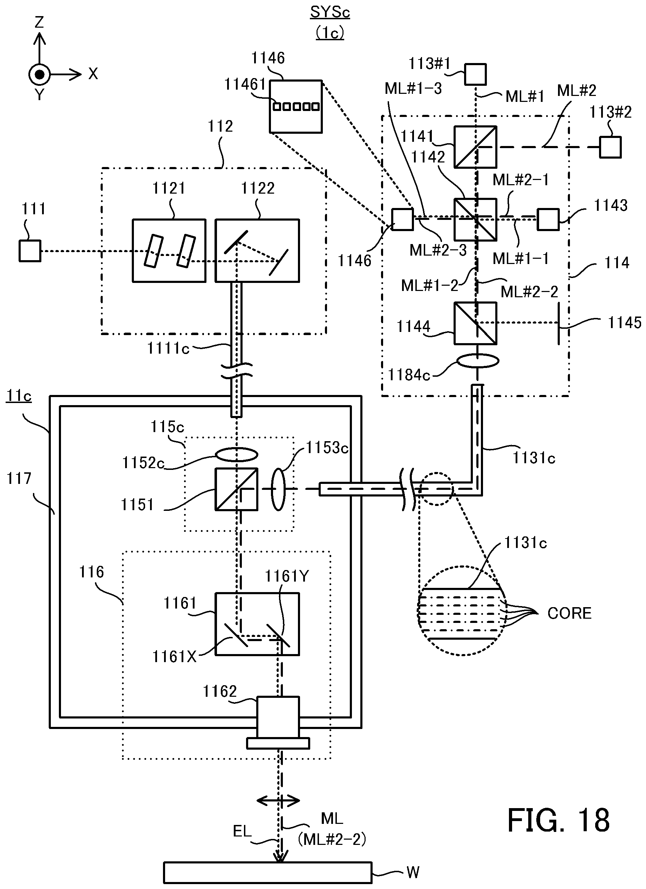

As illustrated in FIG. 18 that is a cross-sectional view illustrating another example of the structure of the processing head 11c in the third embodiment, the light transmitting member 1131c may include a plurality of cores each of which allows at least a part of the measurement light ML#2-2 and / or the measurement light ML#2-3 to pass therethrough. The plurality of cores are arranged in a plane that intersects with the propagating direction of the measurement light ML#2-2 and / or the measurement light ML#2-3. In order to include the plurality of cores, the light transmitting member 1131c may include an optical fiber bundle in which the plurality of optical fibers are bundled. Here, the optical fiber bundle in which the plurality of optical fibers are bundled may be a bundled fiber (what we call an image fiber) in which the plurality of optical fibers are bundled to have the same positional relationship at both ends. In order to include the plurality of cores, the light transmitting member 1131c may include an image fiber in which the plurality of cores and a clad are integrated (namely, an image fiber including the plurality of cores and the clad between the plurality of cores). The image fiber may be a light transmitting member in which an arrangement of the cores at an incident end is same as an arrangement of the cores at an emitting end (the positional relationship between the cores at the incident end is same as that of the cores at the emitting end) and that is configured to transmit a distribution of light amount at the incident end to the emitting end. When the light transmitting member 1131c includes the plurality of cores, the detector 1146 may be a detector in which a plurality of photoelectric conversion elements 11461 are arranged along at least one direction. For example, as illustrated in FIG. 18, the detector 1146 may be a detector in which the plurality of photoelectric conversion elements 11461 are arranged along one direction (namely, the plurality of photoelectric conversion elements 11461 are arranged in a one-dimensional manner). The detector 1146 may be a detector in which the plurality of photoelectric conversion elements 11461 are arranged along two directions (namely, the plurality of photoelectric conversion elements 11461 are arranged in a two-dimensional manner). Furthermore, the processing head 11c may include an optical system 1184c that makes the end surface (specifically, the end surface at the detector 1146 side) of the light transmitting member 1131c to be optically conjugate with a detection surface (namely, a surface at which the plurality of photoelectric conversion elements 11461 are arranged) of the detector 1146. In an example illustrated in FIG. 18, the optical system 1184c is disposed between the light emitting member 1131c and the beam splitter 1144, however, a disposing position of the optical system 1184c is not limited to this example. When the processing head 11c has the structure illustrated in FIG. 18, a surface measurement of the surface of the workpiece W may be performed, and as a result, a throughput relating to the measurement of the workpiece W improves.

Incidentally, it can be said that the processing system SYSc including the processing head 11c illustrated in FIG. 18 includes a measurement apparatus (in other words, a measuring apparatus) that measures the workpiece W by using the measurement light ML. Specifically, it can be said that the processing head 11c includes the measurement apparatus (in other words, the measuring apparatus) that includes the measurement light source 112, the measurement optical system 114 (especially, the mirror 1145 and the detector 1146), the light transmitting member 1131c, the common optical system 116 (especially, the fθ lens 1162) and the control apparatus 5.

In the processing head 11c illustrated in FIG. 14 to FIG. 18, a dioptric surface of the optical member located on the optical path of the measurement light ML#2-2 and / or the measurement light ML#2-3 may be disposed to be inclined with respect to a plane that intersects with an optical axis. For example, a dioptric surface of the polarized beam splitter 1151 may be disposed to be inclined with respect to a plane that intersects with an optical axis of an optical system including the polarized beam splitter 1151 (in this case, the combining optical system 115) on the optical path of the measurement light ML#2-2 and / or the measurement light ML#2-3. The dioptric surface of the polarized beam splitter 1151 may include at least one of an optical surface (an optical surface at the +X side in FIG. 14), to which the measurement light ML#2-2 enters and from which the measurement light ML#2-3 is emitted, of the optical surfaces of the polarized beam splitter 1151 and an optical surface (an optical surface at the -Z side in FIG. 14), from which the measurement light ML#2-2 is emitted and to which the measurement light ML#2-3 enters, of the optical surfaces of the polarized beam splitter 1151, for example. Moreover, in the processing head 11c illustrated in FIG. 16, a dioptric surface of the dichroic mirror 1183c (alternatively, the polarized filter or the light isolator, the same applies to this paragraph) may be disposed to be inclined with respect to a plane that intersects with an optical axis of an optical system including the dichroic mirror 1183c (for example, the combining optical system 115) on the optical path of the measurement light ML#2-2 and / or the measurement light ML#2-3. The dioptric surface of the dichroic mirror 1183c may include at least one of an optical surface (an optical surface at the +X side in FIG. 16), to which the measurement light ML#2-2 enters and from which the measurement light ML#2-3 is emitted, of the optical surfaces of the dichroic mirror 1183c and an optical surface (an optical surface at the -X side in FIG. 16), from which the measurement light ML#2-2 is emitted and to which the measurement light ML#2-3 enters, of the optical surfaces of the dichroic mirror 1183c, for example. Even in this case, it is possible to reduce the stray light (the noise light) that is generated at the optical surface of at least one of the fθ lens 1162 and the beam splitter 1151 and then propagates toward the measurement optical system 114. Note that a dioptric surface of the optical member located on the optical path of the processing light EL may be disposed to be inclined with respect to a plane that intersects with an optical axis in the processing head 11c illustrated in FIG. 14 to FIG. 18, although it is not illustrated for avoiding a redundant description.

In the processing head 11c illustrated in FIG. 14 to FIG. 18, at least one of a plurality of lenses of the fθ lens 1162 may be disposed so that an optical axis of at least one lens is inclined with respect to the optical axis of the fθ lens 1162. At least one of the plurality of lenses of the fθ lens 1162 may be disposed so that the optical axis of at least one lens is away from (namely, is eccentric from) the optical axis of the fθ lens 1162. Even in this case, it is possible to reduce the stray light (the noise light) that is generated at the optical surface of the fθ lens 1162 and then propagates toward the measurement optical system 114.

In the processing head 11c illustrated in FIG. 14 to FIG. 18, the common optical system 116 may include, as the fθ lens 1162, an achromatizing lens on which a chromatic aberration relating to the wavelength of the measurement light ML and the wavelength of the processing light EL is corrected. In the processing head 11c illustrated in FIG. 14 to FIG. 18, a focal length of the condensing lens 1152c may be different from a focal length of the condensing lens 1153c. As one example, when the wavelength of the measurement light ML is shorter than the wavelength of the processing light EL, the focal length of the condensing lens 1153c may be longer than the focal length of the condensing lens 1152c. However, the focal length of the condensing lens 1152c may be equal to the focal length of the condensing lens 1153c. In the processing head 11c illustrated in FIG. 14 to FIG. 18, an optical system including the fθ lens 1162 and the condensing lens 1153c may be configured to allow the surface of the workpiece W to be optically conjugate with the end surface (specifically, the end surface at the combining optical system 115) of the light transmitting member 1131c regarding the wavelength of the measurement light ML. In the processing head 11c illustrated in FIG. 14 to FIG. 18, an optical system including the fθ lens 1162 and the condensing lens 1152c may be configured to allow the surface of the workpiece W to be optically conjugate with the end surface (specifically, the end surface at the combining optical system 115) of the light transmitting member 1111c regarding the wavelength of the processing light EL. In the processing head 11c illustrated in FIG. 14 to FIG. 18, at least one of the condensing lenses 1152c and 1153c may be a zoom optical system. When the condensing lens 1152c is the zoom optical system, a light concentration position of the processing light EL is adjustable by the condensing lens 1152c independently from a light concentration position of the measurement light ML When the condensing lens 1153c is the zoom optical system, the light concentration position of the measurement light ML is adjustable by the condensing lens 1153c independently from the light concentration position of the processing light EL.

### (4) Processing System SYSd in Fourth Embodiment

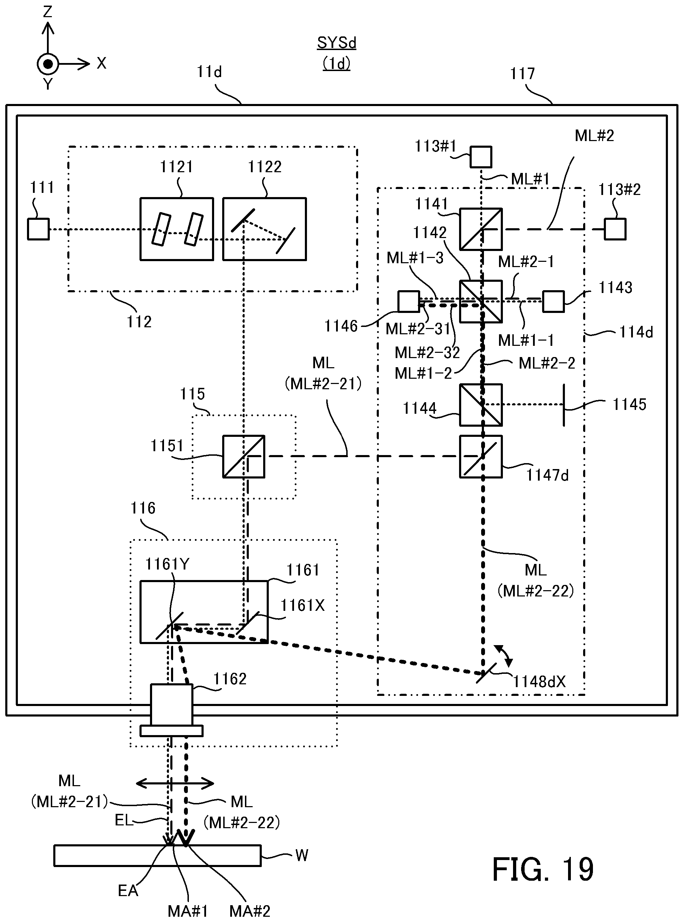

Next, a processing system SYS in a fourth embodiment (in the below described description, the processing system SYS in the fourth embodiment is referred to as a "processing system SYSd") will be described. The processing system SYSd in the fourth embodiment is different from the above described processing system SYSa in the first embodiment in that it includes a processing apparatus 1d instead of the processing apparatus 1. Another feature of the processing system SYSd may be same as another feature of the processing system SYSa. The processing apparatus 1d is different from the processing apparatus 1 in that it includes a processing head 11d instead of the processing head 11. Another feature of the processing apparatus 1d may be same as another feature of the processing apparatus 1. Therefore, in the below described description, with reference to FIG. 19, the processing head 11d in the fourth embodiment will be described. FIG. 19 is a cross-sectional view that illustrates one example of a structure of the processing head 11d in the fourth embodiment.

As illustrated in FIG. 19, the processing head 11d is different from the processing head 11 in that it includes a measurement optical system 114d instead of the measurement optical system 114. Another feature of the processing head 11d may be same as another feature of the processing head 11.

The measurement optical system 114d is different from the measurement optical system 114 in that it emits a plurality of measurement lights ML. In order to emit the plurality of measurement lights ML, the measurement optical system 114d is different from the measurement optical system 114 in that it includes a beam splitter 1147d and a X scanning mirror 1148dX instead of the mirror 1147. Another feature of the measurement optical system 114d may be same as another feature of the measurement optical system 114.

In the fourth embodiment, the measurement light ML#2-2 emitted from the beam splitter 1144 enters the beam splitter 1147d. The beam splitter 1147d emits, toward the combining optical system 115, a measurement light ML#2-21 that is a part of the measurement light ML#2-2 entering the beam splitter 1147d. The workpiece W is irradiated with the measurement light ML#2-21 through the combining optical system 115 and the common optical system 116. Thus, the measurement light ML#2-21 in the fourth embodiment reaches the workpiece W through an optical path that is same as that of the measurement light ML#2-2 in the first embodiment.

At least a part of a light emitted from the workpiece W due to the irradiation of the measurement light ML#2-21 (for example, at least a part of the reflection light, the scattering light, the diffraction light and / or the transmitted light, hereinafter, it is referred to as a "measurement light ML#2-31") enters the common optical system 116. The measurement light ML#2-31 entering the common optical system 116 enters the combining optical system 115 through the fθ lens 1162 and the Galvano mirror 1161. The beam splitter 1151 of the combining optical system 115 emits, toward the measurement optical system 114, the measurement light ML#2-31 entering the beam splitter 1151. The measurement light ML#2-31 entering from the combining optical system 115 to the measurement optical system 114 enters the detector 1146 through the beam splitter 1147d, the beam splitter 1144 and the beam splitter 1142. Thus, the measurement light ML#2-31 in the fourth embodiment reaches the detector 1146 through an optical path that is same as that of the measurement light ML#2-3 in the first embodiment.

On the other hand, the beam splitter 1147d emits, toward the X scanning mirror 1148dX, a measurement light ML#2-22 that is another part of the measurement light ML#2-2 entering the beam splitter 1147d. The X scanning mirror 1148dX changes an irradiation position of the measurement light ML#2-22 on the workpiece W by deflecting the measurement light ML#2-22. Specifically, the X scanning mirror 1148dX deflects the measurement light ML#2-22 by swinging or rotating (namely, changing the angle of the X scanning mirror 1148dX relative to the optical path of the measurement light ML#2-22) so as to change the irradiation position along the X axis direction of the measurement light ML#2-22 on the workpiece W.

The measurement light ML#2-22 emitted from the X scanning mirror 1148dX enters the Y scanning mirror 1161Y of the common optical system 116. The Y scanning mirror 1161Y deflects the measurement light ML#2-22 by swinging or rotating (namely, changing the angle of the Y scanning mirror 1161Y relative to the optical path of the measurement light ML#2-22) so as to change the irradiation position along the Y axis direction of the measurement light ML#2-22 on the workpiece W. The workpiece W is irradiated with the measurement light ML#2-22 emitted from the Y scanning mirror 1161Y through the fθ lens 1162. As a result, the common optical system 116 emits the plurality of measurement lights ML (in an example illustrated in Fig. 19, two measurement lights ML#2-21 and ML#2-22) toward the workpiece W. Here, the Y scanning mirror 1161Y may be referred to as a first irradiation position change optical system and the X scanning mirror 1148dX may be referred to as a second irradiation position change optical system that is disposed between the combining optical system 115 and the measurement light source 113.

The common optical system 116 may emit the plurality of measurement lights ML toward different positions on the workpiece W, respectively. Namely, the common optical system 116 may emit the plurality of measurement lights ML so that the irradiation position of the measurement light ML#2-21 on the workpiece W is different from the irradiation position of the measurement light ML#2-22 on the workpiece W. The common optical system 116 may emit the plurality of measurement lights ML so that a position of the irradiation area MA#1 that is irradiated with the measurement light ML#2-21 is different from a position of the irradiation area MA#2 that is irradiated with the measurement light ML#2-22. Typically, the X scanning mirror 1161X, which is configured to change the irradiation position of the measurement light ML#2-21 independently from the irradiation position of the measurement light ML#2-22, and the X scanning mirror 1148dX, which is configured to change the irradiation position of the measurement light ML#2-22 independently from the irradiation position of the measurement light ML#2-21, may deflect the measurement lights ML#2-21 and ML#2-22, respectively, so that the common optical system 116 may emit the plurality of measurement lights ML toward different positions on the workpiece W, respectively.

At least a part of a light emitted from the workpiece W due to the irradiation of the measurement light ML#2-22 (for example, at least a part of the reflection light, the scattering light, the diffraction light and / or the transmitted light, hereinafter, it is referred to as a "measurement light ML#2-32") enters the common optical system 116. The measurement light ML#2-32 entering the common optical system 116 enters the X scanning mirror 1148dX through the fθ lens 1162 and the Y scanning mirror 1161Y. The measurement light ML#2-32 entering the X scanning mirror 1148dX enters the detector 1146 through the X scanning mirror 1148dX, the beam splitter 1147d, the beam splitter 1144 and the beam splitter 1142. Thus, the detector 1146 detects an interfering light generated by an interference between the measurement light ML#1-3 and the measurement light ML#2-32.

Note that the measurement light ML#2-22 may not enter the Y scanning mirror 1161Y of the common optical system 116. In this case, the another Y scanning mirror (not illustrated) that is disposed on the optical path of the measurement light ML#2-22 near the Y scanning mirror 1161Y and that swings or rotates so as to change the irradiation position along the Y axis direction of the measurement light ML#2-22 on the workpiece W may be provided. This another Y scanning mirror may change an angle of another Y scanning mirror relative to the optical path of the measurement light ML#2-22. In this case, the measurement light ML#2-21 may not be used. Namely, the common optical system 116 is not essential in the fourth embodiment.

The control apparatus 5 calculates the state of the workpiece W on the basis of the detected result by the detector 1143 and the detected result by the detector 1146. Here, as described above, the detector 1146 detects a plurality of interfering lights in the fourth embodiment. The control apparatus 5 may use the detected results of the plurality of interfering lights for different usages, respectively. For example, the control apparatus 5 may use the detected result of the first interfering light (for example, the interfering light generated by the interference between the measurement light ML#1-3 and the measurement light ML#2-31) for a first usage. Namely, the control apparatus 5 may calculate the state of the workpiece W that is used for the first use on the basis of the detected results of the first interfering light. In this case, the measurement light ML#2-31 corresponds to the measurement light ML that is used for the first usage. Furthermore, for example, the control apparatus 5 may use the detected result of the detected result of the second interfering light (for example, the interfering light generated by the interference between the measurement light ML#1-3 and the measurement light ML#2-32) for a first usage. Namely, the control apparatus 5 may calculate the state of the workpiece W that is used for the second usage that is different from the first use on the basis of the detected results of the second interfering light.

A usage for determining the shape of the workpiece W is one example of the first usage A usage for determining the position of the workpiece W (especially, the relative position of the workpiece W relative to the processing head 11) is one example of the second usage. An information relating the position of the workpiece W is mainly used to control the position of the processing head 11 relative to the workpiece W, the irradiation position of the processing light EL on the workpiece W and / or the irradiation position of the measurement light ML on the workpiece W. Thus, a usage for controlling the position of the processing head 11 relative to the workpiece W, the irradiation position of the processing light EL on the workpiece W and / or the irradiation position of the measurement light ML on the workpiece W on the basis of the position of the workpiece W (especially, the relative position of the workpiece W relative to the processing head 11) is one example of the second usage. In this case, the control apparatus 5 may determine the shape of the workpiece W on the basis of the detected result of the first interfering light (for example, the interfering light generated by the interference between the measurement light ML#1-3 and the measurement light ML#2-31). Furthermore, the control apparatus 5 may control the position of the processing head 11 relative to the workpiece W, the irradiation position of the processing light EL on the workpiece W and / or the irradiation position of the measurement light ML on the workpiece W on the basis of the detected result of the second interfering light (for example, the interfering light generated by the interference between the measurement light ML#1-3 and the measurement light ML#2-32) so that the desired position of the workpiece W the shape of which is determined is irradiated with the processing light EL and / or the measurement light ML.

The processing system SYSd in the fourth embodiment described above is capable of achieving an effect that is same as the effect achievable by the processing system SYSa in the first embodiment described above. Furthermore, the processing system SYSd in the fourth embodiment is capable of irradiating the workpiece W with the plurality of measurement lights ML for different usages. Thus, the processing system SYSd is capable of properly processing the workpiece W on the basis of the detected results of the plurality of measurement lights ML (namely, the detected results of the plurality of interfering lights).

Note that the measurement optical system 114d may include a mirror that is insertable to and extractable from the optical path of the measurement light ML#2-2 instead of the beam splitter 1147d. The mirror may reflect the measurement light ML#2-2 toward the combining optical system in a state where it is inserted to (namely, disposed on) the optical path of the measurement light ML#2-2. On the other hand, the mirror does not affect the optical path of the measurement light ML#2-2 in a state where it is away from the optical path of the measurement light ML#2-2. In this case, the X scanning mirror 1148dX may be disposed so that the measurement light ML#2-2 from the beam splitter 1144 enters the X scanning mirror 1148dX.

Moreover, in the above described description, the measurement optical system 114d includes the X scanning mirror 1148dX. This is because the Y scanning mirror 1161Y is disposed to be closer to the workpiece W than the X scanning mirror 1161X in the Galvano mirror 1161 and the measurement light ML#2-22 emitted from the X scanning mirror 1148dX enters the Y scanning mirror 1161Y of the Galvano mirror 1161. However, when the X scanning mirror 1161X is disposed to be closer to the workpiece W than the Y scanning mirror 1161Y in the Galvano mirror 1161, the measurement optical system 114d may include a Y scanning mirror instead of the X scanning mirror 1148dX. The Y scanning mirror of the measurement optical system 114d deflects the measurement light ML#2-22 by swinging or rotating (namely, changing the angle of the Y scanning mirror relative to the optical path of the measurement light ML#2-22) so as to change the irradiation position along the Y axis direction of the measurement light ML#2-22 on the workpiece W. Furthermore, the measurement light ML#2-22 emitted from the Y scanning mirror of the measurement optical system 114d may enter the X scanning mirror 1161X of the Galvano mirror 1161.

Here, the measurement light ML#2-22 passes through the X scanning mirror 1148dX and the processing light EL does not pass through the X scanning mirror 1148dX. Thus, a positional relationship between the irradiation position of the processing light EL and the irradiation position of the measurement light ML#2-22 may be changed by swinging or rotating the X scanning mirror 1148dX. The positional relationship between the irradiation position of the processing light EL and the irradiation position of the measurement light ML#2-22 may be changed by swinging or rotating the X scanning mirror 1148dX without changing the positional relationship between the irradiation position of the processing light EL and the irradiation position of the measurement light ML#2-22. Moreover, the Y scanning mirror 1161Y may be referred to as a first irradiation position change optical system that changes the irradiation position of the processing light EL on the workpiece W and the X scanning mirror 1148dX may be referred to as a second irradiation position change optical system that changes the irradiation position of the measurement light ML#2-22 on the workpiece W.

Incidentally, even in the fourth embodiment, an element described in at least one of the second embodiment to the third embodiment described above may be used. The element described in the second embodiment includes an element relating to the arrangement manner in which at least one of the processing light source 111 and the measurement light source 113 is disposed outside the housing 117. The element described in the second embodiment includes an element relating to the arrangement manner in which at least one of the processing optical system 112 and the measurement optical system 114 is disposed outside the housing 117.

### (5) Processing System SYSe in Fifth Embodiment

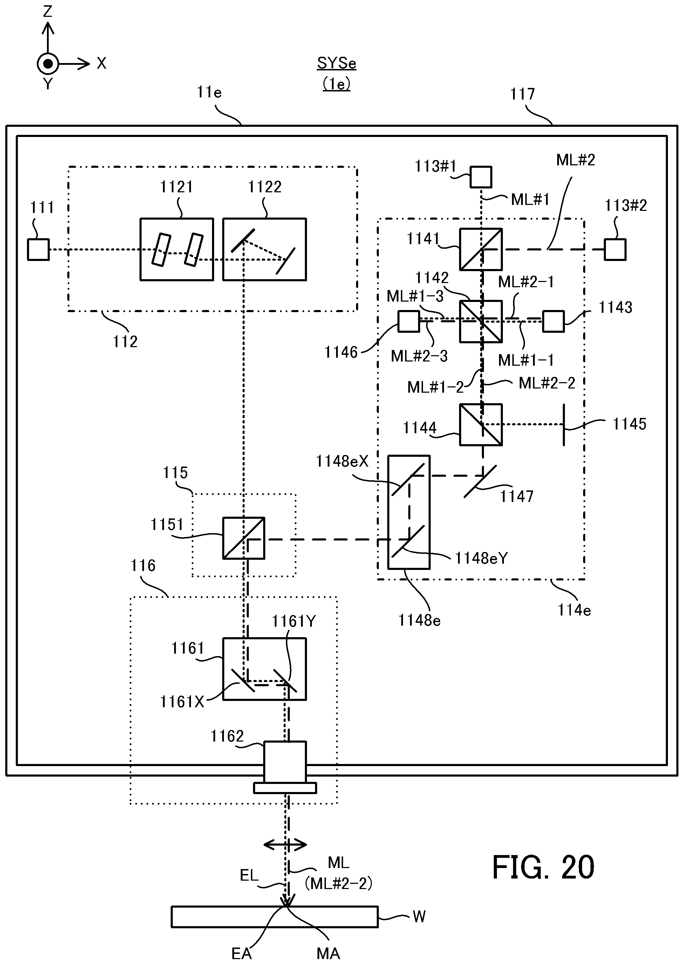

Next, a processing system SYS in a fifth embodiment (in the below described description, the processing system SYS in the fifth embodiment is referred to as a "processing system SYSe") will be described. The processing system SYSe in the fifth embodiment is different from the above described processing system SYSa in the first embodiment in that it includes a processing apparatus 1e instead of the processing apparatus 1. Another feature of the processing system SYSe may be same as another feature of the processing system SYSa. The processing apparatus 1e is different from the processing apparatus 1 in that it includes a processing head 11e instead of the processing head 11. Another feature of the processing apparatus 1e may be same as another feature of the processing apparatus 1. Therefore, in the below described description, with reference to FIG. 20, the processing head 11e in the fifth embodiment will be described. FIG. 20 is a cross-sectional view that illustrates one example of a structure of the processing head 11e in the fifth embodiment.

As illustrated in FIG. 20, the processing head 11e is different from the processing head 11 in that it includes a measurement optical system 114e instead of the measurement optical system 114. Another feature of the processing head 11e may be same as another feature of the processing head 11.

The measurement optical system 114e is different from the measurement optical system 114 in that it includes a Galvano mirror 1148e. Another feature of the measurement optical system 114e may be same as another feature of the measurement optical system 114.

In the fifth embodiment, the measurement light ML#2-2 emitted from the beam splitter 1144 (namely, the measurement light ML#2-2 emitted through the mirror 1147) enters the Galvano mirror 1148e. The Galvano mirror 1148e changes the irradiation position of the measurement light ML#2-2 on the workpiece W by deflecting the measurement light ML#2-2 (namely, changing the emitting angle). For example, the Galvano mirror 1148e includes a X scanning mirror 1148eX and a Y scanning mirror 1148eY. Each of the X scanning mirror 1148eX and the Y scanning mirror 1148eY is an inclined angle variable mirror whose angle relative to the optical path of the measurement light ML#2-2 entering the Galvano mirror 1148e is changed. The X scanning mirror 1148eX deflects the measurement light ML#2-2 by swinging or rotating (namely, changing the angle of the X scanning mirror 1148eX relative to the optical path of the measurement light ML#2-2) so as to change the irradiation position along the X axis direction of the measurement light ML#2-2 on the workpiece W. The Y scanning mirror 1148eY deflects the measurement light ML#2-2 by swinging or rotating (namely, changing the angle of the Y scanning mirror 1148eY relative to the optical path of the measurement light ML#2-2) so as to change the irradiation position along the Y axis direction of the measurement light ML#2-2on the workpiece W.

The Galvano mirror 1148e emits the deflected measurement light ML#2-2 toward the combining optical system 115. The workpiece W is irradiated with the measurement light ML#2-2 thorough the combining optical system 115 and the common optical system 116. Furthermore, the measurement light ML#2-3, which is at least a part of the light emitted from the workpiece W due to the irradiation of the measurement light ML#2-2, enters the Galvano mirror 1148e of the measurement optical system 114e thorough the combining optical system 115 and the common optical system 116. The measurement light ML#2-3 entering the Galvano mirror 1148e enters the detector 1146 through the Galvano mirror 1148e, the mirror 1147, the beam splitter 1144 and the beam splitter 1142.

Note that the measurement optical system 114e may include a position adjustment optical system (not illustrated) in addition to or instead of the Galvano mirror 1148e. This position adjustment optical system may include a parallel plate that is configured to inclined with respect to the propagating direction of the measurement light ML#2-2 in order to set a position of the measurement light ML#2-2 from the measurement optical system 114e in a plane perpendicular to the optical path of the measurement light ML#2-2 to be any position.

The processing system SYSe in the fifth embodiment described above is capable of achieving an effect that is same as the effect achievable by the processing system SYSa in the first embodiment described above. Furthermore, the processing system SYSe in the fifth embodiment includes the Galvano mirror 1148e that is configured to deflect the measurement light ML#2-2 without deflecting the processing light EL. Thus, the processing system SYSe is capable of moving the irradiation position of the measurement light ML#2-2 on the workpiece W relative to the irradiation position of the processing light EL on the workpiece W. The processing system SYSe is capable of moving the irradiation area MA that is irradiated with the measurement light ML#2-2 relative to the irradiation area EA that is irradiated with the processing light EL. In this manner, the processing system SYSe is capable of changing the irradiation position of the measurement light ML#2-2 on the workpiece W and the irradiation position of the processing light EL on the workpiece W independently from each other. The processing system SYSe is capable of changing the position of the irradiation area MA and the position of the irradiation area EA.

Incidentally, even in the fifth embodiment, an element described in at least one of the second embodiment to the fourth embodiment described above may be used. The element described in the fourth embodiment includes an element relating to the emission of the plurality of measurement lights ML.

### (6) Processing System SYSf in Sixth Embodiment

Next, a processing system SYS in a sixth embodiment (in the below described description, the processing system SYS in the sixth embodiment is referred to as a "processing system SYSf') will be described. The processing system SYSf in the sixth embodiment is different from the above described processing system SYSa in the first embodiment in that it includes a processing apparatus 1f instead of the processing apparatus 1. Another feature of the processing system SYSf may be same as another feature of the processing system SYSa. The processing apparatus 1f is different from the processing apparatus 1 in that it includes a processing head 11f instead of the processing head 11. Another feature of the processing apparatus 1f may be same as another feature of the processing apparatus 1. The processing head 11f is different from the processing head 11 in that the common processing system 116 is attachable to and detachable from the processing head 11f. The processing head 11f is different from the processing head 11 in that the common processing system 116 is replaceable. Another feature of the processing head 11f may be same as another feature of the processing head 11.

One optical system candidate 118f, which is selected from a plurality of optical system candidates 118f each of which is usable as the common optical system 116, may be attached to the processing head 11f. For example, one optical system candidate 118f, which is selected on the basis of the processing aspect of the processing system SYSf from the plurality of optical system candidates 118f, may be attached to the processing head 11f.

For example, the plurality of optical system candidates 118f may include at least two optical system candidates 118f between which an emitting direction of the processing light EL and / or the measurement light ML relative to an optical axis (especially, an optical axis at an incident side of the processing light EL and / or the measurement light ML) of the optical system candidate 118f is different. In this case, one optical system candidate 118f of the plurality of optical system candidates 118f, which is configured to emit the processing light EL and / or the measurement light ML toward a direction suitable for the processing aspect of the processing system SYSf, may be attached to the processing head 11f.

For example, the plurality of optical system candidates 118f may include at least two optical system candidates 118f between which a distance from a position at which the combining optical system 115 emits the processing light EL and / or the measurement light ML to a position at which the optical system candidate 118 emits the processing light EL and / or the measurement light ML is different. In this case, one optical system candidate 118f of the plurality of optical system candidates 118f, in which the distance from the position at which the combining optical system 115 emits the processing light EL and / or the measurement light ML to the position at which the optical system candidate 118 emits the processing light EL and / or the measurement light ML is the distance suitable for the processing aspect of the processing system SYSf, may be attached to the processing head 11f.

For example, the plurality of optical system candidates 118f may include at least two optical system candidates 118f between which a distance from a position at which the processing optical system 112 emits the processing light EL to the position at which the optical system candidate 118 emits the processing light EL (namely, a distance from the processing optical system 112 to the position at which the optical system candidate 118 emits the processing light EL) is different. In this case, one optical system candidate 118f of the plurality of optical system candidates 118f, in which the distance from the position at which the processing optical system 112 emits the processing light EL to the position at which the optical system candidate 118 emits the processing light EL is the distance suitable for the processing aspect of the processing system SYSf, may be attached to the processing head 11f.

For example, the plurality of optical system candidates 118f may include at least two optical system candidates 118f between which a distance from a position at which the measurement optical system 114 emits the measurement light ML to the position at which the optical system candidate 118 emits the measurement light ML (namely, a distance from the measurement optical system 114 to the position at which the optical system candidate 118 emits the measurement light M) is different. In this case, one optical system candidate 118f of the plurality of optical system candidates 118f, in which the distance from the position at which the processing optical system 112 emits the processing light EL to the position at which the optical system candidate 118 emits the processing light EL is the distance suitable for the processing aspect of the processing system SYSf, may be attached to the processing head 11f.

For example, the plurality of optical system candidates 118f may include at least two optical system candidates 118f between which a distance from a position at which the processing light EL and / or the measurement light ML enters the optical system candidate 118f to a position at which the processing light EL and / or the measurement light ML is emitted from the optical system candidate 118f (namely, a distance between an incident surface of the optical system candidate 118f to an emitting surface of the optical system candidate 118f) is different. In this case, one optical system candidate 118f of the plurality of optical system candidates 118f, in which the distance from the position at which the processing light EL and / or the measurement light ML enters the optical system candidate 118f to the position at which the processing light EL and / or the measurement light ML is emitted from the optical system candidate 118f is the distance suitable for the processing aspect of the processing system SYSf, may be attached to the processing head 11f.

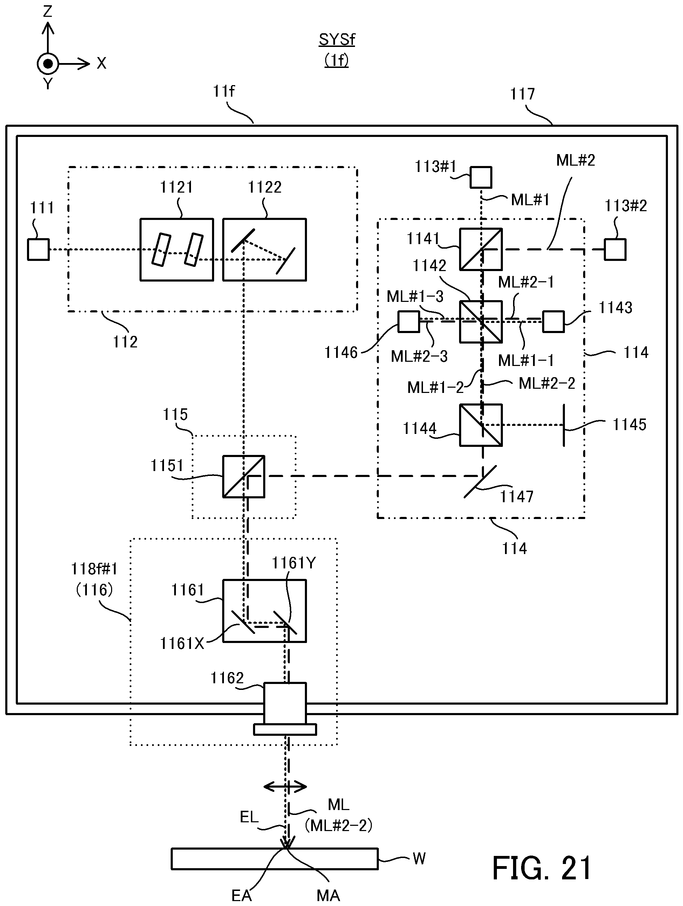

Next, with reference to FIG. 21 to FIG. 23, one example of the optical system candidate 118f will be described.

FIG. 21 is a cross-sectional view that illustrates the processing head 11f to which a first optical system candidate 118f#1 is attached as the common optical system 116. As illustrated in FIG. 21, the first optical system candidate 118f#1 is an optical system that includes the Galvano mirror 1161 and the fθ lens 1162. Namely, the first optical system candidate 118f#1 is same as the common optical system 116 in the first embodiment that is described with reference to FIG. 3 and so on. The first optical system candidate 118f#1 is configured to serve as the common optical system 116 that is configured to emit the processing light EL and / or the measurement light ML along an optical path of the first optical system candidate 118f#1 at the incident side. The first optical system candidate 118f#1 is configured to serve as the common optical system 116 that is configured to emit the processing light EL and / or the measurement light ML along the Z axis direction, because the optical path of the first optical system candidate 118f#1 at the incident side is parallel to the Z axis. This first optical system candidate 118f#1 may be selected as the common optical system 116 that should be attached to the processing head 11f when the processing system SYSf processes the surface, which intersects with the Z axis, of the surfaces of the workpiece W, for example.

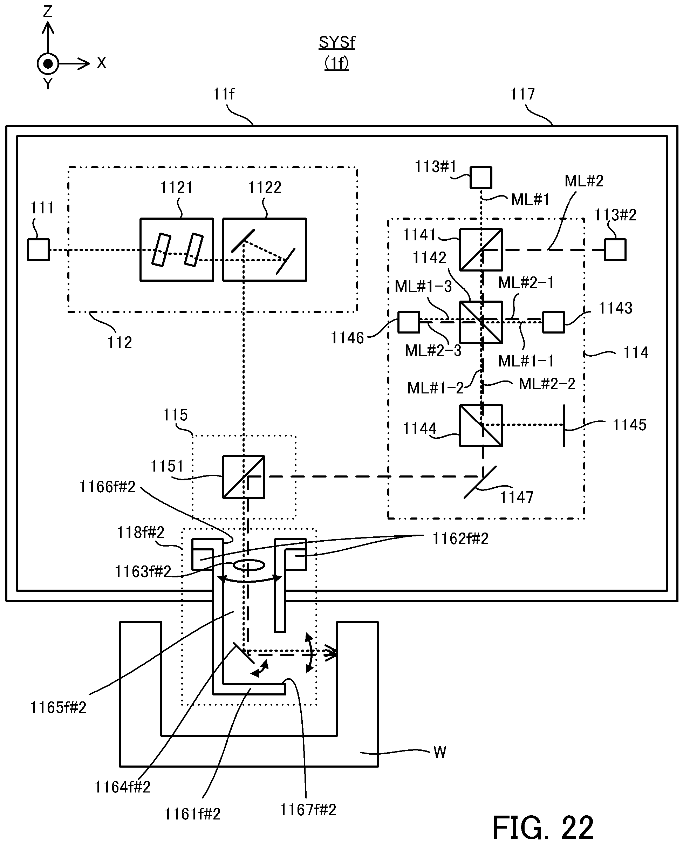

FIG. 22 is a cross-sectional view that illustrates the processing head 11f to which a second optical system candidate 118f#2 is attached as the common optical system 116. As illustrated in FIG. 22, the second optical system candidate 118f#2 is an optical system that includes a housing 1161f#2, an actuator 1162f#2, a condensing lens 1163f#2 and a scanning mirror 1164f#2. The housing 1161f#2 is a cylindrical member in which a space 1165f#2 extending along the Z axis direction is formed. The actuator 1162f#2 operates to rotate the housing 1161f#2 around the Z axis. The condensing lens 1163f#2 and the scanning mirror 1164f#2 are disposed in the space 1165f#2 of the housing 1161f#2. The processing light EL and / or the measurement light ML emitted from the combining optical system 115 enters the space 1165f#2 from an aperture 1166f#2 formed at an upper part of the housing 1161f#2. The processing light EL and / or the measurement light ML entering the space 1165f#2 enters the scanning mirror 1164f#2 through the condensing lens 1163f#2. The scanning mirror 1164f#2 reflects the processing light EL and / or the measurement light ML, which propagates along the Z axis direction, toward a direction intersecting with the Z axis direction. The second optical system 118f#2 is configured to serve as the common optical system 116 that is configured to emit the processing light EL and / or the measurement light ML along a direction intersecting with an optical path of the second optical system candidate 118f#2 at the incident side, because the optical path of the second optical system candidate 118f#2 at the incident side is parallel to the Z axis. In this case, the scanning mirror 1164f#2 swings or rotates so as to change the emitting direction of the processing light EL and / or the measurement light ML from the second optical system candidate 118f#2 around the X axis or the Y axis. The processing light EL and / or the measurement light ML emitted from the scanning mirror 1164f#2 is emitted toward an outside of the second optical system candidate 118f#2 through an aperture 1167f#2 formed at a side part of the housing 1161f#2. Here, the emitting direction of the processing light EL and / or the measurement light ML from the second optical system candidate 118f#2 is changed around the Z axis by the actuator 1162f#2 rotating the housing 1161f#2 around the Z axis. This second optical system candidate 118f#2 may be selected as the common optical system 116 that should be attached to the processing head 11f when the processing system SYSf processes the surface, which is along the Z axis, of the surfaces of the workpiece W, for example. The second optical system candidate 118f#2 may be selected as the common optical system 116 that should be attached to the processing head 11f when the processing system SYSf processes the workpiece W to form a cylindrical hole at the workpiece W, for example. The second optical system candidate 118f#2 may be selected as the common optical system 116 that should be attached to the processing head 11f when the workpiece W is processed to form a structure that surrounds the common optical system 116, for example.

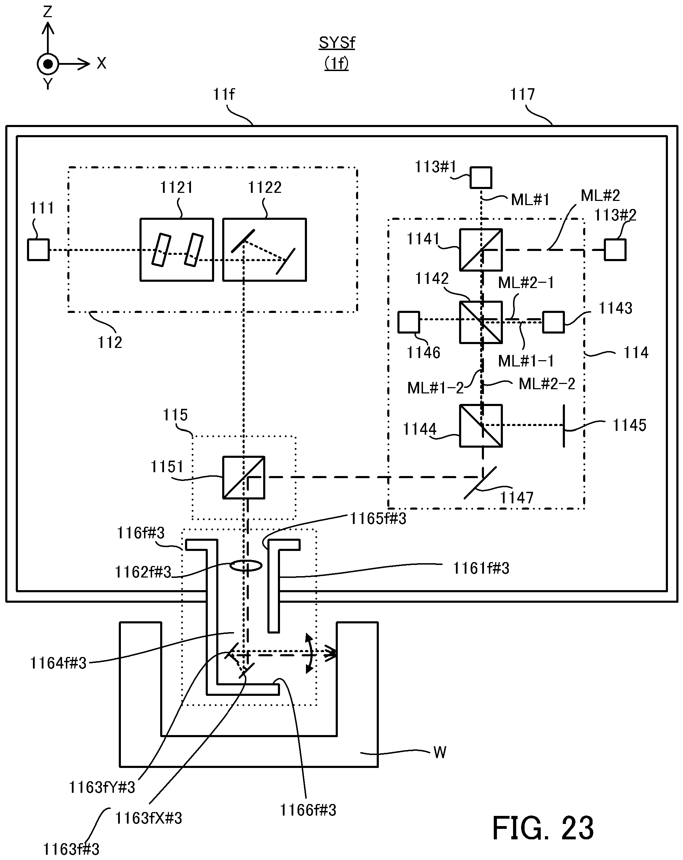

FIG. 23 is a cross-sectional view that illustrates the processing head 11f to which a third optical system candidate 118f#3 is attached as the common optical system 116. As illustrated in FIG. 23, the third optical system candidate 118f#3 is an optical system that includes a housing 1161f#3, a condensing lens 1162f#3 and a Galvano mirror 1163f#3. The housing 1161f#3 is a cylindrical member in which a space 1164f#3 extending along the Z axis direction is formed. The condensing lens 1162f#3 and the Galvano mirror 1163f#3 are disposed in the space 1164f#3 of the housing 1161f#3. The processing light EL and / or the measurement light ML emitted from the combining optical system 115 enters the space 1164f#3 from an aperture 1165f#3 formed at an upper part of the housing 1161f#2. The processing light EL and / or the measurement light ML entering the space 1164f#3 enters the Galvano mirror 1163f#3 through the condensing lens 1162f#3. The Galvano mirror 1163f#3 reflects the processing light EL and / or the measurement light ML, which propagates along the Z axis direction, toward a direction intersecting with the Z axis direction. The third optical system 118f#3 is configured to serve as the common optical system 116 that is configured to emit the processing light EL and / or the measurement light ML along a direction intersecting with an optical path of the third optical system candidate 118f#3 at the incident side, because the optical path of the third optical system candidate 118f#3 at the incident side is parallel to the Z axis. In this case, the Galvano mirror 1163f#3 swings or rotates so as to change the emitting direction of the processing light EL and / or the measurement light ML from the second optical system candidate 118f#2 around the X axis or the Y axis. Specifically, the Galvano mirror 1163f#3 includes a X scanning mirror 1163fX#3 that swings or rotates so as to change the emitting direction of the processing light EL and / or the measurement light ML from the second optical system candidate 118f#2 around the X axis and a Y scanning mirror 1163fY#3 that swings or rotates so as to change the emitting direction of the processing light EL and / or the measurement light ML from the second optical system candidate 118f#2 around the Y axis. The processing light EL and / or the measurement light ML emitted from the Galvano mirror 1163f#3 is emitted toward an outside of the third optical system candidate 118f#3 through an aperture 1166f#3 formed at a side part of the housing 1161f#3. This third optical system candidate 118f#3 may be selected as the common optical system 116 that should be attached to the processing head 11f when the processing system SYSf processes the surface, which is along the Z axis, of the surfaces of the workpiece W, for example. The second optical system candidate 118f#2 may be selected as the common optical system 116 that should be attached to the processing head 11f when the processing system SYSf processes the workpiece W to form a slit (namely, a slit-shaped hole or groove) extending along the X axis direction or the Y axis direction at the workpiece W, for example.

Incidentally, the common optical system 116 is replaceable in the sixth embodiment, however, only the fθ lens 1162 may be replaceable. For example, at least a part of the common optical system 116 may be disposed between the beam splitter 1151 and the condensing lens 1163f#2 and at least a part of the common optical system 116 may be disposed between the beam splitter 1151 and the condensing lens 1162f#3. In this case, the common optical system 116 may include a scanning mirror whose sweeping direction is different from a sweeping directions of the Galvano mirrors 1164f#2 and 1163f#3. Here, the sweeping direction may be a direction in which the processing light and / or the measurement light moves on the workpiece W.

The processing system SYSf in the sixth embodiment described above is capable of achieving an effect that is same as the effect achievable by the processing system SYSa in the first embodiment described above. Furthermore, the processing system SYSf in the sixth embodiment is capable of processing the workpiece W by using the common optical system 116 that is suitable for the processing aspect of the processing system SYSf. Thus, the processing system SYSf is capable of processing the workpiece W in various processing aspects.

Incidentally, in the above described description, whole of the common optical system 116 is replaceable. However, a part of the common optical system 116 may be replaceable instead of whole of the common optical system 116 being replaceable. Namely, a part of the plurality of optical members of the common optical system 116 may be replaceable.

Moreover, even in the sixth embodiment, an element described in at least one of the second embodiment to the fifth embodiment described above may be used. The element described in the fifth embodiment includes an element relating to the independent control of the irradiation position of the measurement light ML on the workpiece W.

### (7) Processing System SYSg in Seventh Embodiment

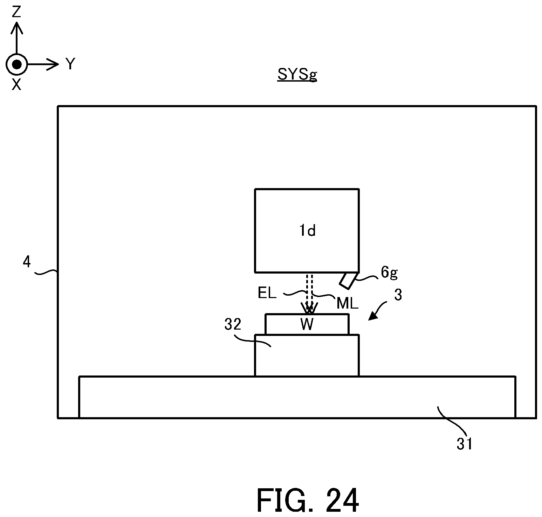

Next, with reference to FIG. 24, a processing system SYS in a seventh embodiment (in the below described description, the processing system SYS in the seventh embodiment is referred to as a "processing system SYSg") will be described. FIG. 24 is a cross-sectional view that schematically illustrates an entire structure of the processing system SYSg in the seventh embodiment.

As illustrated in FIG. 24, the processing system SYSg in the seventh embodiment is different from the above described processing system SYSa in the first embodiment in that it further includes a position measurement apparatus 6g. Another feature of the processing system SYSg may be same as another feature of the processing system SYSa.

The position measurement apparatus 6g measures the relative positional relationship between the workpiece W and the processing head 11. In the seventh embodiment, the position measurement apparatus 6g measures the position of the workpiece W relative to the processing head 11. In order to measure the position of the workpiece W relative to the processing head 11, the position measurement apparatus 6g may measure the workpiece W. Note that an operation for measuring the relative positional relationship between the workpiece W and the processing head 11 is equivalent to an operation for measuring the relative positional relationship between the workpiece W and each optical system of the processing head 11, because the processing head 11 includes each optical system. Namely, an operation for measuring the position of the workpiece W relative to the processing head 11 is substantially measuring the position of the workpiece W relative to each optical system of the processing head 11.

The position measurement apparatus 6g may be disposed at a position that is fixed relative to the processing head 11 (specially, each optical system of the processing head 11). The position measurement apparatus 6g may be disposed at a position whose relative position relative to the processing head 11 is fixed. The position measurement apparatus 6g may be disposed at a position at which the relative position between the processing head 11 and the position measurement apparatus 6g does not change even when the head driving system 12 moves the processing head 11. For example, FIG. 24 illustrates an example in which the position measurement apparatus 6g is attached to an external surface of the processing head 11 (for example, an external surface of the housing 117).

When the position measurement apparatus 6g is disposed at the position that is fixed relative to the processing head 11, an output from the position measurement apparatus 6g (namely, a measured result by the position measurement apparatus 6g) includes an information relating to the position of the workpiece W relative to the processing head 11. Specifically, the measured result by the position measurement apparatus 6g includes an information relating to the position of the workpiece W relative to the position measurement apparatus 6g. Namely, the measured result by the position measurement apparatus 6g includes an information relating to the position of the workpiece W in a measurement coordinate system of the position measurement apparatus 6g. Here, when the position measurement apparatus 6g is disposed at the position that is fixed relative to the processing head 11, the information relating to the position of the workpiece W relative to the position measurement apparatus 6g substantially includes an information relating to the position of the workpiece W relative to the processing head 11 that is disposed at a position fixed relative to the position measurement apparatus 6g. Therefore, the control apparatus 5 is capable of properly determining the position of the position of the workpiece W relative to the processing head 11.

The position measurement apparatus 6g may be any type of measurement apparatus as long as it is configured to measure the workpiece W. For example, the position measurement apparatus 6g may include an imaging apparatus (namely, a camera) that is configured to capture an image of a surface of an object such as the workpiece W. The position measurement apparatus 6g may include an irradiation apparatus that irradiates the workpiece W with a measurement light that forms a predetermined pattern on the workpiece W and an imaging apparatus that captures an image of the pattern formed on the workpiece W by the measurement light. In this manner, the position measurement apparatus 6g may be a measurement apparatus that measures the workpiece W in a non-contact method (as one example, at least one of a light detection method, a sound wave detection method and an electric wave detection method).

The measured result by the position measurement apparatus 6g (namely, the information relating to the position of the workpiece W relative to the processing head 11) may be used to control the processing system SYSa. Specifically, the measured result by the position measurement apparatus 6g may be used to control the processing apparatus 1. The measured result by the position measurement apparatus 6g may be used to control the processing head 11. The measured result by the position measurement apparatus 6g may be used to control the head driving system 12. The measured result by the position measurement apparatus 6g may be used to control the stage apparatus 3. The measured result by the position measurement apparatus 6g may be used to control the stage driving system 33.

For example, the control apparatus 5 may change the relative positional relationship between the workpiece W and the processing head 11 on the basis of the measured result by the position measurement apparatus 6g so that the relative positional relationship between the workpiece W and the processing head 11 becomes the desired positional relationship. Namely, the control apparatus 5 may control, on the basis of the measured result by the position measurement apparatus 6g, the apparatus that is configured to change the relative positional relationship between the workpiece W and the processing head 11 so that the relative positional relationship between the workpiece W and the processing head 11 becomes the desired positional relationship. One example of the apparatus that is configured to change the relative positional relationship between the workpiece W and the processing head 11 is already described above. moreover, the "desired positional relationship" is already described above.

For example, the control apparatus 5 may change the relative positional relationship between the workpiece W and each optical system of the processing head 11 on the basis of the measured result by the position measurement apparatus 6g so that the relative positional relationship between the workpiece W and each optical system (namely, at least one of the processing optical system 112, the measurement optical system 114, the combining optical system 115 and the common optical system 116) of the processing head 11 becomes the desired positional relationship. Namely, the control apparatus 5 may control, on the basis of the measured result by the position measurement apparatus 6g, the apparatus that is configured to change the relative positional relationship between the workpiece W and each optical system of the processing head 11 so that the relative positional relationship between the workpiece W and each optical system of the processing head 11 becomes the desired positional relationship. One example of the apparatus that is configured to change the relative positional relationship between the workpiece W and each optical system of the processing head 11 is already described above.

For example, the control apparatus 5 may change the relative position of the irradiation area EA relative to the workpiece W on the basis of the measured result by the position measurement apparatus 6g so that the irradiation area EA is set at the desired position on the workpiece W (namely, it is irradiated with the processing light EL). Namely, the control apparatus 5 may control, on the basis of the measured result by the position measurement apparatus 6g, the apparatus that is configured to change the relative position of the irradiation area EA relative to the workpiece W so that the irradiation area EA is set at the desired position on the workpiece W. One example of the apparatus that is configured to change the relative position of the irradiation area EA relative to the workpiece W is already described above.

For example, the control apparatus 5 may change the relative position of the irradiation area MA relative to the workpiece W on the basis of the measured result by the position measurement apparatus 6g so that the irradiation area MA is set at the desired position on the workpiece W (namely, it is irradiated with the measurement light ML#2-2). Namely, the control apparatus 5 may control, on the basis of the measured result by the position measurement apparatus 6g, an apparatus that is configured to change the relative position of the irradiation area MA relative to the workpiece W so that the irradiation area MA is set at the desired position on the workpiece W. One example of the apparatus that is configured to change the relative position of the irradiation area MA relative to the workpiece W is already described.

For example, the control apparatus 5 may perform a first operation on the basis of the state of the workpiece W that is calculated from the detected results by the detectors 1143 and 1146 and may perform a second operation on the basis of the measured result by the position measurement apparatus 6g. For example, the control apparatus 5 may control the first driving system 121 of the head driving system 12 on the basis of the state of the workpiece W that is calculated from the detected results by the detectors 1143 and 1146 and may control the second driving system 122 of the head driving system 12 on the basis of the measured result by the position measurement apparatus 6g. More specifically, the control apparatus 5 may roughly align the irradiation area EA and / or the irradiation area MA relative to the workpiece W by controlling the first driving system 121 of the head driving system 12 on the basis of the state of the workpiece W that is calculated from the detected results by the detectors 1143 and 1146. Then, the control apparatus 5 may align the irradiation area EA and / or the irradiation area MA relative to the workpiece W more accurately by controlling the second driving system 122 of the head driving system 12 on the basis of the measured result by the position measurement apparatus 6g. The control apparatus 5 may cancel the vibration of the first driving system 121 so that the vibration of the first driving system 121 is not transmitted to the processing head 11 through the second driving system 122 by controlling the second driving system 122 of the head driving system 12 on the basis of the measured result by the position measurement apparatus 6g.

Incidentally, the position measurement apparatus 6g is attached to the external surface of the processing head 11 in the seventh embodiment, however, a part of the position measurement apparatus 6g may be attached to an inside of the processing head 11 (an inside of the housing 117) and whole of the position measurement apparatus 6g may be attached to the inside of the processing head 11 (the inside of the housing 117).

The processing system SYSg in the seventh embodiment described above is capable of achieving an effect that is same as the effect achievable by the processing system SYSa in the first embodiment described above. Furthermore, the processing system SYSg in the seventh embodiment is capable of processing the workpiece W by not only the detected results by the detectors 1143 and 1146 but also the detected result by the position measurement apparatus 6g. Thus, the processing system SYSg is capable of processing the workpiece W more properly. For example, the processing system SYSg is capable of processing the workpiece W more accurately.

Incidentally, even in the seventh embodiment, an element described in at least one of the second embodiment to the sixth embodiment described above may be used. The element described in the fifth embodiment includes an element relating to the replacement of the common optical system 116.

### (8) Processing System SYSh in Eighth Embodiment

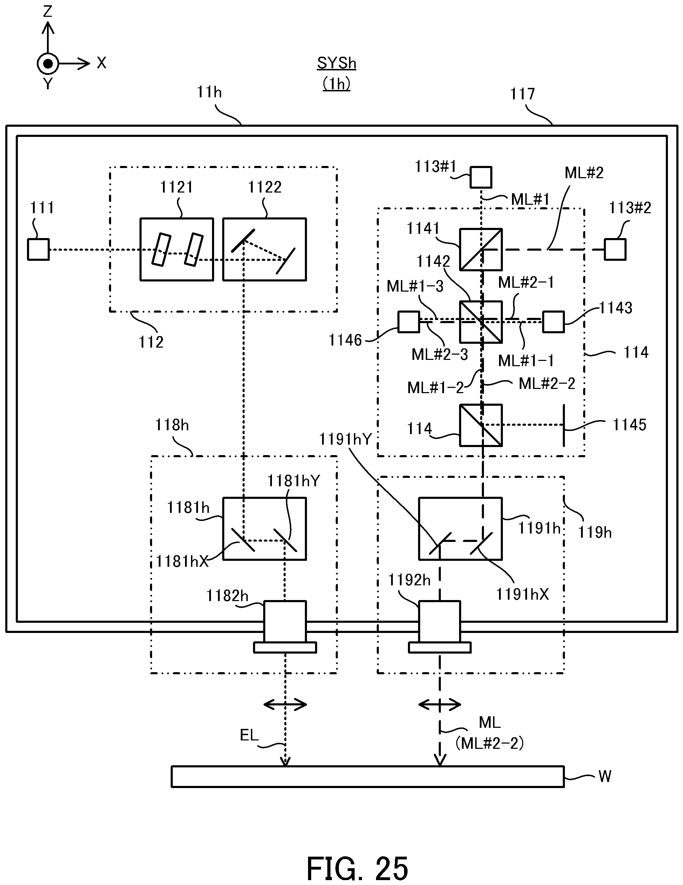

Next, a processing system SYS in a eighth embodiment (in the below described description, the processing system SYS in the eighth embodiment is referred to as a "processing system SYSh") will be described. The processing system SYSh in the eighth embodiment is different from the above described processing system SYSa in the first embodiment in that it includes a processing apparatus 1h instead of the processing apparatus 1. Another feature of the processing system SYSh may be same as another feature of the processing system SYSa. The processing apparatus 1h is different from the processing apparatus 1 in that it includes a processing head 11h instead of the processing head 11. Another feature of the processing apparatus 1h may be same as another feature of the processing apparatus 1. Therefore, in the below described description, with reference to FIG. 25, the processing head 11h in the eighth embodiment will be described. FIG. 25 is a cross-sectional view that illustrates one example of a structure of the processing head 11h in the eighth embodiment.

As illustrated in FIG. 25, the processing head 11h is different from the processing head 11 in that it may not include the combining optical system 115. Furthermore, the processing head 11h is different from the processing head 11 in that it includes a processing irradiation optical system 118h and a measurement irradiation optical system 119h instead of the common optical system 116. Another feature of the processing head 11h may be same as another feature of the processing head 11.

The processing light EL emitted from the processing optical system 112 enters the processing irradiation optical system 118h. The processing irradiation optical system 118h irradiates the workpiece W with the processing light EL entering the processing irradiation optical system 118h. On the other hand, the measurement light ML#2-2 emitted from the measurement optical system 114 does not enter the processing irradiation optical system 118h. The processing irradiation optical system 118h does not irradiate the workpiece W with the measurement light ML#2-2 emitted from the measurement optical system 114.

In order to irradiate the workpiece W with the processing light EL, the processing irradiation optical system 118h includes a Galvano mirror 1181h and a fθ lens 1182h.

The processing light EL emitted from the processing optical system 112 enters the Galvano mirror 1181h. The Galvano mirror 1181h changes the irradiation position of the processing light EL on the workpiece W by deflecting the processing light EL. For example, the Galvano mirror 1181h includes a X scanning mirror 1181hX and a Y scanning mirror 1182hY. Each of the X scanning mirror 1181hX and the Y scanning mirror 1182hY is an inclined angle variable mirror whose angle relative to the optical path of the processing light EL entering the Galvano mirror 1181h is changed. The X scanning mirror 1181hX deflects the processing light EL by swinging or rotating (namely, changing the angle of the X scanning mirror 1181hX relative to the optical path of the processing light EL) so as to change the irradiation position along the X axis direction of the processing light EL on the workpiece W. The Y scanning mirror 1181hY deflects the processing light EL by swinging or rotating (namely, changing the angle of the Y scanning mirror 1181hY relative to the optical path of the processing light EL) so as to change the irradiation position along the Y axis direction of the processing light EL on the workpiece W. Considering this characteristic of the Galvano mirror 1181h, the Galvano mirror 1181h is different from the Galvano mirror 1161 of the common optical system 116 in that it changes the irradiation position of the processing light EL on the workpiece W but does not change the irradiation position of the measurement light ML on the workpiece W. The Galvano mirror 1181h is different from the Galvano mirror 1161 in that the processing light EL passes therethrough but the measurement light ML does not pass therethrough. Another feature of the Galvano mirror 1181h may be same as another feature of the Galvano mirror 1161.

The processing light EL from the Galvano mirror 1182h enters the fθ lens 1182h. The fθ lens 1182h is an optical system for irradiating the workpiece W with the processing light EL from the Galvano mirror 1181h. Especially, the fθ lens 1182h is an optical system for condensing the processing light EL from the Galvano mirror 1181h on the workpiece W. Considering this characteristic of the fθ lens 1182h, the fθ lens 1182h is different from the fθ lens 1162 of the common optical system 116 in that it irradiates the workpiece W with the processing light EL but does not change the irradiation position of the measurement light ML on the workpiece W. The fθ lens 1182h is different from the fθ lens 1162 in that the processing light EL passes therethrough but the measurement light ML does not pass therethrough. Another feature of the fθ lens 1182h may be same as another feature of the fθ lens 1162.

The measurement light ML#2-2 emitted from the measurement optical system 114 enters the measurement irradiation optical system 119h. The measurement irradiation optical system 119h irradiates the workpiece W with the measurement light ML#2-2 entering the measurement irradiation optical system 119h. On the other hand, the processing light EL emitted from the processing optical system 112 does not enter the #2-2 irradiation optical system 119h. The #2-2 irradiation optical system 119h does not irradiate the workpiece W with the processing light EL emitted from the processing optical system 112.

In order to irradiate the workpiece W with the measurement light ML#2-2, the processing irradiation optical system 119h includes a Galvano mirror 1191h and a fθ lens 1192h.

The measurement light ML#2-2 emitted from the measurement optical system 114 enters the Galvano mirror 1191h. The Galvano mirror 1191h changes the irradiation position of the measurement light ML#2-2 on the workpiece W by deflecting the measurement light ML#2-2. For example, the Galvano mirror 1191h includes a X scanning mirror 1191hX and a Y scanning mirror 1192hY. Each of the X scanning mirror 1191hX and the Y scanning mirror 1192hY is an inclined angle variable mirror whose angle relative to the optical path of the measurement light ML#2-2 entering the Galvano mirror 1191h is changed. The X scanning mirror 1191hX deflects the measurement light ML#2-2 by swinging or rotating (namely, changing the angle of the X scanning mirror 1191hX relative to the optical path of the measurement light ML#2-2) so as to change the irradiation position along the X axis direction of the measurement light ML#2-2 on the workpiece W. The Y scanning mirror 1191hY deflects the measurement light ML#2-2 by swinging or rotating (namely, changing the angle of the Y scanning mirror 1191hY relative to the optical path of the measurement light ML#2-2) so as to change the irradiation position along the Y axis direction of the measurement light ML#2-2 on the workpiece W. Considering this characteristic of the Galvano mirror 1191h, the Galvano mirror 1191h is different from the Galvano mirror 1161 of the common optical system 116 in that it changes the irradiation position of the measurement light ML#2-2 on the workpiece W but does not change the irradiation position of the processing light EL on the workpiece W. The Galvano mirror 1191h is different from the Galvano mirror 1161 in that the measurement light ML#2-2 passes therethrough but the processing light EL does not pass therethrough. Another feature of the Galvano mirror 1191h may be same as another feature of the Galvano mirror 1161.

The measurement light ML#2-2 from the Galvano mirror 1192h enters the fθ lens 1192h. The fθ lens 1192h is an optical system for irradiating the workpiece W with the measurement light ML#2-2 from the Galvano mirror 1191h. Especially, the fθ lens 1192h is an optical system for condensing the measurement light ML#2-2 from the Galvano mirror 1191h on the workpiece W. Considering this characteristic of the fθ lens 1192h, the fθ lens 1192h is different from the fθ lens 1162 of the common optical system 116 in that it irradiates the workpiece W with the measurement light ML#2-2 but does not change the irradiation position of the measurement light ML on the workpiece W. The fθ lens 1192h is different from the fθ lens 1162 in that the measurement light ML passes therethrough but the processing light EL does not pass therethrough. Another feature of the fθ lens 1192h may be same as another feature of the fθ lens 1162.

In the eighth embodiment, an optical axis of the fθ lens 1182h that irradiates the workpiece W with the processing light EL is about parallel to an optical axis of the fθ lens 1192h that irradiates the workpiece W with the measurement light ML However, the optical axis of the fθ lens 1182h may not be parallel to the optical axis of the fθ lens 1192h. For example, the optical axis of the fθ lens 1182h may intersect with the optical axis of the fθ lens 1192h at or near a plane at which the surface of the workpiece W is located, and the optical axis of the fθ lens 1182h and the optical axis of the fθ lens 1192h may be set so that at least a part of a field of view of the fθ lens 1182h overlaps with at least a part of a field of view of the fθ lens 1192h. In these cases, it may be regarded that the optical axis of the fθ lens 1182h is inclined toward the fθ lens 1192h side and it may be regarded that the optical axis of the fθ lens 1192h is inclined toward the fθ lens 1182h. Moreover, the optical axis of the fθ lens 1182h and the optical axis of the fθ lens 1192h may be set so that an angle between both of the optical axes is an acute angle when both of the optical axes are viewed from a direction that intersects with a plane on which the fθ lens 1182h and the fθ lens 1192h are arranged.

As described above, in the eighth embodiment, the optical system relating to the processing light EL (specifically, the processing optical system 112 and the processing irradiation optical system 118h) is optically separated from the optical system relating to the measurement light ML (specifically, the measurement optical system 114 and the measurement irradiation optical system 119h). Namely, the processing head 11h may not include the optical element or the optical member through which both of the processing light EL and the measurement light ML pass. This processing system SYSh in the eighth embodiment is also capable of properly processing the workpiece W by using the processing light EL and properly measuring the workpiece W by using the measurement light ML, as with the processing system SYSa in the first embodiment.

Note that the eighth embodiment may be configured so that the processing light EL from the Galvano mirror 1181h and the measurement light ML from the Galvano mirror 1181h enter one fθ lens.

Incidentally, even in the eighth embodiment, an element described in at least one of the second embodiment to the seventh embodiment described above may be used. The element described in the seventh embodiment includes an element relating to the position measurement apparatus 6g. Moreover, in the eighth embodiment, since the processing head 11h includes the processing irradiation optical system 118h and the measurement irradiation optical system 119h instead of the common optical system 116, an element that is allowed to be applied to the common optical system 115 may be applied to at least one of the processing irradiation optical system 118h and the measurement irradiation optical system 119h. For example, at least one of the processing irradiation optical system 118h and the measurement irradiation optical system 119h may be replaceable, as with the common optical system 116 in the sixth embodiment.

### (9) Processing System SYSi in Ninth Embodiment

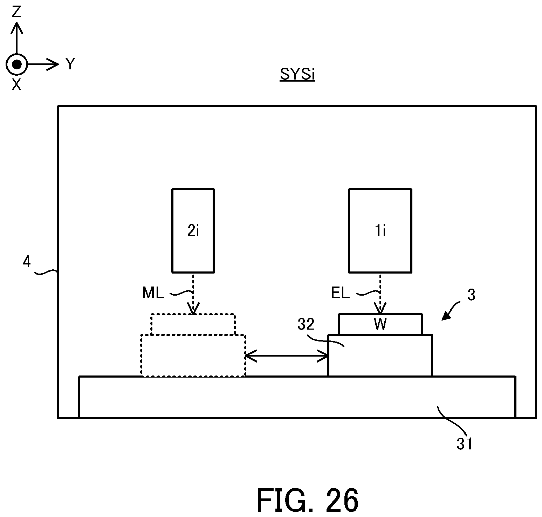

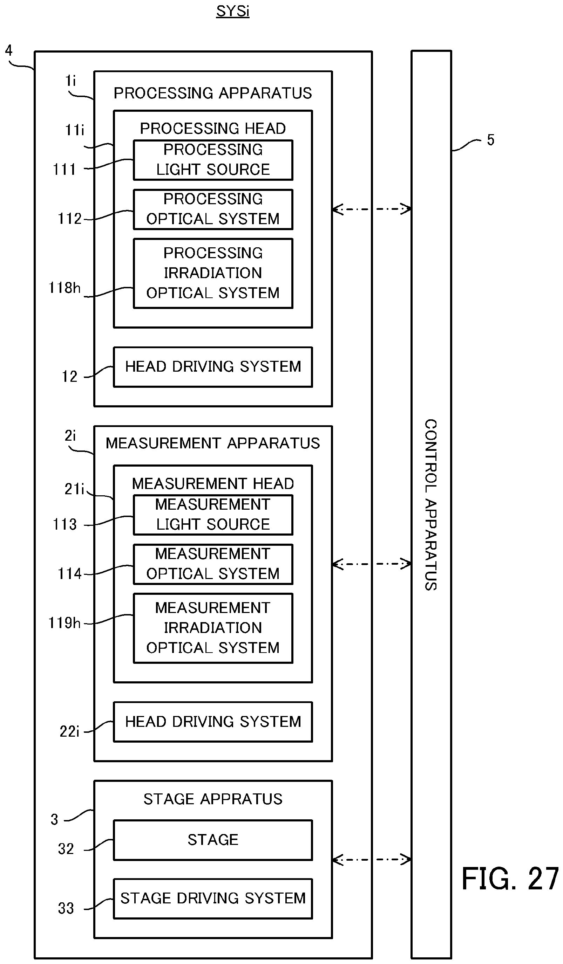

Next, with reference to FIG. 26 to FIG. 27, a processing system SYS in a ninth embodiment (in the below described description, the processing system SYS in the ninth embodiment is referred to as a "processing system SYSi") will be described. FIG. 26 is a cross-sectional view that schematically illustrates an entire structure of the processing system SYSi in the ninth embodiment. FIG. 27 is a system configuration diagram that illustrates a system configuration of the processing system SYSi in the ninth embodiment.

As illustrated in FIG. 26 to FIG. 27, the processing system SYSi in the ninth embodiment is different from the above described processing system SYSa in the first embodiment in that it includes a processing apparatus 1i instead of the processing apparatus 1. Furthermore, the processing system SYSi in the ninth embodiment is different from the above described processing system SYSa in the first embodiment in that it further includes a measurement apparatus 2i. Another feature of the processing system SYSi may be same as another feature of the processing system SYSa.

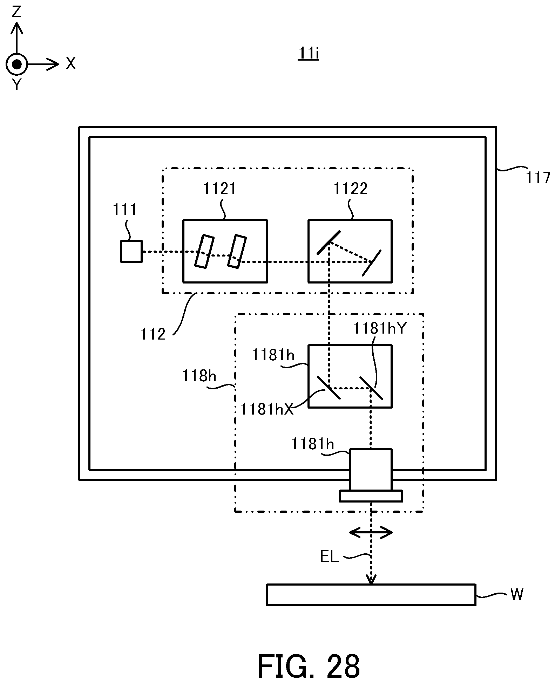

The processing apparatus 1i is different from the processing apparatus 1 in that it includes a processing head 11i instead of the processing head 11. Another feature of the processing apparatus 1i may be same as another feature of the processing apparatus 1. The processing head 11i is different from the above described processing head 11 that irradiates the workpiece W with each of the processing light EL and the measurement light ML in that it irradiates the workpiece W with the processing light EL but does not irradiate the workpiece W with the measurement light ML One example of a structure of this processing head 11i is illustrated in FIG. 28. As illustrated in FIG. 27 and FIG. 28, the processing head 11i includes the processing light source 111, the processing optical system 112 and the processing irradiation optical system 118h. The processing head 11i includes the processing light source 111, the processing optical system 112 and the processing irradiation optical system 118h is housed in the housing 117 of the processing head 11i. It can be said that the processing head 11i is an optical member that selectively includes an optical member, which contributes the emission of the processing light EL, of a plurality of optical members of the processing head 11h in the eighth embodiment illustrated in FIG. 25. Thus, a detailed description of the processing head 11i is omitted.

The measurement apparatus 2i includes a measurement head 21i that emits the measurement light ML to the workpiece W and a head driving system 22i that moves the measurement head 21i. The measurement head 21i means any member that is configured to emit the measurement light ML to the workpiece W. Thus, the measurement head 21i may not mean a member that is attached to a front edge of a certain member, although it is expressed by a wording of head. Thus, the measurement head 21i may be referred to as a measurement member.

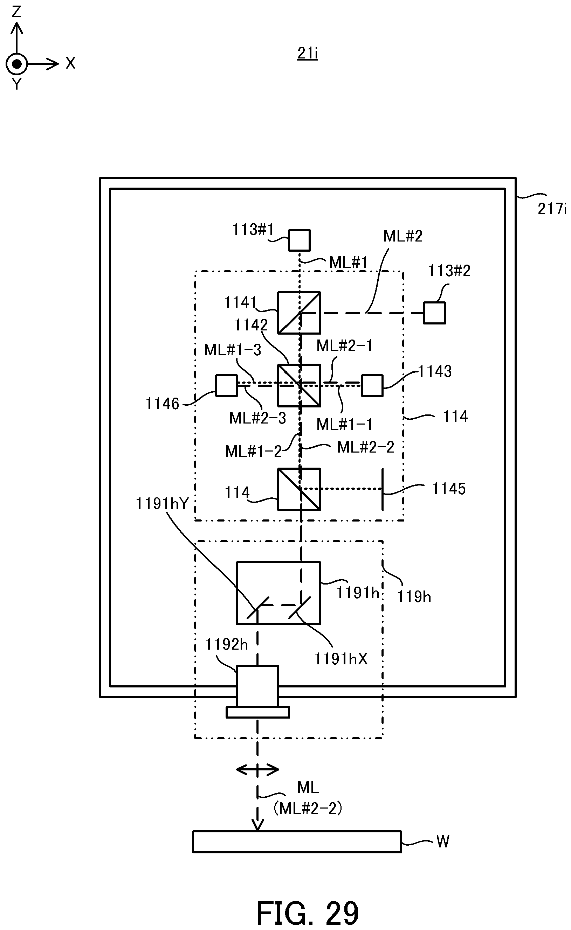

The measurement head 21i is different from the above described processing head 11 that emits each of the processing light EL and the measurement light ML to the workpiece W in that it emits the measurement light ML but does not emit the processing light EL to the workpiece W. One example of a structure of this measurement head 21i is illustrated in FIG. 29. As illustrated in FIG. 27 and FIG. 29, the measurement head 21i includes the measurement light source 113, the measurement optical system 114 and the measurement irradiation optical system 119h. The measurement light source 113, the measurement optical system 114 and the measurement irradiation optical system 119h is housed in a housing 217i of the measurement head 21i. It can be said that the measurement head 21i is an optical member that selectively includes an optical member, which contributes the emission of the measurement light ML, of a plurality of optical members of the processing head 11h in the eighth embodiment illustrated in FIG. 25. Thus, a detailed description of the measurement head 21i is omitted.

The head driving system 22i may have a structure that is same as that of the above described head driving system 12. Namely, the head driving system 22i may include the first driving system 121 and the second driving system 122. The head driving system 22i may be connected to the measurement head 21i in a connection aspect that is same as a connection aspect in which the head driving system 12 is connected to the processing head 11. Thus, a detailed description of the head driving system 22i is omitted.

In the ninth embodiment, when the processing head 11i moves, the irradiation position of the processing light EL on the workpiece W changes but the irradiation position of the measurement light ML on the workpiece W does not change. Therefore, moving the processing head 11i in the ninth embodiment is equivalent to changing the irradiation position of the processing light EL (alternatively, the position of the irradiation area EA) on the workpiece W. On the other hand, in the ninth embodiment, when the measurement head 21i moves, the irradiation position of the measurement light ML on the workpiece W changes but the irradiation position of the processing light EL on the workpiece W does not change. Therefore, moving the measurement head 21i in the ninth embodiment is equivalent to changing the irradiation position of the measurement light ML (alternatively, the position of the irradiation area MA) on the workpiece W. In this manner, in the ninth embodiment, the processing system SYSi is capable of changing the irradiation position of the processing light EL on the workpiece W and the irradiation position of the measurement light ML#2-2 on the workpiece W independently from each other.

In the ninth embodiment, the stage 32 may move so that the irradiation area EA that is irradiated with the processing light EL is set on the workpiece W in at least a part of a processing period in which the processing apparatus 1i should emit the processing light EL to the workpiece W. The stage 32 may move so that the workpiece W is located at a position that is allowed to be irradiated with the processing light EL by the processing apparatus 1i in at least a part of the processing period. On the other hand, the stage 32 may move so that the irradiation area MA that is irradiated with the measurement light ML is set on the workpiece W in at least a part of a measurement period in which the measurement apparatus 2i should emit the measurement light ML to the workpiece W. The stage 32 may move so that the workpiece W is located at a position that is allowed to be irradiated with the measurement light ML by the measurement apparatus 2i in at least a part of the measurement period. Namely, the stage 32 may move between the position that is allowed to be irradiated with the processing light EL by the processing apparatus 1i and the position that is allowed to be irradiated with the measurement light ML by the measurement apparatus 2i.

As described above, in the ninth embodiment, the optical system relating to the processing light EL (specifically, the processing optical system 112 and the processing irradiation optical system 118h) is optically separated from the optical system relating to the measurement light ML (specifically, the measurement optical system 114 and the measurement irradiation optical system 119h), as with the eighth embodiment. Furthermore, in the ninth embodiment, the apparatus that emits the processing light EL to the workpiece W (namely, the processing apparatus 1i) and the apparatus that emits the measurement light ML to the workpiece W (namely, the measurement apparatus 2i) are separate apparatuses. This processing system SYSi in the ninth embodiment is also capable of properly processing the workpiece W by using the processing light EL and properly measuring the workpiece W by using the measurement light ML, as with the processing system SYSa in the first embodiment.

Incidentally, even in the ninth embodiment, an element described in at least one of the second embodiment to the eighth embodiment described above may be used. The element described in the eighth embodiment includes an element relating to the optical separation between the optical system relating to the processing light EL and the optical system relating to the measurement light ML Moreover, in the ninth embodiment, since the processing system SYSi includes the processing irradiation optical system 118h and the measurement irradiation optical system 119h instead of the common optical system 116, the element that is allowed to be applied to the common optical system 115 may be applied to at least one of the processing irradiation optical system 118h and the measurement irradiation optical system 119h. For example, at least one of the processing irradiation optical system 118h and the measurement irradiation optical system 119h may be replaceable, as with the common optical system 116 in the sixth embodiment.

### (10) Processing System SYSi in Tenth Embodiment

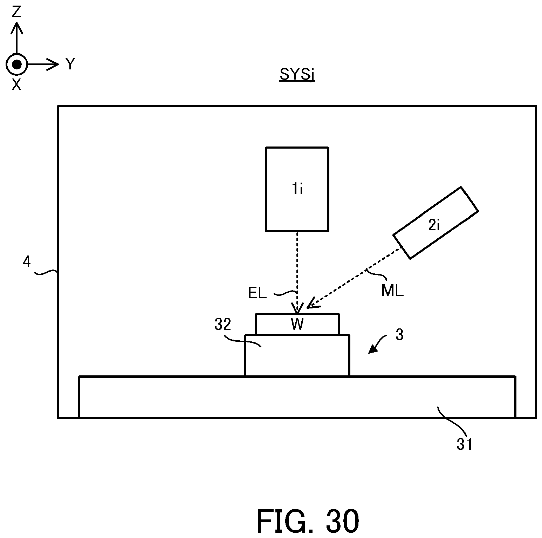

Next, with reference to FIG. 30, a processing system SYS in a tenth embodiment (in the below described description, the processing system SYS in the tenth embodiment is referred to as a "processing system SYSj") will be described. FIG. 30 is a cross-sectional view that schematically illustrates an entire structure of the processing system SYSj in the tenth embodiment.

As illustrated in FIG. 30, the processing system SYSj in the tenth embodiment is different from the above described processing system SYSi in the ninth embodiment in that the measurement apparatus 2i emits the measurement light ML to the workpiece W so that the measurement light ML obliquely enters the workpiece W. Another feature of the processing system SYSj may be same as another feature of the processing system SYSi. The processing system SYSj in the tenth embodiment described above is capable of achieving an effect that is same as the effect achievable by the processing system SYSi in the ninth embodiment described above. Furthermore, the processing system SYSj in the tenth embodiment is capable of emitting the processing light EL and the measurement light ML to a same position on the workpiece W. Namely, the processing system SYSj is capable of emitting the processing light EL and the measurement light ML so that the optical path of the processing light EL overlaps with the optical path of the measurement light ML at least partially even when the processing apparatus 1i and the measurement apparatus 2i are the separate apparatuses. As a result, the stage 32 may not necessarily move between the position that is allowed to be irradiated with the processing light EL by the processing apparatus 1i and the position that is allowed to be irradiated with the measurement light ML by the measurement apparatus 2i.

Incidentally, even in the tenth embodiment, an element described in at least one of the second embodiment to the ninth embodiment described above may be used. The element described in the ninth embodiment includes an element relating to the apparatus that emits the processing light EL to the workpiece W and the apparatus that emits the measurement light ML to the workpiece W being the separate apparatuses.

### (11) Processing System SYSk in Eleventh Embodiment

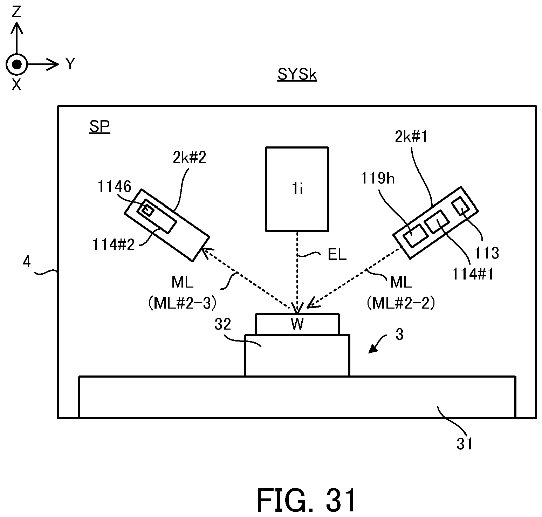

Next, with reference to FIG. 31, a processing system SYS in an eleventh embodiment (in the below described description, the processing system SYS in the eleventh embodiment is referred to as a "processing system SYSk") will be described. FIG. 31 is a cross-sectional view that schematically illustrates an entire structure of the processing system SYSk in the eleventh embodiment.

As illustrated in FIG. 31, the processing system SYSk in the eleventh embodiment is different from the above described processing system SYSj in the tenth embodiment in that it includes a plurality of measurement apparatuses 2 instead of the measurement apparatus 2i. In an example illustrated in FIG. 31, the processing system SYSk includes two measurement apparatuses 2k (specifically, a measurement apparatus 2k#1 and a measurement apparatus 2k#2. Another feature of the processing system SYSk may be same as another feature of the processing system SYSj.

The measurement apparatus 2k#1 is an apparatus that includes a part of the optical members of the measurement apparatus 2i. The measurement apparatus 2k#2 is an apparatus that includes a remaining part of the optical members of the measurement apparatus 2i (namely the optical member that is not included in the measurement apparatus 2k#1). Namely, it can be said that the processing system SYSk in the eleventh embodiment is different from the above described processing system SYSi in the tenth embodiment in that the measurement apparatus 2i is further divided into a plurality of measurement apparatus 2k. Note that the measurement apparatuses 2k#1 and 2k#2 may respectively include the same optical members. Namely, the measurement apparatuses 2k#1 and 2k#2 may respectively include the optical members that have same function or that function in a same manner.

In an example illustrated in FIG. 31, the measurement apparatus 2k#1 includes the measurement light source 113, a measurement optical system 114#1 that corresponds to a part of the measurement optical system 114 and the measurement irradiation optical system 119h. On the other hand, the measurement apparatus 2k#2 includes at least a measurement optical system 114#2 that corresponds to a remaining part of the measurement optical system 114 (namely, that includes at least the optical member, which is not included in the measurement optical system 114#1, of the plurality of optical members of the measurement optical system 114). Especially, the measurement optical system 114#2 includes at least the detector 1146. Thus, in the example illustrated in FIG. 31, the measurement light ML (especially, the measurement light ML#2-2) is emitted from the measurement optical system 114#1 to the workpiece W and the measurement light ML (especially, the measurement light ML#2-3) from the workpiece W enters the measurement optical system 114#2.

The processing system SYSk in the eleventh embodiment described above is capable of achieving an effect that is same as the effect achievable by the processing system SYSj in the tenth embodiment described above.

Incidentally, even in the eleventh embodiment, an element described in at least one of the second embodiment to the tenth embodiment described above may be used. The element described in the tenth embodiment includes an element relating to the measurement light ML obliquely entering the workpiece W.

### (12) Processing System SYSl in Twelfth Embodiment

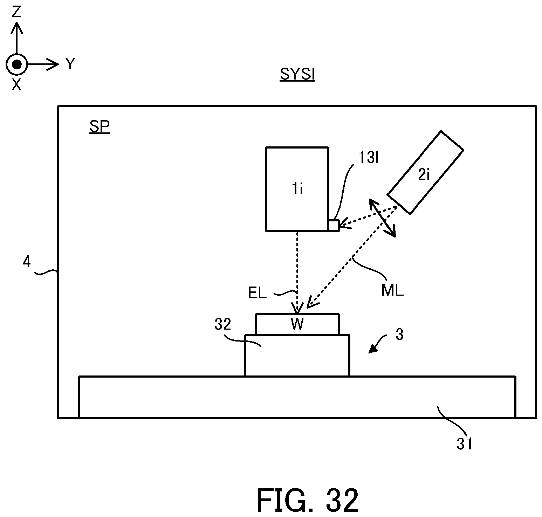

Next, with reference to FIG. 32, a processing system SYS in an twelfth embodiment (in the below described description, the processing system SYS in the twelfth embodiment is referred to as a "processing system SYSl") will be described. FIG. 32 is a cross-sectional view that schematically illustrates an entire structure of the processing system SYSl in the twelfth embodiment.

As illustrated in FIG. 32, the processing system SYSl in the twelfth embodiment is different from the above described processing system SYSj in the tenth embodiment in that an index 131 that is measurable by the measurement apparatus 2i is attached to the processing apparatus 1i. For example, the index 131 may be attached to the housing 117 (for example, the external surface of the housing 117) of the processing apparatus 1i. Another feature of the processing system SYSl may be same as another feature of the processing system SYSj.

The measurement apparatus 2i emits the measurement light ML (especially, the measurement light ML#2-2) to the index 131, in addition to emitting the measurement light ML to the workpiece W. For example, the measurement apparatus 2i may emit the measurement light ML to the index 131 by the Galvano mirror 1191h deflecting the measurement light ML. For example, the measurement apparatus 2i may emit the measurement light ML to the index 131 by the head driving system 22i changing the position of the measurement apparatus 2i in at least one of the X axis, the Y axis, the Z axis, the θX direction, the θY direction and the θZ direction.

The measurement apparatus 2i may emit the measurement light ML to the index 131 before the processing apparatus 1i starts processing the workpiece W (for example, at the timing at which the workpiece W is placed on the stage 32). The measurement apparatus 2i may emit the measurement light ML to the index 131 before the processing apparatus 1i irradiates the workpiece W with the processing light EL. The measurement apparatus 2i may emit the measurement light ML to the index 131 in at least a part of a period in which the processing apparatus 1i irradiates the workpiece W with the processing light EL. The measurement apparatus 2i may emit the measurement light ML to the index 131 after the processing apparatus 1i irradiates the workpiece W with the processing light EL. The measurement apparatus 2i may emit the measurement light ML to the index 131 before the processing apparatus 1i completes processing the workpiece W.

When the index 131 is irradiate with the measurement light ML (specifically, the measurement light ML#2-2), a light due to the irradiation of the measurement light ML#2-2 (for example, at least one of the reflection light, the scattering light, the diffraction light and the transmitted light described above) is generated from the index 131. Thus, in the twelfth embodiment, the measurement light ML#2-3 including at least a part of the light emitted from the index 131 due to the irradiation of the measurement light ML#2-2 enters the detector 1146. Thus, the control apparatus 5 may calculate a state of the index 131 (specifically, a position of the index 131 relative to the measurement head 21i) on the basis of the on the detected results by the detectors 1143 and 1146. Furthermore, the control apparatus 5 may calculate a position of the processing head 11i relative to the measurement head 21i on the basis of the calculated position of the index 131, because the index 131 is attached to the processing head 11i. Namely, the control apparatus 5 may calculate a relative positional relationship between a base point of the measurement head 21i and a base point of the process head 11i (typically, a distance between the base point of the measurement head 21i and the base point of the process head 11i). Note that the index 131 that is irradiated with the measurement light ML (ML#2-2) may be a mark, and may be a fiducial ball such as a tooling ball. Moreover, the mark 131 may not be irradiated with the measurement light ML (ML#2-2). For example, the processing apparatus 1i, typically, a part of the external surface of the processing apparatus 1i may be irradiation with the measurement light ML (ML#2-2).

The control apparatus 5 may control the position of the processing head 11i and / or the measurement head 21i on the basis of an information relating to the calculated relative positional relationship between the base point of the measurement head 21i and the base point of the process head 11i (hereinafter, it is referred to as a "baseline amount"). The control apparatus 5 may control the position of the stage 32 on the basis of the baseline amount. The control apparatus 5 may control the irradiation position of the processing light EL and / or the irradiation position of the measurement light ML on the basis of the baseline amount. For example, the control apparatus 5 may control the position of the processing head 11i, the position of the measurement head 21i , the position of the stage 32 , the irradiation position of the processing light EL and / or the irradiation position of the measurement light ML on the basis of the baseline amount so that the desired position on the workpiece W is irradiated with the processing light EL. For example, the control apparatus 5 may control the position of the processing head 11i, the position of the measurement head 21i , the position of the stage 32 , the irradiation position of the processing light EL and / or the irradiation position of the measurement light ML on the basis of the baseline amount so that the desired position on the workpiece W is irradiated with the measurement light ML.

The processing system SYSl in the twelfth embodiment described above is capable of achieving an effect that is same as the effect achievable by the processing system SYSj in the tenth embodiment described above. Furthermore, the processing system SYSl is capable of processing the workpiece W on the basis of the baseline amount. Thus, even when the positional relationship between the processing apparatus 1i and the measurement apparatus 2i is different from an ideal positional relationship (typically, a design positional relationship), the processing system SYSl is capable of processing the workpiece W on the basis of the baseline amount on which the difference of the positional relationship is reflected. Thus, the processing system SYSl is capable of processing the workpiece W more properly.

Incidentally, even in the twelfth embodiment, an element described in at least one of the second embodiment to the eleventh embodiment described above may be used. The element described in the eleventh embodiment includes an element relating to the division of the measurement head 21i.

### (13) Other Modified Example

In the above described description, the processing system SYS forms the riblet structure on the surface of the workpiece W. However, the processing system SYS may form any structure having any shape on the surface of the workpiece W. Even in this case, any structure having any shape is formable by means of the control apparatus 5 controlling the processing head 11 and so on so that the surface of the workpiece W is swept with the processing lights EL along the sweeping path based on the structure that should be formed. A fine texture structure (typically, a concave and convex structure) that is formed regularly or irregularly in a micro / nano-meter order is one example of any structure. This fine texture structure may include at least one of a shark skin structure or a dimple structure that has a function of reducing a resistance from a fluid (a liquid and / or a gas). The fine texture structure may include a lotus leaf surface structure that has at least one of a liquid repellent function and a self-cleaning function (for example, has a lotus effect). The fine texture structure may include at least one of a fine protrusion structure that has a liquid transporting function (US2017/0044002A1), a concave and convex structure that has a lyophile effect, a concave and convex structure that has an antifouling effect, a moth eye structure that has at least one of a reflectance reduction function and a liquid repellent function, a concave and convex structure that intensifies only light of a specific wavelength by interference to have a structural color, a pillar array structure that has an adhesion function using van der Waals force, a concave and convex structure that has an aerodynamic noise reduction function, a honeycomb structure that has a droplet collection function and so on.

In the above described description, the processing system SYS forms, on the workpiece W, the riblet structure for reducing the resistance of the surface of the workpiece W to the fluid. However, the processing system SYS may form, on the workpiece W, another structure that is different from the riblet structure for reducing the resistance of the surface to the fluid. For example, the processing system SYS may form, on the workpiece W, a riblet structure for reducing a noise generated when the fluid and the surface of the workpiece W relatively move. For example, the processing system SYS may form, on the workpiece W, a structure for generating a swirl in a flow of the fluid on the surface of the workpiece W. For example, the processing system SYS may form, on the workpiece W, a structure for giving a hydrophobic properly to the workpiece W.

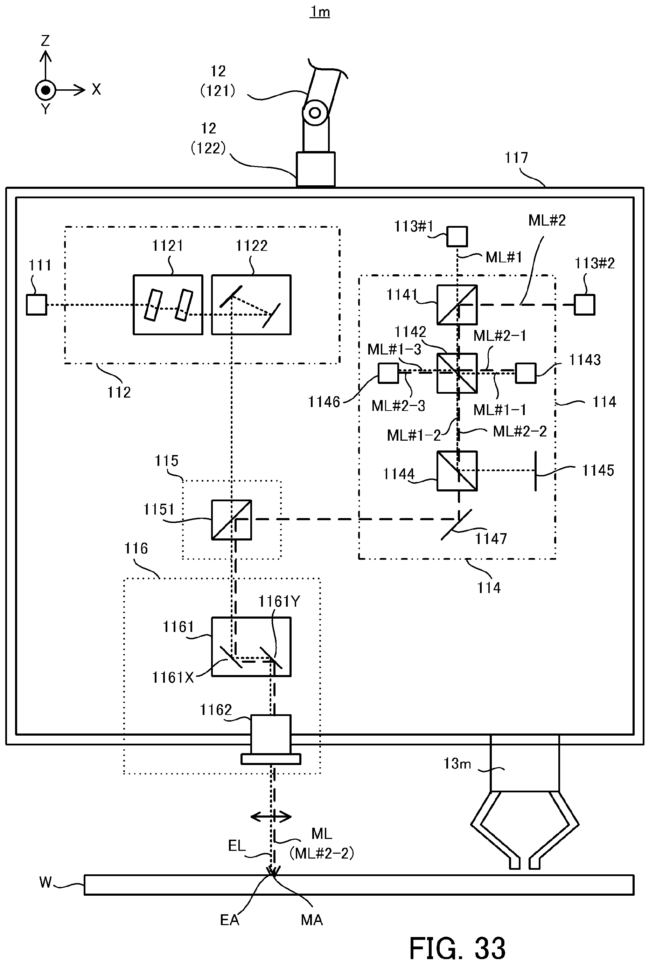

In the above described description, the processing system SYS that processes the object by the processing light EL is described. Namely, in the above description, an example in which the second driving system 122 connects the processing head 11 and the first driving system 121. However, an end effector that acts on the object may be used in addition to or instead of the processing head 11 of the processing system SYS. For example, as illustrated in FIG. 33 that illustrated one example of a structure of a processing apparatus 1m including the end effector, the second driving system 122 may connect an end effector 13m and the first driving system 121. In an example illustrated in FIG. 33, the end effector 13m is attached to the processing head 11, and the second driving system 122 connects the end effector 13m and the first driving system 121 through the processing head 11. However, the end effector 13m may be attached to the second driving system 122 without using the processing head 11. This processing system SYS including the end effector may be referred to as a robot system. Note that FIG. 33 illustrates an example in which the processing apparatus 1 in the first embodiment includes the end effector 13, however, at least one of the processing apparatus 1b in the second embodiment to the processing apparatus 1i in the twelfth embodiment may include the end effector 13m.

Note that the end effector may be a part that has a function to directly act on a target (for example, the object). Moreover, the end effector may be a part that obtains a property of the target (for example, the object). Here, the property of the object may include at least one of a shape of the object, a position of the object, a position of a feature point of the object, an attitude of the object, a surface characteristic (for example, at least one of a reflection factor, a spectral reflection factor, a surface roughness, a color and so on) of the object, a hardness of the object and so on. Note that the processing head 11, the measurement head 21i and the position measurement apparatus 6g may be regarded to be some types of end effectors.

In the above described description, the processing light source and the measurement light source are separate light sources, however, these may be configured to be one light source.

In the above described description, the Galvano mirror is used as the irradiation position change optical system, however, a polygonal mirror or a MEMS mirror may be used.

In the above described description, the fθ lens whose projection characteristic is fθ is used as the irradiation optical system that irradiates the workpiece W with the processing light EL and the measurement light ML, however, an optical system having another projection characteristic may be used. Moreover, the irradiation optical system is not limited to a dioptric type of optical system (a dioptric optical system), and may be a reflective- dioptric type of optical system (a catadioptric optical system) or may be a reflective type of optical system (a catoptric optical system).

In the above described description, the processing head 11 is movable by the head driving system 12. Here, the head driving system 12 is not limited to the robot, and may be a flying object that is configured to fly at a position that is away from the workpiece W, for example. At least one of an airplane, a drone, a helicopter, a balloon and an airship is one example of the flying object.

### (9) Supplementary Note

Regarding the above described embodiment, below described supplementary notes are further disclosed.

### [Supplementary Note 1]

A processing member that processes an object by irradiating the object with a processing light from a processing light source,
the processing member including:
a measurement optical system that emits a measurement light including a pulsed light; and
an irradiation optical system that irradiates the object with the measurement light from the measurement optical system,
an optical path of the processing light overlapping with an optical path of the measurement light at least partially.

### [Supplementary Note 2]

The processing member according to the Supplementary Note 1, wherein
the optical path of the processing light overlaps with at least a part of the optical path of the measurement light between the irradiation optical system and the object.

### [Supplementary Note 3]

The processing member according to the Supplementary Note 1 or 2 further including an irradiation position change optical system that changes an irradiation position of the measurement light on the object.

### [Supplementary Note 4]

The processing member according to the Supplementary Note 3, wherein
the optical path of the measurement light is an area through which the measurement light is allowed to pass by the irradiation position change optical system.

### [Supplementary Note 5]

The processing member according to the Supplementary Note 4 or 5, wherein
the irradiation optical system condenses the measurement light from the irradiation position change optical system.

### [Supplementary Note 6]

The processing member according to any one of the Supplementary Notes 3 to 5, wherein
the irradiation position change optical system changes an emitting angle of the measurement light.

### [Supplementary Note 7]

The processing member according to the Supplementary Note 6, wherein
the irradiation position on the object is changed when the emitting angle of the measurement light is changed by the irradiation position change optical system.

### [Supplementary Note 8]

The processing member according to any one of the Supplementary Notes 1 to 7, wherein
the irradiation optical system emits each of the processing light and the measurement light toward the object.

### [Supplementary Note 9]

The processing member according to the Supplementary Note 8 further including an irradiation position change optical system that changes each of an irradiation position of the processing light on the object and an irradiation position of the measurement light on the object.

### [Supplementary Note 10]

The processing member according to the Supplementary Note 9, wherein
the optical path of the processing light is an area through which the processing light is allowed to pass by the irradiation position change optical system,
the optical path of the measurement light is an area through which the measurement light is allowed to pass by the irradiation position change optical system.

### [Supplementary Note 11]

The processing member according to the Supplementary Note 9 or 10, wherein
the irradiation position change optical system changes the irradiation position of the processing light on the object and the irradiation position of the measurement light on the object in conjunction with each other.

### [Supplementary Note 12]

The processing member according to any one of the Supplementary Notes 8 to 11, wherein
the irradiation optical system condenses the processing light and the measurement light from the irradiation position change optical system.

### [Supplementary Note 13]

The processing member according to any one of the Supplementary Notes 8 to 12, wherein
the irradiation position change optical system changes an emitting angle of the processing light and an emitting angle of the measurement light.

### [Supplementary Note 14]

The processing member according to any one of the Supplementary Notes 8 to 13, wherein
the irradiation position change optical system includes an inclination angle variable mirror whose angle relative to the optical path of the processing light entering thereto and the optical path of the measurement light entering thereto is changeable.

### [Supplementary Note 15]

The processing member according to any one of the Supplementary Notes 1 to 14, wherein
a path of the processing light overlaps with a path of the measurement light at least partially in the irradiation optical system.

### [Supplementary Note 16]

The processing member according to any one of the Supplementary Notes 1 to 15, wherein
a path of the processing light is away from a path of the measurement light at least partially along a direction that intersects with an optical axis of the irradiation optical system in the irradiation optical system.

### [Supplementary Note 17]

The processing member according to any one of the Supplementary Notes 1 to 16 further including a processing optical system that emits the processing light, which enters from the processing light thereto, to the irradiation optical system.

### [Supplementary Note 18]

The processing member according to the Supplementary Note 17 further including a combining optical system that combines the processing light from the processing optical system and the measurement light from the measurement optical system to emit them to the irradiation optical system.

### [Supplementary Note 19]

The processing member according to the Supplementary Note 18, wherein
the combining optical system emits, toward same direction, the processing light and the measurement light that respectively enter the combining optical system from different directions.

### [Supplementary Note 20]

The processing member according to any one of the Supplementary Notes 17 to 19, wherein
the processing optical system is optically separated from the measurement optical system.

### [Supplementary Note 21]

The processing member according to any one of the Supplementary Notes 1 to 20 further including a measurement light source that supplies the measurement light,
the measurement optical system emitting, toward the irradiation optical system, the measurement light from the measurement light source.

### [Supplementary Note 22]

The processing member according to the Supplementary Note 21, wherein
the measurement light source is disposed in a housing in which the measurement optical system is housed.

### [Supplementary Note 23]

The processing member according to any one of the Supplementary Notes 1 to 21, wherein
the measurement optical system includes a detector that detects a light generated by the measurement light with which the object is irradiated.

### [Supplementary Note 24]

The processing member according to the Supplementary Note 22, wherein
the detector detects an interfering light generated by an interference between the light generated by the measurement light with which the object is irradiated and a reference light generated from a part of the measurement light.

### [Supplementary Note 25]

The processing member according to the Supplementary Note 24, wherein
the reference light does not go through the object.

### [Supplementary Note 26]

The processing member according to any one of the Supplementary Notes 23 to 25, wherein
the detector detects, through the irradiation optical system, the light generated by the measurement light with which the object is irradiated.

### [Supplementary Note 27]

The processing member according to any one of the Supplementary Notes 23 to 26, wherein
the processing member is controlled on the basis of a detected result by the detector.

### [Supplementary Note 28]

The processing member according to any one of the Supplementary Notes 23 to 27, wherein
a relative position between an irradiation position of the processing light on the object and the object is controlled on the basis of a detected result by the detector.

### [Supplementary Note 29]

The processing member according to any one of the Supplementary Notes 23 to 28, wherein
a relative position between the irradiation optical system and the object is controlled on the basis of a detected result by the detector.

### [Supplementary Note 30]

The processing member according to any one of the Supplementary Notes 23 to 29 further including an irradiation position change optical system that changes an irradiation position of the processing light on the object,
the irradiation position change optical system is controlled on the basis of a detected result by the detector.

### [Supplementary Note 31]

The processing member according to any one of the Supplementary Notes 1 to 30 further including the processing light source.

### [Supplementary Note 32]

The processing member according to any one of the Supplementary Notes 1 to 32 further including a processing light irradiation optical system that emits, toward the object, the processing light from the processing light source.

### [Supplementary Note 33]

The processing member according to the Supplementary Note 32, wherein
the processing light from the processing light source does not go through the measurement optical system.

### [Supplementary Note 34]

The processing member according to any one of the Supplementary Notes 1 to 33, wherein
a wavelength of the processing light is different from a wavelength of the measurement light.

### [Supplementary Note 35]

The processing member according to any one of the Supplementary Notes 1 to 34, wherein
the processing light includes a pulsed light.

### [Supplementary Note 36]

The processing member according to any one of the Supplementary Notes 1 to 35, wherein
the measurement light includes, as the pulsed light, a light from a light comb light source.

### [Supplementary Note 37]

The processing member according to any one of the Supplementary Notes 1 to 36, wherein
the measurement light includes, as the pulsed light, a light including frequency components that are arranged with equal interval on a frequency axis.

### [Supplementary Note 38]

The processing member according to any one of the Supplementary Notes 1 to 37, wherein
at least a partial optical member of optical members included in the irradiation optical system is replaceable.

### [Supplementary Note 39]

The processing member according to the Supplementary Note 38, wherein
the replaceable partial optical member is one measurement candidate optical system of a plurality of measurement candidate optical systems between which the emitting direction of the measurement light relative to the processing member is different.

### [Supplementary Note 40]

The processing member according to the Supplementary Note 39, wherein
the replaceable partial optical member is one measurement candidate optical system of a plurality of measurement candidate optical systems between which a distance between an entering position of the measurement light to the irradiation optical system and an emitting position of the measurement light from the irradiation optical system along the optical path of the measurement light is different.

### [Supplementary Note 41]

The processing member according to any one of the Supplementary Notes 1 to 40 further including a processing light irradiation optical system that emits, toward the object, the processing light entering from the processing light source thereto,
at least a partial optical member of optical members included in the processing irradiation optical system is replaceable.

### [Supplementary Note 42]

The processing member according to the Supplementary Note 41, wherein
the replaceable partial optical member is one processing candidate optical system of a plurality of processing candidate optical systems between which the emitting direction of the processing light relative to the processing member is different.

### [Supplementary Note 43]

The processing member according to the Supplementary Note 41 or 42, wherein
the replaceable partial optical member is one processing candidate optical system of a plurality of processing candidate optical systems between which a distance between an entering position of the processing light to the processing light irradiation optical system and an emitting position of the processing light from the processing light irradiation optical system along the optical path of the processing light is different.

### [Supplementary Note 44]

The processing member according to any one of the Supplementary Notes 1 to 43, wherein
the irradiation optical system emits a plurality of measurement lights toward the object.

### [Supplementary Note 45]

The processing member according to the Supplementary Note 44, wherein
the irradiation optical system emits the plurality of measurement lights toward different positions of the object, respectively.

### [Supplementary Note 46]

The processing member according to the Supplementary Note 44 or 45, wherein
a first measurement light of the plurality of measurement lights is used for a first usage,
a second measurement light of the plurality of measurement lights, which is different from the first measurement light, is used for a second usage that is different from the first usage.

### [Supplementary Note 47]

The processing member according to the Supplementary Note 46, wherein
the first usage includes a usage for determining a shape of the object,
the second usage includes a usage for determining a relative position between the object and at least one of the measurement optical system and a processing optical system that emits the processing light toward the object.

### [Supplementary Note 48]

The processing member according to any one of the Supplementary Notes 1 to 47 further including a position change apparatus that changes a relative position between the object and a housing in which the processing member is housed.

### [Supplementary Note 49]

The processing member according to the Supplementary Note 48, wherein
the position change apparatus includes:
   a movable member a relative positional relationship of which is changeable relative to a part of the object; and
   a connection apparatus that connects the movable member and the housing so that a relative positional relationship between the movable member and the housing is changeable,
the connection apparatus includes:
   a driving member that moves at least one of the movable member and the housing; and
   an elastic member that connects the movable member and the housing.

### [Supplementary Note 50]

The processing member according to the Supplementary Note 49, wherein
the position change apparatus changes the relative position between the object and the housing on the basis of a detected result of a light generated by the measurement light with which the object is irradiated:

### [Supplementary Note 51]

The processing member according to any one of the Supplementary Notes 1 to 50 further including a position measurement apparatus that measures a relative position between the object and at least one of the measurement optical system and a processing light optical system that emits the processing light toward the object.

### [Supplementary Note 52]

The processing member according to the Supplementary Note 51, wherein
the position measurement apparatus includes an imaging apparatus that captures an image of a surface of the object.

### [Supplementary Note 53]

A robot system including:
a first optical system that emits a measurement light including a pulsed light toward an obj ect;
a second optical system that processes the object by irradiating the object with a processing light;
a support part that supports at least a part of the first optical system in a state where at least a part of the first optical system is movable relative to the object and that supports at least a part of the second optical system in a state where at least a part of the second optical system is movable relative to the object; and
a driving part that moves at least a part of the first optical system and at least a part of the second optical system through the support part.

### [Supplementary Note 54]

A measuring apparatus including:
a light source that emits a light frequency comb as a reference light and a light frequency comb as a measuring light whose phases are synchronized with each other and that are coherent;
an irradiation optical system that emits, to an object, the measuring light emitted from the light source;
a reference surface to which the reference light emitted from the light source enters;
a detect part that detects an interfering signal based on an interfering light generated by an interference between a light generated from the object by the measuring light with which the object is irradiated and the reference light returned from the reference surface;
an optical fiber that transmits at least one light of the measuring light propagates from the light source to the irradiation optical system and the light generated from the object by the measuring light with which the object is irradiated; and
a signal processing part that calculates an information relating to a position of the object by using the interfering signal detected by the detect part,
the optical fiber including an image fiber that includes a plurality of cores arranged in a plane intersecting a propagating direction of the at least one light.

### [Supplementary Note 55]

The measuring apparatus according to the Supplementary Note 54, wherein
the detect part includes a plurality of photoelectric conversion elements that are arranged along at least one direction.

### [Supplementary Note 56]

The measuring apparatus according to the Supplementary Note 55 further including an optical system that allows an edge surface of the optical fiber at the detect part side to be conjugated with a plane at which the plurality of photoelectron conversion elements are arranged.

### [Supplementary Note 57]

The measuring apparatus according to any one of the Supplementary Notes 54 to 56, wherein
the image fiber includes a bundle of a plurality of fibers that are arranged at the intersecting plane.

### [Supplementary Note 58]

The measuring apparatus according to any one of the Supplementary Notes 54 to 57, wherein
the image fiber includes a multi-core-type optical fiber that includes a plurality of cores arranged at the intersecting plane and a clad between the plurality of cores.

### [Supplementary Note 59]

A processing apparatus that processes an object by irradiating the object with a processing light from a processing light source,
the processing apparatus including:
a combining optical system that combines an optical path of the processing light from the processing light source and an optical path of a measurement light including a pulsed light;
an irradiation optical system that irradiates the object with the processing light and the first measurement light that are through the combining optical system; and
an irradiation position change optical system that is disposed between the combining optical system and the irradiation optical system and that changes an irradiation position of the processing light on the object and an irradiation position of the measurement light on the object.

### [Supplementary Note 60]

The processing apparatus according to the Supplementary Note 59, wherein
the irradiation position change optical system changes the irradiation position of the processing light on the object and the irradiation position of the measurement light on the object in conjunction with each other.

### [Supplementary Note 61]

The processing apparatus according to the Supplementary Note 59 or 60, wherein
the irradiation position change optical system is disposed between the combining optical system and the irradiation optical system.

### [Supplementary Note 62]

The processing apparatus according to any one of the Supplementary Notes 59 to 61, wherein
the irradiation position change optical system changes an emitting angle of the processing light and an emitting angle of the measurement light.

### [Supplementary Note 63]

The processing apparatus according to the Supplementary Note 62, wherein
the processing light and the measurement light enter the irradiation optical system,
the irradiation position of the processing light on the object and the irradiation position of the measurement light on the object are changed by the irradiation position change optical system changing the emitting angle of the processing light and the emitting angle of the measurement light.

### [Supplementary Note 64]

The processing apparatus according to any one of the Supplementary Notes 59 to 63 further including a measurement light source that supplies the measurement light,
the measurement light from the measurement light source entering the combining optical system.

### [Supplementary Note 65]

The processing apparatus according to any one of the Supplementary Notes 59 to 64, wherein
when the measurement light is a first measurement light, at least a part of a second measurement light, which is generated from the object by the irradiation of the first measurement light to the object, enters the irradiation optical system.

### [Supplementary Note 66]

The processing apparatus according to the Supplementary Note 65, wherein
the second measurement light entering the irradiation optical system is emitted through the combining optical system.

### [Supplementary Note 67]

The processing apparatus according to the Supplementary Note 65 or 66, wherein
the second measurement light emitted from the combining optical system propagates to a detector that detects the second measurement light.

### [Supplementary Note 68]

The processing apparatus according to the Supplementary Note 67, wherein
the detector detects an interfering light generated by an interference between a reference light that is generated from at least a part of the first measurement light and at least a part of the second measurement light.

### [Supplementary Note 69]

The processing apparatus according to any one of the Supplementary Notes 59 to 68, wherein
the measurement light includes, as the pulsed light, a light from a light comb light source.

### [Supplementary Note 70]

The processing apparatus according to any one of the Supplementary Notes 59 to 69, wherein
the measurement light includes, as the pulsed light, a light including frequency components that are arranged with equal interval on a frequency axis.

### [Supplementary Note 71]

The processing apparatus according to any one of the Supplementary Notes 59 to 70, wherein
the processing light includes a pulsed light.

### [Supplementary Note 72]

The processing apparatus according to the Supplementary Note 71, wherein
a timing at which the object is irradiated with the pulsed light of the measurement light is different from a timing at which the object is irradiated with the pulsed light of the processing light.

### [Supplementary Note 73]

The processing apparatus according to the Supplementary Note 71 or 72, wherein
a timing at which the object is irradiated with the pulsed light of the measurement light does not overlap with a timing at which the object is irradiated with the pulsed light of the processing light.

### [Supplementary Note 74]

The processing apparatus according to any one of the Supplementary Notes 71 to 73, wherein
the measurement light includes a plurality of pulsed lights,
the processing light includes a plurality of pulsed lights,
a timing at which the object is irradiated with at least one pulsed light of the plurality of pulsed lights of the processing light is between a timing at which the object is irradiated with at first measurement pulsed light of the plurality of pulsed lights of the measurement light and a timing at which the object is irradiated with at second measurement pulsed light, with which the object is irradiated at a timing different from the first measurement pulsed light, of the plurality of pulsed lights of the measurement light.

### [Supplementary Note 75]

The processing apparatus according to any one of the Supplementary Notes 59 to 74, wherein
when the measurement light is a first measurement light, at least a part of a second measurement light, which is generated by the first measurement light, enters the irradiation optical system.

### [Supplementary Note 76]

The processing apparatus according to the Supplementary Note 75, wherein
the second measurement light entering the irradiation optical system is emitted through the combining optical system.

### [Supplementary Note 77]

The processing apparatus according to the Supplementary Note 75 or 76, wherein
the second measurement light emitted from the combining optical system propagates to a detector that detects the second measurement light.

### [Supplementary Note 78]

The processing apparatus according to any one of the Supplementary Notes 59 to 77, wherein
when the measurement light is a first measurement light, at least a part of a second measurement light, which is generated from the object by the irradiation of the first measurement light to the object, enters a detector through the irradiation optical system,
a detected result by the detector is outputted to a control apparatus that controls the processing light.

### [Supplementary Note 79]

The processing apparatus according to the Supplementary Note 78 further including:
a processing optical system that emits the processing light toward the object; and
a position change apparatus that changes a relative position between the processing optical system and the object,
the control apparatus controls the position change apparatus on the basis of the detected result by the detector.

### [Supplementary Note 80]

The processing apparatus according to the Supplementary Note 78 or 79, wherein
the irradiation optical system emits each of the processing light and the measurement light to the object,
the processing apparatus further includes a position change apparatus that changes a relative position between the irradiation optical system and the object,
the control apparatus controls the position change apparatus on the basis of the detected result by the detector.

### [Supplementary Note 81]

The processing apparatus according to any one of the Supplementary Notes 78 to 80, wherein
the control apparatus controls the irradiation position change optical system on the basis of the detected result by the detector.

### [Supplementary Note 82]

The processing apparatus according to any one of the Supplementary Notes 59 to 81, wherein
a wavelength of the processing light is different from a wavelength of the measurement light.

### [Supplementary Note 83]

The processing apparatus according to the Supplementary Note 82, wherein
the wavelength of the measurement light is shorter than the wavelength of the processing light.

### [Supplementary Note 84]

The processing apparatus according to any one of the Supplementary Notes 59 to 83, wherein
the processing light and the measurement light in a converged state are emitted from the irradiation optical system.

### [Supplementary Note 85]

The processing apparatus according to the Supplementary Note 84, wherein
an open angle of the measurement light propagating from the irradiation optical system to the object is larger than an open angle of the processing light propagating from the irradiation optical system to the object.

### [Supplementary Note 86]

The processing apparatus according to the Supplementary Note 84 or 85, wherein
a size of a light flux of the measurement light entering the irradiation optical system is larger than a size of a light flux of the processing light entering the irradiation optical system.

### [Supplementary Note 87]

The processing apparatus according to any one of the Supplementary Notes 59 to 86, wherein
an optical path of the processing light from the combining optical system to the object overlaps with an optical path of the measurement light from the combining optical system to the object at least partially.

### [Supplementary Note 88]

The processing apparatus according to any one of the Supplementary Notes 59 to 87, wherein
an optical path of the processing light from the combining optical system to the object is away from an optical path of the measurement light from the combining optical system to the object at least partially.

### [Supplementary Note 89]

The processing apparatus according to any one of the Supplementary Notes 59 to 88, wherein
the combining optical system emits, toward same direction, the processing light and the measurement light that respectively enter the combining optical system from different directions.

### [Supplementary Note 90]

The processing apparatus according to any one of the Supplementary Notes 59 to 89, wherein
the irradiation optical system is replaceable.

### [Supplementary Note 91]

The processing apparatus according to the Supplementary Note 90, wherein
the replaceable irradiation optical system is one irradiation optical system candidate of a plurality of irradiation optical system candidates between which an emitting direction of the measurement light relative to an optical axis of the irradiation optical system at an incident side is different.

### [Supplementary Note 92]

The processing apparatus according to the Supplementary Note 90 or 91, wherein
the replaceable irradiation optical system is one irradiation optical system candidate of a plurality of irradiation optical system candidates between which a distance between an emitting position of the measurement light from the combining optical system and an emitting position of the measurement light from the irradiation optical system is different.

### [Supplementary Note 93]

The processing apparatus according to any one of the Supplementary Notes 59 to 92, wherein
the irradiation optical system emits a plurality of measurement lights toward the object.

### [Supplementary Note 94]

The processing apparatus according to the Supplementary Note 93, wherein
the irradiation optical system emits the plurality of measurement lights toward different positions of the object, respectively.

### [Supplementary Note 95]

The processing apparatus according to the Supplementary Note 93 or 94, wherein
a first measurement light of the plurality of measurement lights is used for a first usage,
a second measurement light of the plurality of measurement lights, which is different from the first measurement light, is used for a second usage that is different from the first usage.

### [Supplementary Note 96]

The processing apparatus according to the Supplementary Note 95, wherein
the first usage includes a usage for determining a shape of the object,
the second usage includes a usage for determining a relative position between the object and at least irradiation optical system.

### [Supplementary Note 97]

The processing apparatus according to any one of the Supplementary Notes 93 to 96 further including a control apparatus that controls a position change apparatus for changing a relative position between the object and the irradiation optical system so that a shape of the object is determined on the basis of a detected result of a first measurement light of the plurality of measurement lights and a desired position of the object whose shape is determined is irradiated with the processing light on the basis of a detected result of a second measurement light of the plurality of measurement lights.

### [Supplementary Note 98]

The processing apparatus according to any one of the Supplementary Notes 59 to 97 further including a position change apparatus that changes a relative position between the object and the irradiation optical system.

### [Supplementary Note 99]

The processing apparatus according to the Supplementary Note 98, wherein
the position change apparatus includes:
   a movable member a relative positional relationship of which is changeable relative to a part of the obj ect; and
   a connection apparatus that connects the movable member and the irradiation optical system so that a relative positional relationship between the movable member and the irradiation optical system is changeable,
the connection apparatus includes:
   a driving member that moves at least one of the movable member and the irradiation optical system; and
   an elastic member that connects the movable member and the irradiation optical system.

### [Supplementary Note 100]

The processing apparatus according to the Supplementary Note 99, wherein
the position change apparatus changes the relative position between the object and the irradiation optical system on the basis of a detected result of the measurement light through the obj ect.

### [Supplementary Note 101]

The processing apparatus according to the Supplementary Note 99 or 100 further including a position measurement apparatus that measures a relative position between the object and the irradiation optical system,
the position change apparatus changes the relative position between the object and the irradiation optical system on the basis of a detected result by the position measurement apparatus.

### [Supplementary Note 102]

The processing apparatus according to any one of the Supplementary Notes 59 to 101 including a position measurement apparatus that measures a relative position between the object and the irradiation optical system.

### [Supplementary Note 103]

The processing apparatus according to the Supplementary Note 101 or 102, wherein
the position measurement apparatus includes an imaging apparatus that captures an image of a surface of the object.

### [Supplementary Note 104]

The processing apparatus according to any one of the Supplementary Notes 59 to 103 including:
a division member that generates a reference light by dividing the measurement light from a measurement light source;
a reference reflection member that reflects the reference light from the division member to the division member; and
a light reception member that optically receives an interfering light generated by an interference between the reference light and a light that is generated by the measurement light from the irradiation optical system and that passes through the irradiation optical system and the combining optical system.

### [Supplementary Note 105]

The processing apparatus according to the Supplementary Note 104, wherein
the light that is generated from the object due to the irradiation of the measurement light to the object is a scattering light,
the interfering light generated by the interference between the reference light and the scattering light enters the light reception member.

### [Supplementary Note 106]

The processing apparatus according to any one of the Supplementary Notes 59 to 105, wherein
the measurement light from the irradiation optical system obliquely enters a surface of the object.

### [Supplementary Note 107]

The processing apparatus according to any one of the Supplementary Notes 59 to 106, wherein
a propagating direction of the processing light that enters a first position on the object is same as or is parallel to a propagating direction of the measurement light that enters the first position,
a propagating direction of the processing light that enters a second position, which is different from the first position, on the object is same as or is parallel to a propagating direction of the measurement light that enters the second position,

### [Supplementary Note 108]

A processing apparatus that processes an object by irradiating the object with a processing light from a processing light source,
the processing apparatus including:
a combining optical system that combines an optical path of the processing light from the processing light source and an optical path of a first measurement light from a measurement light source;
an irradiation optical system that irradiates the object with the processing light and the first measurement light that are through the combining optical system;
a position change apparatus that changes a position of the irradiation optical system relative to the object;
an imaging apparatus a position of which is changed together with the irradiation optical system and which captures an image of the object; and
a detection apparatus that detects, through the irradiation optical system and the combining optical system, a second measurement light that is generated from the object due to the first measurement light with which the object is irradiated through the irradiation optical system.

### [Supplementary Note 109]

The processing apparatus according to Supplementary Note 108 further including a control apparatus that controls, on the basis of an captured result by the imaging apparatus, the position change apparatus to change the position of the irradiation optical system.

### [Supplementary Note 110]

The processing apparatus according to Supplementary Note 109, wherein
the position change apparatus includes:
a first position change apparatus a relative positional relationship of which is changeable relative to a part of the object; and
a second position change apparatus that is configured to change a relative positional relationship between the first position change apparatus and the irradiation optical system.

### [Supplementary Note 111]

The processing apparatus according to Supplementary Note 110, wherein
the second position change apparatus connects the first position change apparatus and the irradiation optical system.

### [Supplementary Note 112]

The processing apparatus according to Supplementary Note 111, wherein
the second position change apparatus includes:
a driving member that moves at least one of the first position change apparatus and the irradiation optical system; and
a buffer member that connects the first position change apparatus and the irradiation optical system.

### [Supplementary Note 113]

The processing apparatus according to any one of Supplementary Notes 110 to 112, wherein
the control apparatus controls the second position change apparatus to change the position of the irradiation optical system.

### [Supplementary Note 114]

The processing apparatus according to any one of Supplementary Notes 110 to 113, wherein
the control apparatus controls the first position change apparatus to change the position of the irradiation optical system.

### [Supplementary Note 115]

The processing apparatus according to Supplementary Note 114, wherein
the control apparatus:
controls the second position change apparatus on the basis of the captured result by the imaging apparatus, and
controls the first position change apparatus on the basis of a detected result by the detection apparatus.

### [Supplementary Note 116]

The processing apparatus according to any one of Supplementary Notes 108 to 115 further including an irradiation position change optical system to which the processing light and the measurement light enter through the combining optical system and which changes an irradiation position of the processing light on the object and an irradiation position of the measurement light on the object.

### [Supplementary Note 117]

The processing apparatus according to Supplementary Note 116 further including a control apparatus that controls, on the basis of an captured result by the imaging apparatus, the irradiation position change optical system to change the irradiation position of the processing light on the object and the irradiation position of the measurement light on the object.

### [Supplementary Note 118]

A processing apparatus that processes an object by irradiating the object with a processing light from a processing light source,
the processing apparatus including:
an irradiation optical system that irradiates the object with the processing light;
a position change apparatus that changes a relative position between the object and a processing head including at least a part of the irradiation optical system; and
a position measurement apparatus that irradiates the processing head with a first measurement light including a pulsed light, that optically receives a second measurement light generated from the processing head due to the first measurement light, and that measures a position of the processing head on the basis of an optical received result of the second measurement light.

### [Supplementary Note 119]

The processing apparatus according to Supplementary Note 118, wherein
the position measurement apparatus irradiates the object with a third measurement light including a pulsed light, optically receives a fourth measurement light generated from the object due to the third measurement light, and that measures a position of the object on the basis of an optical received result of the fourth measurement light.

### [Supplementary Note 120]

The processing apparatus according to Supplementary Note 119, wherein
the position measurement apparatus includes:
a beam splitter that divides the first and third measurement lights from a measurement light source;
a reference mirror that returns, as a first and second reference lights, the first and third measurement lights divided by the beam splitter toward the beam splitter; and
a detection apparatus that detects an interfering light generated by an interference between the first and second reference lights through the beam splitter and the second and fourth measurement lights through the beam splitter.

### [Supplementary Note 121]

The processing apparatus according to any one of Supplementary Notes 118 to 120, wherein
the position measurement apparatus irradiates an index on the processing head with the first measurement light.

### [Supplementary Note 122]

The processing apparatus according to any one of Supplementary Notes 118 to 121, wherein
the position measurement apparatus irradiates the processing head with the first measurement light in at least a part of a period in which the object is irradiated with the processing light.

### [Supplementary Note 123]

The processing apparatus according to any one of Supplementary Notes 118 to 122, wherein
the position measurement apparatus irradiates the processing head with the first measurement light in a period that is different from the period in which the object is irradiated with the processing light.

### [Supplementary Note 124]

A processing apparatus that processes an object by irradiating the object with a processing light from a processing light source,
the processing apparatus including:
a combining optical system that combines an optical path of the processing light from the processing light source and an optical path of a measurement light from a measurement light source;
an irradiation optical system that irradiates the object with the processing light and the measurement light that are through the combining optical system; and
an irradiation position change optical system that is disposed at an incident side of the irradiation optical system and that changes an irradiation position of the processing light on the object and an irradiation position of the measurement light on the object,
the irradiation position change optical system changing a positional relationship between the irradiation position of the processing light and the irradiation position of the measurement light.

### [Supplementary Note 125]

The processing apparatus according to Supplementary Note 124 including:
a division member that divides the measurement lights from the measurement light source to generate a reference light;
a reference reflection member that reflects the reference light from the division member to the division member; and
a light reception member that optically receives an interfering light generated by an interference between the reference light and a light that is generated by the measurement light from the irradiation optical system and that passes through the irradiation optical system and the combining optical system.

### [Supplementary Note 126]

The processing apparatus according to Supplementary Note 124 or 125, wherein
the irradiation position change optical system is disposed between the combining optical system and the irradiation optical system.

### [Supplementary Note 127]

The processing apparatus according to any one of Supplementary Notes 124 to 126, wherein
at least a part of a scattering light generated from the object due to the irradiation of the measurement light to the object enters the irradiation optical system.

### [Supplementary Note 128]

The processing apparatus according to any one of Supplementary Notes 124 to 127, wherein
the measurement light from the irradiation optical system obliquely enters a surface of the object.

### [Supplementary Note 129]

The processing apparatus according to any one of Supplementary Notes 124 to 128, wherein
the irradiation position change optical system includes:
a first irradiation position change optical system that is disposed between the combining optical system and the irradiation optical system; and
a second irradiation position change optical system that is disposed on an optical path at an opposite side of the irradiation optical system viewed from the combining optical system.

### [Supplementary Note 130]

The processing apparatus according to Supplementary Note 129, wherein
the second irradiation position change optical system is disposed between the combining optical system and the processing light source.

### [Supplementary Note 131]

The processing apparatus according to Supplementary Note 129, wherein
the second irradiation position change optical system is disposed between the combining optical system and the measurement light source.

### [Supplementary Note 132]

A processing apparatus that processes an object by irradiating the object with a processing light from a processing light source,
the processing apparatus including:
a combining optical system that combines an optical path of the processing light from the processing light source and an optical path of a measurement light from a measurement light source;
an irradiation optical system that irradiates the object with the processing light and the measurement light that are through the combining optical system;
an irradiation position change optical system to which the processing light and the measurement light enter and that changes an irradiation position of the processing light on the object and an irradiation position of the measurement light on the object; and
a control apparatus that controls the irradiation position change optical system so as to change a positional relationship between the irradiation position of the processing light and the irradiation position of the measurement light or that controls the irradiation position change optical system so as to change the irradiation position of the processing light and the irradiation position of the measurement light without changing the positional relationship between the irradiation position of the processing light and the irradiation position of the measurement light.

### [Supplementary Note 133]

A system that measures an object by a measurement light,
the system including:
a measurement apparatus that irradiates the object with a first measurement light, that optically receives a second measurement light generated from the object due to the first measurement light, and that measures a position of the object on the basis of an optical received result of the second measurement light;
a position change apparatus that is connected to the measurement apparatus and that changes the position of the measurement apparatus relative to the object; and
an end effector that is attached to the measurement apparatus.

### [Supplementary Note 134]

The system according to Supplementary Note 133, wherein
the position change apparatus includes:
a movable member a relative positional relationship of which is changeable relative to a part of the object; and
a connection apparatus that connects the movable member and the measurement apparatus so that a relative positional relationship between the movable member and the measurement apparatus is changeable.

### [Supplementary Note 135]

The system according to Supplementary Note 134, wherein
the connection apparatus includes:
a driving member that moves at least one of the movable member and the measurement apparatus; and
a buffer member that connects the movable member and the measurement apparatus.

### [Supplementary Note 136]

A processing apparatus that processes an object by irradiating the object with a processing light from a processing light source,
the processing apparatus including:
a combining optical system that combines an optical path of the processing light from the processing light source and an optical path of a measurement light including a pulsed light;
an irradiation optical system that irradiates the object with the processing light and the measurement light that are through the combining optical system;
a first irradiation position change optical system that changes an irradiation position of the processing light on the object; and
a second irradiation position change optical system that changes an irradiation position of the measurement light on the object,
the processing light through the first irradiation position change optical system and the measurement light through the second irradiation position change optical system entering the irradiation optical system.

### [Supplementary Note 137]

The processing apparatus according to Supplementary Note 136, wherein
the first irradiation position change optical system changes the irradiation position of the processing light on the object independently from the irradiation position of the measurement light on the object.

### [Supplementary Note 138]

The processing apparatus according to Supplementary Note 136 or 137, wherein
the second irradiation position change optical system changes the irradiation position of the measurement light on the object independently from the irradiation position of the processing light on the object.

### [Supplementary Note 139]

A processing apparatus that processes an object by irradiating the object with a processing light from a processing light source,
the processing apparatus comprising:
a combining optical system that combines an optical path of the processing light from the processing light source and an optical path of a first measurement light from a measurement light source;
an irradiation optical system that irradiates the object with the processing light and the first measurement light that are through the combining optical system; and
a detection apparatus that detects, through the irradiation optical system and the combining optical system, a second measurement light that is generated from the object due to the first measurement light with which the object is irradiated through the irradiation optical system,
the object that is processed by the processing light is irradiated with the first measurement light.

### [Supplementary Note 140]

The processing apparatus according to Supplementary Note 139 including a determination apparatus that performs a determination of the processed object on the basis of an output from the detection apparatus.

### [Supplementary Note 141]

The processing apparatus according to Supplementary Note 139 or 140 including an irradiation position change optical system to which the processing light and the first measurement light enter and which changes an irradiation position of the processing light on the object and an irradiation position of the first measurement light on the object,
the irradiation position is changed so that an uninspected part of the object is irradiated with the processed light and then the uninspected part of the object is irradiated with the measurement light.

### [Supplementary Note 142]

A processing apparatus that processes an object by irradiating the object with a processing light from a processing light source,
the processing apparatus including:
a combining optical system that combines an optical path of the processing light from the processing light source and an optical path of a first measurement light from a measurement light source;
an irradiation optical system that irradiates the object with the processing light and the first measurement light that are through the combining optical system; and
a detection apparatus that detects, through the irradiation optical system and the combining optical system, a second measurement light that is generated from the object due to the first measurement light with which the object is irradiated through the irradiation optical system,
the object that is already irradiated with the first measurement light is irradiated with the processing light.

### [Supplementary Note 143]

The processing apparatus according to Supplementary Note 142 including a determination apparatus that performs a determination of the un-processed object on the basis of an output from the detection apparatus.

### [Supplementary Note 144]

The processing apparatus according to Supplementary Note 142 or 143 including an irradiation position change optical system to which the processing light and the first measurement light enter and which changes an irradiation position of the processing light on the object and an irradiation position of the first measurement light on the object,
the irradiation position is changed so that an uninspected part of the object is irradiated with the first measurement light and then the uninspected part of the object is irradiated with the processing light.

### [Supplementary Note 145]

A system that measures an object by a measurement light,
the system including:
   a movable member a relative positional relationship of which is changeable relative to a part of the obj ect; and
   a measurement apparatus that irradiates the object with a first measurement light, that optically receives a second measurement light generated from the object due to the first measurement light, and that measures a position of the object on the basis of an optical received result of the second measurement light;
   a connection apparatus that connects the movable member and the measurement apparatus so that a relative positional relationship between the movable member and the measurement apparatus is changeable,
the connection apparatus including:
   a driving member that moves at least one of the movable member and the measurement apparatus; and
   a buffer member that connects the movable member and the measurement apparatus.

### [Supplementary Note 146]

The system according to Supplementary Note 145 further including a processing apparatus that is connected to the movable member through the connection apparatus and that processes the object by irradiating the object with a processing light from a processing light source.

### [Supplementary Note 147]

A processing apparatus that processes an object by irradiating the object with a processing light from a processing light source,
the processing apparatus including:
a combining optical system that combines an optical path of the processing light from the processing light source and an optical path of a first measurement light from a measurement light source;
an irradiation optical system that irradiates the object with the processing light and the first measurement light that are through the combining optical system;
a position change apparatus that changes a relative position between the irradiation optical system and the object; and
a detection apparatus that detects, through the irradiation optical system and the combining optical system, a scattering light that is generated from the object due to the first measurement light with which the object is irradiated through the irradiation optical system.

The feature of each embodiment described above is allowed to be combined appropriately. A part of the feature of each embodiment described above may not be used. The feature of each embodiment described above may be allowed to be replaced by the feature of other embodiment, if needed. Moreover, the disclosures of all publications and United States patents that are cited in each embodiment described above are incorporated in the disclosures of the present application by reference if it is legally permitted.

The present invention is allowed to be changed, if desired, without departing from the essence or spirit of the invention which can be read from the claims and the entire specification, and a processing apparatus, a processing member, a system, a robot system and a measuring apparatus each of which involves such changes, are also intended to be within the technical scope of the present invention.

### Description of Reference Codes

- 1: processing apparatus
- 11: processing head
- 111: processing light source
- 112: processing optical system
- 113: measurement light source
- 114: measurement optical system
- 115: combining optical system
- 116: common optical system
- 12: head driving system
- 5: control apparatus
- EL: processing light
- ML: measurement light
- SYS: processing system

## Claims

1. A processing apparatus that processes an object by irradiating the object with a processing light from a processing light source,
the processing apparatus comprising:
a combining optical system that combines an optical path of the processing light from the processing light source and an optical path of a first measurement light from a measurement light source;
an irradiation optical system that irradiates the object with the processing light and the first measurement light that are through the combining optical system;
a position change apparatus that changes a position of the irradiation optical system relative to the obj ect;
an imaging apparatus a position of which is changed together with the irradiation optical system and which captures an image of the object; and
a detection apparatus that detects, through the irradiation optical system and the combining optical system, a second measurement light that is generated from the object due to the first measurement light with which the object is irradiated through the irradiation optical system.

2. The processing apparatus according to claim 1 further comprising a control apparatus that controls, on the basis of an captured result by the imaging apparatus, the position change apparatus to change the position of the irradiation optical system.

3. The processing apparatus according to claim 2, wherein
the position change apparatus includes:
a first position change apparatus a relative positional relationship of which is changeable relative to a part of the object; and
a second position change apparatus that is configured to change a relative positional relationship between the first position change apparatus and the irradiation optical system.

4. The processing apparatus according to claim 3, wherein
the second position change apparatus connects the first position change apparatus and the irradiation optical system.

5. The processing apparatus according to claim 4, wherein
the second position change apparatus includes:
a driving member that moves at least one of the first position change apparatus and the irradiation optical system; and
a buffer member that connects the first position change apparatus and the irradiation optical system.

6. The processing apparatus according to any one of claims 3 to 5, wherein
the control apparatus controls the second position change apparatus to change the position of the irradiation optical system.

7. The processing apparatus according to any one of claims 3 to 6, wherein
the control apparatus controls the first position change apparatus to change the position of the irradiation optical system.

8. The processing apparatus according to claim 7, wherein
the control apparatus:
controls the second position change apparatus on the basis of the captured result by the imaging apparatus, and
controls the first position change apparatus on the basis of a detected result by the detection apparatus.

9. The processing apparatus according to any one of claims 1 to 8 further comprising an irradiation position change optical system to which the processing light and the measurement light enter through the combining optical system and which changes an irradiation position of the processing light on the object and an irradiation position of the measurement light on the obj ect.

10. The processing apparatus according to claim 9 further comprising a control apparatus that controls, on the basis of an captured result by the imaging apparatus, the irradiation position change optical system to change the irradiation position of the processing light on the object and the irradiation position of the measurement light on the object.

11. A processing apparatus that processes an object by irradiating the object with a processing light from a processing light source,
the processing apparatus comprising:
an irradiation optical system that irradiates the object with the processing light;
a position change apparatus that changes a relative position between the object and a processing head including at least a part of the irradiation optical system; and
a position measurement apparatus that irradiates the processing head with a first measurement light including a pulsed light, that optically receives a second measurement light generated from the processing head due to the first measurement light, and that measures a position of the processing head on the basis of an optical received result of the second measurement light.

12. The processing apparatus according to claim 11, wherein
the position measurement apparatus irradiates the object with a third measurement light including a pulsed light, optically receives a fourth measurement light generated from the object due to the third measurement light, and that measures a position of the object on the basis of an optical received result of the fourth measurement light.

13. The processing apparatus according to claim 12, wherein
the position measurement apparatus includes:
a beam splitter that divides the first and third measurement lights from a measurement light source;
a reference mirror that returns, as a first and second reference lights, the first and third measurement lights divided by the beam splitter toward the beam splitter; and
a detection apparatus that detects an interfering light generated by an interference between the first and second reference lights through the beam splitter and the second and fourth measurement lights through the beam splitter.

14. The processing apparatus according to any one of claims 11 to 13, wherein
the position measurement apparatus irradiates an index on the processing head with the first measurement light.

15. The processing apparatus according to any one of claims 11 to 14, wherein
the position measurement apparatus irradiates the processing head with the first measurement light in at least a part of a period in which the object is irradiated with the processing light.

16. The processing apparatus according to any one of claims 11 to 15, wherein
the position measurement apparatus irradiates the processing head with the first measurement light in a period that is different from the period in which the object is irradiated with the processing light.

17. A processing apparatus that processes an object by irradiating the object with a processing light from a processing light source,
the processing apparatus comprising:
a combining optical system that combines an optical path of the processing light from the processing light source and an optical path of a measurement light from a measurement light source;
an irradiation optical system that irradiates the object with the processing light and the measurement light that are through the combining optical system; and
an irradiation position change optical system that is disposed at an incident side of the irradiation optical system and that changes an irradiation position of the processing light on the object and an irradiation position of the measurement light on the object,
the irradiation position change optical system changing a positional relationship between the irradiation position of the processing light and the irradiation position of the measurement light.

18. The processing apparatus according to claim 17 comprising:
a division member that divides the measurement lights from the measurement light source to generate a reference light;
a reference reflection member that reflects the reference light from the division member to the division member; and
a light reception member that optically receives an interfering light generated by an interference between the reference light and a light that is generated by the measurement light from the irradiation optical system and that passes through the irradiation optical system and the combining optical system.

19. The processing apparatus according to claim 17 or 18, wherein
the irradiation position change optical system is disposed between the combining optical system and the irradiation optical system.

20. The processing apparatus according to any one of claims 17 to 19, wherein
at least a part of a scattering light generated from the object due to the irradiation of the measurement light to the object enters the irradiation optical system.

21. The processing apparatus according to any one of claims 17 to 20, wherein
the measurement light from the irradiation optical system obliquely enters a surface of the object.

22. The processing apparatus according to any one of claims 17 to 21, wherein
the irradiation position change optical system includes:
a first irradiation position change optical system that is disposed between the combining optical system and the irradiation optical system; and
a second irradiation position change optical system that is disposed on an optical path at an opposite side of the irradiation optical system viewed from the combining optical system.

23. The processing apparatus according to claim 22, wherein
the second irradiation position change optical system is disposed between the combining optical system and the processing light source.

24. The processing apparatus according to claim 23, wherein
the second irradiation position change optical system is disposed between the combining optical system and the measurement light source.

25. A processing apparatus that processes an object by irradiating the object with a processing light from a processing light source,
the processing apparatus comprising:
a combining optical system that combines an optical path of the processing light from the processing light source and an optical path of a measurement light from a measurement light source;
an irradiation optical system that irradiates the object with the processing light and the measurement light that are through the combining optical system;
an irradiation position change optical system to which the processing light and the measurement light enter and that changes an irradiation position of the processing light on the object and an irradiation position of the measurement light on the object; and
a control apparatus that controls the irradiation position change optical system so as to change a positional relationship between the irradiation position of the processing light and the irradiation position of the measurement light or that controls the irradiation position change optical system so as to change the irradiation position of the processing light and the irradiation position of the measurement light without changing the positional relationship between the irradiation position of the processing light and the irradiation position of the measurement light.

26. A system that measures an object by a measurement light,
the system comprising:
a measurement apparatus that irradiates the object with a first measurement light, that optically receives a second measurement light generated from the object due to the first measurement light, and that measures a position of the object on the basis of an optical received result of the second measurement light;
a position change apparatus that is connected to the measurement apparatus and that changes the position of the measurement apparatus relative to the object; and
an end effector that is attached to the measurement apparatus.

27. The system according to claim 26, wherein
the position change apparatus includes:
a movable member a relative positional relationship of which is changeable relative to a part of the object; and
a connection apparatus that connects the movable member and the measurement apparatus so that a relative positional relationship between the movable member and the measurement apparatus is changeable.

28. The system according to claim 27, wherein
the connection apparatus includes:
a driving member that moves at least one of the movable member and the measurement apparatus; and
a buffer member that connects the movable member and the measurement apparatus.

29. A processing apparatus that processes an object by irradiating the object with a processing light from a processing light source,
the processing apparatus comprising:
a combining optical system that combines an optical path of the processing light from the processing light source and an optical path of a measurement light including a pulsed light;
an irradiation optical system that irradiates the object with the processing light and the measurement light that are through the combining optical system;
a first irradiation position change optical system that changes an irradiation position of the processing light on the object; and
a second irradiation position change optical system that changes an irradiation position of the measurement light on the object,
the processing light through the first irradiation position change optical system and the measurement light through the second irradiation position change optical system entering the irradiation optical system.

30. The processing apparatus according to claim 29, wherein
the first irradiation position change optical system changes the irradiation position of the processing light on the object independently from the irradiation position of the measurement light on the object.

31. The processing apparatus according to claim 29 or 30, wherein
the second irradiation position change optical system changes the irradiation position of the measurement light on the object independently from the irradiation position of the processing light on the object.

32. A processing apparatus that processes an object by irradiating the object with a processing light from a processing light source,
the processing apparatus comprising:
a combining optical system that combines an optical path of the processing light from the processing light source and an optical path of a first measurement light from a measurement light source;
an irradiation optical system that irradiates the object with the processing light and the first measurement light that are through the combining optical system; and
a detection apparatus that detects, through the irradiation optical system and the combining optical system, a second measurement light that is generated from the object due to the first measurement light with which the object is irradiated through the irradiation optical system,
the object that is processed by the processing light is irradiated with the first measurement light.

33. The processing apparatus according to claim 32 comprising a determination apparatus that performs a determination of the processed object on the basis of an output from the detection apparatus.

34. The processing apparatus according to claim 32 or 33 comprising an irradiation position change optical system to which the processing light and the first measurement light enter and which changes an irradiation position of the processing light on the object and an irradiation position of the first measurement light on the object,
the irradiation position is changed so that an uninspected part of the object is irradiated with the processed light and then the uninspected part of the object is irradiated with the measurement light.

35. A processing apparatus that processes an object by irradiating the object with a processing light from a processing light source,
the processing apparatus comprising:
a combining optical system that combines an optical path of the processing light from the processing light source and an optical path of a first measurement light from a measurement light source;
an irradiation optical system that irradiates the object with the processing light and the first measurement light that are through the combining optical system; and
a detection apparatus that detects, through the irradiation optical system and the combining optical system, a second measurement light that is generated from the object due to the first measurement light with which the object is irradiated through the irradiation optical system,
the object that is already irradiated with the first measurement light is irradiated with the processing light.

36. The processing apparatus according to claim 35 comprising a determination apparatus that performs a determination of the un-processed object on the basis of an output from the detection apparatus.

37. The processing apparatus according to claim 35 or 36 comprising an irradiation position change optical system to which the processing light and the first measurement light enter and which changes an irradiation position of the processing light on the object and an irradiation position of the first measurement light on the object,
the irradiation position is changed so that an uninspected part of the object is irradiated with the first measurement light and then the uninspected part of the object is irradiated with the processing light.

38. A system that measures an object by a measurement light,
the system comprising:
a movable member a relative positional relationship of which is changeable relative to a part of the obj ect; and
a measurement apparatus that irradiates the object with a first measurement light, that optically receives a second measurement light generated from the object due to the first measurement light, and that measures a position of the object on the basis of an optical received result of the second measurement light;
a connection apparatus that connects the movable member and the measurement apparatus so that a relative positional relationship between the movable member and the measurement apparatus is changeable,
the connection apparatus including:
a driving member that moves at least one of the movable member and the measurement apparatus; and
a buffer member that connects the movable member and the measurement apparatus.

39. The system according to claim 38 further comprising a processing apparatus that is connected to the movable member through the connection apparatus and that processes the object by irradiating the object with a processing light from a processing light source.

40. A processing apparatus that processes an object by irradiating the object with a processing light from a processing light source,
the processing apparatus comprising:
a combining optical system that combines an optical path of the processing light from the processing light source and an optical path of a first measurement light from a measurement light source;
an irradiation optical system that irradiates the object with the processing light and the first measurement light that are through the combining optical system;
a position change apparatus that changes a relative position between the irradiation optical system and the object; and
a detection apparatus that detects, through the irradiation optical system and the combining optical system, a scattering light that is generated from the object due to the first measurement light with which the object is irradiated through the irradiation optical system.
